# EUROPEAN PATENT APPLICATION

(11) **EP 2 959 772 A2**
(43) Date of publication of application: **30.12.2015**
(21) Application number: 15178388.3
(22) Date of filing: 04.11.2014
(51) Int. Cl.: A01K 31/00, A01K 31/22, A01K 31/16

(54) **AVIARY**

(30) Priority: 04.11.2013 US 201314071160; 14.02.2014 US 201414181379; 14.02.2014 US 201414181463; 18.03.2014 US 201414217548; 02.11.2014 US 201414530801; 02.11.2014 US 201414530800; 02.11.2014 US 201414530803; 02.11.2014 US 201414530807; 02.11.2014 US 201414530808
(62) Divisional of application: 14191765.8
(71) Applicant: Rose Acre Farms, Inc., Seymour, IN 47274-3850 (US)
(72) Inventor: RUST, Marcus D., Remington, IN Indiana 47977 (US); HURD, David, Rensselaer, IN Indiana 47978 (US); DART, Joseph M., West Lafayette, IN Indiana 47906 (US)
(74) Representative: Johnson, Yvonne Catherine

(57) **Abstract**

The present invention relates to an aviary (10) comprising a cage tower (18), a nesting area (22) positioned in the cage tower, a belt (36) positioned below the nesting area and a scratching floor (38) extending from the cage tower adjacent to the belt. The present invention further relates to an aviary (10) including an aviary cage (18), having a first side and a second side, comprising at least one scratching floor extending from at least one side of the aviary cage.

## Description

### CROSS-REFERENCE TO RELATED APPLICATIONS

The present application claims priority to U.S. Patent Application Serial No. 14/071160, filed November 4, 2013, and having the title "AVIARY CAGE WITH EGG AND MANURE REMOVAL SYSTEM AND METHOD FOR CONSTRUCTING THE SAME"; U.S. Patent Application Serial No. 14/181379, filed February 14, 2014, and having the title "AVIARY CAGE"; U.S. Patent Application Serial No. 14/181463, filed February 14, 2014, and having the title "CAGE-FREE AVIARY"; U.S. Patent Application Serial No. 14/217548, filed March 18, 2014, and having the title "AVIARY CAGE WITH MANURE REMOVAL SYSTEM AND METHOD FOR CONSTRUCTING THE SAME"; U.S. Patent Application Serial No. 14/530800, filed November 2, 2014, and having the title "AVIARY VENTILATION SYSTEM AND METHOD"; U.S. Patent Application Serial No. 14/530808, filed November 2, 2014, and having the title "AVIARY CAGE WITH ADJUSTABLE BALCONY"; U.S. Patent Application Serial No. 14/530801, filed November 2, 2014, and having the title "AVIARY BUILDING CONSTRUCTION SYSTEM AND METHOD"; U.S. Patent Application Serial No. 14/530803, filed November 2, 2014, and having the title "EGG SAVING PERCH AND METHOD"; U.S. Patent Application Serial No. 14/530807, filed November 2, 2014, and having the title "AVIARY WALKWAY AND VENTILATION SYSTEM AND METHOD OF CIRCULATING AIR IN AN AVIARY"; each of which is incorporated herein in its entirety.

### TECHNICAL FIELD OF THE DISCLOSED EMBODIMENTS

The embodiments herein generally relate to aviaries and, more particularly, to various systems and methods for an aviary.

### BACKGROUND OF THE DISCLOSED EMBODIMENTS

Aviaries are frequently used to house hens for egg production and include aviary cages therein. Generally, the aviary cage includes nesting areas where eggs are laid. The eggs are then carried from the nesting area to a collection area by an egg conveyor that is positioned adjacent the nesting area. Recently, the need to provide the hens with an area to walk around and peck and scratch has increased dramatically as more farms are producing "cage free" product. "Cage free" indicates that the hens are able to move through a much larger space than is available in conventional battery cages.

Unfortunately, providing a cage free environment requires a substantial amount of space within the aviary. In particular, a cage free environment is defined by the amount of cubic inches of space within the aviary that is available to each hen. Cage free environments therefore frequently house fewer birds than conventional aviary battery cage houses with similar footprints. For example, some aviaries have a reduced number of cage towers to accommodate the cubic inch requirements for a cage free environment. Limiting the number of hens that may be housed in an aviary results in lost profits, increased labor requirements, increased maintenance requirements, and/or increased spending for additional cages.

Along with the benefits of being cage free, providing open spaces for the hens also means that the hens are able to defecate in more areas. Hens may also die in the open spaces. Accordingly, it has become difficult to keep some aviaries clean from manure and deceased fowl. This has resulted in increased harmful ammonia contamination within some aviaries. It has also increased the requirements for manual cage cleaning. Some cages utilize belts to carry manure from the cage to a collection area. However, the belts are only capable of receiving manure that is disposed of in the general area of the belt. Because cage free aviaries frequently include vast amounts of open space, not all of the manure within the aviary and the aviary cage can be collected by the belt.

Additionally, the increased open space leads to the likelihood of some eggs being laid outside of the nesting area. These eggs remain unattended until an individual is able to enter the aviary or cage and remove the eggs. As such, many eggs are lost. Moreover, the eggs that are salvaged from the open spaces of the cage may have become contaminated with bacteria due to having been resting in manure for several days. Such eggs may not be sold for human consumption, which results in lower retail value for the producer.

Moreover, aviaries include at least one fan to circulate air within the aviary. Often a vent is positioned at a front of the aviary to permit air to enter the aviary. A fan may be positioned at a back of the aviary to draw the air through the aviary. This form of aviary ventilation is referred to as tunnel ventilation. The air drawn through the aviary cools the aviary, assists in the drying of manure in the aviary, and removes harmful gases. Therefore, depending on the season, tunnel ventilation can be advantageous (when the weather is warm) or disadvantageous (when the air outside is cooler than is healthy for the birds in the aviary).

Unfortunately, tunnel ventilation is not recommended for use during cooler months. If cold air is drawn into the aviary and directly contacts hens, the hens become stressed. Stressed hens tend to cluster together for warmth, and this can result in dangerous conditions due to overcrowding. If tunnel ventilation is not operating and the aviary is sealed to outside airflow, gases dangerous to poultry health such as ammonia can build up and create additional stress for the birds.

Traditional aviary design for efficient egg production involves the use of battery cages in which identical cages are arranged in rows and columns and connected together. Each individual cage contains several birds, and the amount of space per bird is low. Birds housed in battery cages do not have enough space to fly or move very far, so when those birds are introduced into a "cage free" environment for the first time, they must adjust their leg and wing muscles to successfully negotiate the new environment. "Cage free" indicates that the hens are able to move through a much larger space than is available in conventional battery cages.

A need remains for a ventilation system that can be used in cooler months without stressing poultry in the aviary. A need also exists for a walkway system that helps train birds familiar with the traditional battery cage environment to adjust to the cage free environment and that facilitates airflow in an aviary by efficiently circulating warm air through the aviary to reduce hot spots and cold spots while also improving manure drying in the aviary.

Additionally, the cage towers are enclosed by the building to provide shelter for the hens. This shelter prevents the hens from wandering into the wild; protects the hens from animals outside the housing; protects the hens from dangerous weather, such as storms, excessive heat, excessive cold, and the like; and, in the case of laying hens, provides facilities for automated egg collection. Accordingly, it is important that the building be constructed safely to withstand the weather and keep the resident birds safe.

Typically, an aviary is constructed by first pouring a concrete foundation. The building is then constructed and secured to this foundation by building walls and securing them to the concrete. A roof is then constructed and secured to the walls. After construction of the building, the cage towers are constructed within the housing. Unfortunately, this method of constructing the aviary is slow and costly because the building requires its own support framework separate from the framework of the cage towers. A need remains for a system and method for constructing an aviary that permits speedy construction and reduces the building materials required, which speed and reduced building material requirements reduce the cost to build and maintain the aviary.

Some aviaries include cage towers having perches extending therefrom. The perches provide additional space for hens to roost and may meet the requirements for the aviary to be considered cage free. Generally, the perches are positioned near a nesting area where the hens lay eggs. An egg collector may be positioned nearby to collect the eggs that are laid by the hens in the nesting area. A cover may be positioned over the egg collector to prevent the hens from stepping on any eggs gathered in the egg collector. Unfortunately, many eggs laid while the hens are roosting on the cover or the perch fall from the cage tower and crack on the ground below. As well, manure may accumulate on the cover or balcony. A fixed cover or balcony does not selectively direct manure to the nesting area or to the floor.

A need remains for an aviary that captures eggs laid on perches and/or egg collector covers. A need also remains for an aviary with one or more cage towers having one or more covers or balconies that are selectively adjustable to direct eggs and/or manure either away from the nesting area or toward the nesting area.

### SUMMARY OF THE DISCLOSED EMBODIMENTS

In one embodiment, an aviary cage is provided having a cage tower. The cage tower includes a nesting area positioned in the cage tower and a belt extending below the nesting area. A scratching floor extends from the cage tower and is oriented with respect to the belt such that a deposit on the scratching floor is directed back to the belt. The belt is configured to transport manure. The belt is configured to capture and transport eggs laid outside the nesting area. The belt is further configured to remove dead animals from the aviary cage.

In one embodiment, an aviary cage is provided. The aviary cage includes a nesting area and a belt extending below the nesting area. A scratching floor is oriented with respect to the belt such that a deposit on the scratching floor is directed back to the belt. The belt is configured to capture manure. The belt is configured to capture eggs laid outside the nesting area. The belt is further configured to remove dead animals from the aviary cage.

In one embodiment, a method of constructing an aviary cage for manure, egg, and animal removal is provided. The method includes positioning a belt below a nesting area. A scratching floor is oriented with respect to the belt such that a deposit on the scratching floor is directed back to the belt. The belt is configured to capture eggs laid outside the nesting area. The belt is further configured to remove dead animals from the aviary cage.

In one embodiment, an aviary is provided having a floor and a first aviary cage including a first outside surface enclosing a first inside area. The aviary further comprises a second aviary cage similar to the first aviary cage and including a second outside surface enclosing a second inside area. An aisle extends between the first aviary cage and the second aviary cage. A first perch extends from the first outside surface of the first aviary cage and into the aisle at a first vertical distance from the floor. A second perch extends from the second outside surface of the second aviary cage and into the aisle at a second vertical distance from the floor. The first and second vertical distances from the floor are not equal.

In one embodiment, an aviary is provided having a floor and a first aviary cage including a first outside surface enclosing a first inside area. The aviary further comprises a second aviary cage similar to the first aviary cage and including a second outside surface enclosing a second inside area. An aisle extends between the first aviary cage and the second aviary cage. A first perch extends from the first outside surface of the first aviary cage and into the aisle at a first vertical distance from the floor. A second perch extends from the second outside surface of the second aviary cage and into the aisle at a second vertical distance from the floor. The first and second vertical distances from the floor are not equal and define a third vertical distance that enables an animal to hop between the first perch and the second perch.

In one embodiment, a method of constructing an aviary is provided. The method includes positioning a first aviary cage including a first outside surface enclosing a first inside area adjacent to a second aviary cage similar to the first aviary cage and including a second outside surface enclosing a second inside area, wherein both the first aviary cage and the second aviary cage are positioned over a floor. The method also includes extending an aisle between the first aviary cage and the second aviary cage. The method also includes extending a first perch from the first outside surface of the first aviary cage and into the aisle at a first vertical distance from the floor. The method also includes extending a second perch from the second outside surface of the second aviary cage and into the aisle at a second vertical distance from the floor, wherein the first and second distances are not equal. The method also includes positioning the first and second vertical distances to define a third vertical distance that enables an animal to hop between the first perch and the second perch.

In one embodiment, an aviary is provided having a floor and a first aviary cage including a first outside surface enclosing a first inside area. The aviary further comprises a second aviary cage substantially similar to the first aviary cage and including a second outside surface enclosing a second inside area. The second aviary cage is positioned at a height greater than a height at which the first aviary cage is positioned. An aisle extends between the first aviary cage and the second aviary cage. A first perch extends from the first outside surface of the first aviary cage and into the aisle at a first vertical distance from the floor. A second perch extends from the second outside surface of the second aviary cage and into the aisle at a second vertical distance from the floor. The first and second vertical distances from the floor are not equal.

In one embodiment, an aviary is provided having a floor and a first aviary cage including a first outside surface enclosing a first inside area. The aviary further comprises a second aviary cage substantially similar to the first aviary cage and including a second outside surface enclosing a second inside area. The second aviary cage is positioned at a height greater than a height at which the first aviary cage is positioned. An aisle extends between the first aviary cage and the second aviary cage. A first perch extends from the first outside surface of the first aviary cage and into the aisle at a first vertical distance from the floor. A second perch extends from the second outside surface of the second aviary cage and into the aisle at a second vertical distance from the floor. The first and second vertical distances from the floor are not equal and define a third vertical distance that enables an animal to hop between the first perch and the second perch.

In one embodiment, a method of constructing an aviary is provided. The method includes positioning a first aviary cage including a first outside surface enclosing a first inside area adjacent to a second aviary cage substantially similar to the first aviary cage and including a second outside surface enclosing a second inside area, wherein both the first aviary cage and the second aviary cage are positioned over a floor. The second aviary cage is positioned at a height greater than a height at which the first aviary cage is positioned. The method also includes extending an aisle between the first aviary cage and the second aviary cage. The method also includes extending a first perch from the first outside surface of the first aviary cage and into the aisle at a first vertical distance from the floor. The method also includes extending a second perch from the second outside surface of the second aviary cage and into the aisle at a second vertical distance from the floor, wherein the first and second distances are not equal. The method also includes positioning the first and second vertical distances to define a third vertical distance that enables an animal to hop between the first perch and the second perch.

In one embodiment, an aviary is provided including an aviary cage having a first side, a second side, and a nesting area. The nesting area is positioned between the first side and the second side. A belt extends beneath the nesting area. A grate having a first end and a second end is positioned over the belt. The first end of the grate extends to the first side of the aviary cage, and the second end of the grate extends to the second side of the aviary cage. A first egg conveyor is positioned adjacent the first end of the grate. A second egg conveyor is positioned adjacent the second end of the grate.

In one embodiment, an aviary is provided including an aviary cage having a first side, a second side, and a nesting area. The nesting area is positioned between the first side and the second side. A belt extends beneath the nesting area. A grate having a first end and a second end is positioned over the belt. The first end of the grate extends to the first side of the aviary cage, and the second end of the grate extends to the second side of the aviary cage. A first egg conveyor is positioned adjacent the first end of the grate. A second egg conveyor is positioned adjacent the second end of the grate. A first portion of the grate is angled downward toward the first egg conveyor. A second portion of the grate is angled downward toward the second egg conveyor. A scratching floor extends from the aviary cage adjacent to the grate. The scratching floor is sloped toward the grate to facilitate movement of an egg on the scratching floor to the grate.

In one embodiment, a method of forming an aviary including an aviary cage having a first side, a second side, and a nesting area is provided. The method includes positioning the nesting area between the first side and the second side and extending a belt beneath the nesting area. The method further includes positioning a grate having a first end and a second end over the belt so that the first end of the grate extends to the first side of the aviary cage, and the second end of the grate extends to the second side of the aviary cage. The method further includes positioning a first egg conveyor adjacent the first end of the grate and positioning a second egg conveyor adjacent the second end of the grate.

In an embodiment, a ventilation system for an aviary including at least one exterior wall disposed between a floor and a roof is provided. The ventilation system includes a first fan disposed in one of the at least one exterior walls. A plenum is disposed on one of the at least one exterior walls. A second fan is disposed in flow communication with the plenum.

In an embodiment, a method of constructing a ventilation system in an aviary is provided, which aviary includes at least one exterior wall disposed between a floor and a roof, a first fan, a plenum, and a second fan. The method includes disposing the first fan in one of the at least one exterior walls. The method also includes disposing the plenum on one of the at least one exterior walls. The method also includes disposing the second fan in flow communication with the plenum.

In an embodiment, a method of operating a ventilation system in an aviary is provided, wherein the aviary includes a first fan, a second fan, a back wall, a front wall, a plenum having a top opening and a bottom opening, and a cage tower having a grate, a belt, and a scratching floor. The method includes disposing the first fan in a back wall. The method also includes disposing the second fan in flow communication with the plenum. The method also includes drawing air from the top opening of the plenum to the bottom opening of the plenum through the second fan. The method also include discharging the air toward the front wall. The method also includes at least one of drawing the air back through the second fan through the plenum and discharging the air from the aviary through the first fan.

In one embodiment, a method of building an aviary is provided. The method includes providing a cage tower including a plurality of support members, a frame, at least one wall, and a roof The method includes attaching the frame to the plurality of support members so that the frame is supported by and affixed to the plurality of support members. The method also includes attaching at least one of the at least one wall and the roof to the frame.

In one embodiment, a method of building an aviary is provided. The method includes providing a floor, at least one wall, a roof, a roof frame, at least one wall frame, and a cage tower including a plurality of support members. The method includes disposing the cage tower on the floor. The method includes attaching the roof frame to the plurality of support members so that the roof frame is supported by and affixed to the plurality of support members. The method further includes attaching the at least one wall frame to the roof frame. The cage tower is at least partially surrounded by the attached the roof frame and the at least one wall frame. Additionally, the method includes attaching the at least one wall to the at least one wall frame and attaching the roof to the roof frame.

In one embodiment, a method of building an aviary is provided. The method includes providing a floor, at least one wall, a roof, a roof frame, at least one wall frame, and a cage tower including a plurality of support members. The method includes disposing the cage tower on the floor. The method includes attaching the at least one wall frame to the plurality of support members so that the at least one wall frame is supported by and affixed to the plurality of support members. The method includes attaching the roof frame to the plurality of support members so that the roof frame is supported by and affixed to the plurality of support members. The method further includes attaching the roof frame to the at least one wall frame. The cage tower is at least partially surrounded with the roof frame and the at least one wall frame. Additionally, the method includes attaching the at least one wall to the at least one wall frame and attaching the roof to the roof frame.

In one embodiment, an aviary is provided that includes a floor and a cage tower disposed on the floor. The cage tower includes a plurality of support members. A roof frame is supported by and attached to the plurality of support members. At least one wall frame is attached to the plurality of support members. The cage tower is at least partially surrounded by the roof frame and the at least one wall frame. A wall is attached to the at least one wall frame and a roof is attached to the roof frame.

In one embodiment, an aviary is provided that includes a floor and a cage tower disposed on the floor. The cage tower includes a plurality of support members. At least one wall frame is supported by and attached to the plurality of support members. A roof frame is supported by and attached to the plurality of support members. The roof frame is attached to the at least one wall frame. The cage tower is at least partially surrounded by the roof frame and the at least one wall frame. A wall is attached to the at least one wall frame and a roof is attached to the roof frame.

In one embodiment, an aviary is provided, wherein the aviary includes a cage tower including an outside surface. An egg collector extends from the outside surface of the cage tower. A cover is positioned over the egg collector. A perch is positioned adjacent to the egg collector so that a gap is formed between the perch and the cover. The gap is sized to prevent eggs from rolling between the perch and the cover.

In one embodiment, a method of constructing an aviary is provided. The method includes positioning a cage tower including an outside surface within the aviary cage. An egg collector is extended from the outside surface of the cage tower. A cover is positioned over the egg collector. A perch is positioned adjacent to the egg collector so that a gap is formed between the perch and the cover. The gap is sized to prevent eggs from rolling between the perch and the cover.

In one embodiment, an aviary is provided that includes a floor, a roof, at least one cage tower, and at least one wall having a plenum to draw air adjacent the roof down the plenum toward the floor. The at least one cage tower is disposed on the floor. The at least one walkway is disposed adjacent the at least one cage tower and configured to facilitate bird access to the at least one cage tower. A fan is disposed in flow communication with the plenum to circulate air in the aviary.

In one embodiment, an aviary is provided that includes a floor and at least one wall having a plenum to draw air toward the floor. At least one cage tower is disposed on the floor. At least one walkway is disposed adjacent the at least one cage tower and configured to facilitate bird access to the at least one cage tower. A fan is disposed in flow communication with the plenum to circulate the air in the aviary.

In one embodiment, a method of circulating air in an aviary is provided. The method includes providing an aviary including at least one wall, a floor, a plenum in the at least one wall of the aviary, and at least one walkway. The method further includes drawing air having a temperature higher than air located outside of the aviary toward the floor through the plenum and drawing air located outside of the aviary through the plenum and into the aviary. The method further includes mixing the higher temperature air and the outside air to create mixed air and circulating the mixed air around the at least one walkway.

In one embodiment, a method of circulating air in an aviary including at least one wall, a plenum disposed on the at least one wall of the aviary, a floor, at least one cage tower, and at least one walkway adjacent the at least one cage tower, is provided. The method includes drawing air having a temperature higher than air located outside of the aviary toward the floor through the plenum. The method further includes drawing air located outside of the aviary through the plenum and into the aviary. The method further includes mixing the higher temperature air and the outside air to create mixed air; and the method further includes circulating the mixed air around the at least one walkway.

In one embodiment, a method of circulating air in an aviary is provided. The method includes providing an aviary having at least one wall, a top space, a floor, a plenum in the at least one wall of the aviary, at least one cage tower, and at least one walkway adjacent the at least one cage tower. The method further includes drawing air from the top space of the aviary toward the floor through the plenum and circulating the air around the at least one walkway.

In one embodiment, an aviary is provided that includes a cage tower and an egg collector. A cover is positioned over the egg collector and includes an inner end and an outer end. A cover adjustment member is coupled to the cover to reversibly raise one of the inner end and the outer end to a position higher than the other of the inner end and the outer end to facilitate movement of a deposit disposed on the cover toward the lower positioned end.

In one embodiment, a method of constructing an adjustable balcony in an aviary, which aviary includes a cage tower, an egg collector, a deposit, and a cover having an inner end and an outer end, is provided comprising positioning the cage tower within the aviary, positioning the egg collector adjacent the cage tower, positioning the cover over the egg collector, disposing the deposit on the cover, and reversibly raising one of the inner end and the outer end to a position higher than the other of the inner end and the outer end to facilitate movement of the deposit toward one of the inner end and the outer end.

In one embodiment, a method of operating an adjustable balcony in an aviary, which aviary includes a cage tower, an egg collector, a cover including an inner end and an outer end, and a deposit, is provided comprising disposing the cage tower in the aviary, disposing the egg collector on the cage tower, disposing the cover above the egg collector, and disposing the deposit on the cover. The method further comprises raising, during a first period of time, one of the inner end and the outer end to a position higher than the other of the inner end and the outer end to facilitate movement of the deposit toward the lower positioned end, and lowering, during a second period of time, the one of the inner end and the outer end to a position lower than the other of the inner end and the outer end to facilitate movement of the deposit away from the higher positioned end.

Other embodiments are also disclosed. In general, unless indicated otherwise or where it would not make sense, all preferred or optional features described herein can be applied to any of the disclosed aspects and embodiments.

### Certain features are set out in the following clauses:

1. An aviary comprising:
   a floor;
   a first aviary cage including a first outside surface;
   a second aviary cage including a second outside surface and positioned adjacent the first aviary cage, wherein the second aviary cage is positioned at a height from the floor greater than a height from the floor of the first aviary cage;
   an aisle extending between the first aviary cage and the second aviary cage;
   a first perch extending from the first outside surface of the first aviary cage and into the aisle at a first vertical distance from the floor; and
   a second perch extending from the second outside surface of the second aviary cage and into the aisle at a second vertical distance from the floor, wherein the first and second vertical distances from the floor are not equal.
2. The aviary of clause 1, wherein the first vertical distance and the second vertical distance define a third vertical distance that enables an animal to hop between the first perch and the second perch.
3. The aviary of clause 1 or clause 2, wherein the aviary further comprises:
   a first egg conveyor extending from the first outside surface of the first aviary cage and into the aisle at a third vertical distance from the floor; and
   a second egg conveyor extending from the second outside surface of the second aviary cage and into the aisle at a fourth vertical distance from the floor;
   wherein the first perch is positioned above the first egg conveyor;
   wherein the second perch is positioned above the second egg conveyor; and further
   wherein the third and fourth vertical distances from the floor are not equal.
4. An aviary comprising:
   a cage tower comprising a nesting area positioned in the cage tower;
   a belt positioned to form a floor of the nesting area; and
   a scratching floor extending from the cage tower adjacent to the belt.
5. The aviary of clause 4, wherein:
   (a) the scratching floor is sloped to facilitate movement of a deposit on the scratching floor to the belt; and/or
   (b) the belt is operative to remove a deposit from at least part of the cage tower; and/or
   (c) the aviary further comprises an egg remover to direct eggs on the belt toward at least one side of the belt.
6. The aviary of clause 4 or clause 5, further comprising:
   a grate having a first end and a second end, said grate being positioned over the belt, the first end of the grate extending to the first side of the cage tower and the second end of the grate extending to the second side of the cage tower;
   a first egg conveyor positioned adjacent the first end of the grate; and
   a second egg conveyor positioned adjacent the second end of the grate.
7. The aviary of clause 6, wherein:
   (a) a first portion of the grate is angled downward toward the first egg conveyor, and a second portion of the grate is angled downward toward the second egg conveyor;
      and/or
   (b) the aviary further comprises a scratching floor extending from the cage tower adjacent to the grate.
8. A ventilation system for an aviary including at least one exterior wall disposed between a floor and a roof, the ventilation system comprising:
   a plenum disposed on one of the at least one exterior walls; and
   a fan disposed in flow communication with the plenum.
9. The ventilation system of clause 8, wherein:
   (a) the aviary further comprises:
      at least one cage tower disposed on the floor;
      at least one walkway disposed adjacent the at least one cage tower configured to facilitate bird access to the at least one cage tower;
      and/or
   (b) the plenum further draws outside air into the aviary;
      and/or
   (c) the plenum is disposed on one of the at least one exterior walls so that a top opening of the plenum is positioned adjacent a top space adjacent the roof, and the bottom opening of the plenum is positioned adjacent a bottom space adjacent the floor.
10. The ventilation system of clause 9, option (c) further comprising:
   at least one solid floor disposed above the bottom space, and
   at least one grated floor disposed above the bottom space, wherein the fan circulates the air in a first direction through the bottom space; and further
   wherein the fan further circulates air in the aviary through the at least one grated floor and further circulates air in the aviary above the at least one solid floor in a second direction opposite the first direction.
11. The ventilation system of clause 8, 9 or 10 further comprising:
   at least one cage tower; and
   at least one scratching floor extending from the at least one cage tower, wherein the plenum is disposed on one of the at least one exterior walls so that a bottom end of the plenum is positioned below the at least one scratching floor; and further
   wherein openings are disposed between the at least one scratching floor and the at least one cage tower to facilitate airflow through the aviary.
12. The ventilation system of clause 11, wherein:
   (a) the aviary further comprises a grate disposed within the at least one cage tower that permits air to pass through the grate when said air is circulating through the at least one cage tower;
      and/or
   (b) the aviary further comprises a belt disposed within the at least one cage tower around which belt air passes when said air is circulating through the at least one cage tower.
13. An aviary comprising:
   a cage tower;
   an egg collector;
   a cover positioned over the egg collector and including an inner end and an outer end; and
   a cover adjustment member coupled to the cover to reversibly raise one of the inner end and the outer end to a higher position than the other of the inner end and the outer end to facilitate movement of a deposit disposed on the cover toward the lower positioned end.
14. The aviary of clause 13, wherein the cover adjustment member includes:
   (a) a pivoting portion coupled to the inner end of the cover to reversibly raise the outer end of the cover to a higher position than the inner end;
      and/or
   (b) a pivoting portion coupled to the outer end of the cover to reversibly raise the inner end of the cover to a higher position than the outer end;
      and/or
   (c) a motor coupled to the cover to raise one of the inner end and the outer end to a higher position than the other of the inner end and the outer end.
15. The aviary of clause 13 or 14, further comprising a perch positioned adjacent to the cover, wherein a gap is formed between the perch and the cover, and further wherein the gap is sized to capture eggs.

### Certain features of a first aspect of the subject matter are set out in the following clauses:

1. An aviary cage comprising: a cage tower comprising: a nesting area positioned in the cage tower;
   a belt positioned to form a floor of the nesting area; and a scratching floor extending from the cage tower adjacent to the belt.
2. The aviary cage of clause 1, wherein the scratching floor extends from the cage tower planar to the belt.
3. The aviary cage of clause 1 or clause 2, wherein the scratching floor comprises a solid floor.
4. The aviary cage of clause 1 or clause 2 or clause 3 wherein the scratching floor is sloped to facilitate movement of a deposit on the scratching floor to the belt.
5. The aviary cage of clause 1 or any of clauses 2-4, wherein the belt is operative to remove a deposit from at least part of the cage tower.
6. The aviary cage of clause 1 or any of clauses 2-5, wherein the belt is configured for animals to walk thereon.
7. The aviary cage of clause 1 or any of clauses 2-6, wherein the belt captures and transports manure and captures and transports eggs laid outside of the nesting area.
8. The aviary cage of clause 1 or any of clauses 2-7, wherein: the nesting area comprises a first nesting area and a second nesting area; and the belt comprises a first belt and a second belt; wherein the first nesting area and the second nesting area are positioned in a stacked configuration in the cage tower; and wherein the first belt is positioned to form a first floor of the first nesting area; and wherein the second belt forms a second floor of the second nesting area.
9. The aviary cage of clause 8, wherein the scratching floor comprises a first scratching floor and a second scratching floor; wherein the first scratching floor extends from the cage tower adjacent the first belt;
   wherein the second scratching floor extends from the cage tower adjacent the second belt; wherein a deposit on the first scratching floor may be directed to the first belt; and wherein a deposit on the second scratching floor may be directed to the second belt.
10. The aviary cage of clause 5 further comprising a gate positioned in relation to the belt to prevent animals from leaving said at least part of the cage tower.
11. The aviary cage of clause 1 or any of clauses 2-10, wherein: the belt comprises a first belt and a second belt; the floor comprises a first floor and a second floor; and wherein said second belt is positioned to form said second floor above the nesting area.
12. An aviary cage comprising: a nesting area; and a belt positioned to form a floor in the aviary cage.
13. The aviary cage of clause 12, further comprising a scratching floor disposed adjacent the belt, wherein the scratching floor extends from the aviary cage in a planar orientation with the belt.
14. The aviary cage of clause 12 or clause 13, wherein the scratching floor is sloped to facilitate movement of deposits from the scratching floor to the belt.
15. The aviary cage of clause 12 or clause 13 or clause 14, wherein the belt removes a deposit from at least part of the aviary cage.
16. The aviary cage of clause 12 or any of clauses 13-15, wherein the belt is configured for animals to walk thereon.
17. The aviary cage of clause 12 or any of clauses 13-16, wherein the belt captures and transports manure and captures and transports eggs laid outside of the nesting area.
18. A method of constructing an aviary for deposit removal, the method comprising: providing an aviary cage having a nesting area therein; and positioning at least one belt to form a floor of said area.
19. The method of clause 18 further comprising: configuring the at least one belt to capture manure; configuring the at least one belt to capture an egg laid outside the nesting area; and configuring the at least one belt to remove a dead animal from the aviary cage.
20. The method of clause 18 or clause 19 further comprising positioning at least one scratching floor adjacent to the at least one belt.
21. The method of clause 18 or clause 19 or clause 20, wherein orienting at least one scratching floor with respect to the at least one belt comprises orienting at least one solid floor with respect to the at least one belt.
22. The method of clause 18 or any of clauses 19-21 further comprising sloping said at least one scratching floor to facilitate movement of a deposit on the at least one scratching floor from the at least one scratching floor to the at least one belt.
23. The method of clause 18 or any of clauses 19-22 further comprising configuring the belt for animals to walk thereon.
24. The method of clause 18 or any of clauses 19-22, wherein: the aviary cage comprises a first aviary cage and a second aviary cage; the nesting area comprises a first nesting area disposed in the first aviary cage and a second nesting area disposed in the second aviary cage; and the at least one belt comprises a first belt and a second belt, the method further comprising: positioning the first aviary cage and the second aviary cage in a stacked configuration; positioning said first belt to form a first floor of said first nesting area; positioning said second belt to form a second floor of said second nesting area; extending a first scratching floor from the first aviary cage adjacent said first belt; extending a second scratching floor from the second aviary cage adjacent said second belt.
25. The method of clause 24 further comprising positioning a gate in relation to the belt to prevent animals from leaving at least part of the aviary cage.

### Certain features of a second aspect of the subject matter are set out in the following clauses:

1. An aviary comprising: a floor; a first aviary cage including a first outside surface; a second aviary cage including a second outside surface and positioned adjacent the first aviary cage; an aisle extending between the first aviary cage and the second aviary cage; a first perch extending from the first outside surface of the first aviary cage and into the aisle at a first vertical distance from the floor; and a second perch extending from the second outside surface of the second aviary cage and into the aisle at a second vertical distance from the floor, wherein the first and second vertical distances from the floor are not equal.
2. The aviary of clause 1 further comprising a plurality of first perches and a plurality of second perches, the plurality of first perches being horizontally offset from one another, the plurality of second perches being horizontally offset from one another.
3. The aviary of clause 1 or clause 2 further comprising a plurality of first perches and a plurality of second perches, the plurality of first perches being vertically offset from one another, the plurality of second perches being vertically offset from one another.
4. The aviary of clause 1 or clause 2 or clause 3, wherein the first vertical distance and the second vertical distance define a third vertical distance that enables an animal to hop between the first perch and the second perch.
5. The aviary of clause 1 or any of clauses 2-4, wherein each of the first aviary cage and the second aviary cage further comprises: a belt; and an egg conveyor.
6. The aviary of clause 5 further comprising: a scratching floor extending between the first aviary cage and the second aviary cage and positioned adjacent the belt of each of the first aviary cage and the second aviary cage; and wherein each of the first perch and the second perch extend from the respective first and second outside surfaces above a respective egg conveyor.
7. The aviary of clause 5 or clause 6, wherein said belt forms at least one floor of the respective aviary cage.
8. The aviary of clause 5 or clause 6 or clause 7, wherein said belt is operative to remove a deposit from at least part of the respective aviary cage.
9. The aviary of clause 5 or clause 6 or clause 7 or clause 8 further comprising an egg remover having at least one brush to direct eggs on the belt toward at least one side of the belt.
10. The aviary of clause 5 or clause 6 or clause 7 or clause 8 or clause 9 further comprising a gate positioned in relation to the belt to prevent animals from leaving the respective aviary cage.
11. The aviary cage of clause 10, wherein each gate further comprises openings operative to enable debris to pass therethrough.
12. The aviary cage of clause 10 or clause 11, wherein each gate comprises a hinge operative to rotate the gate to enable eggs and dead animals to move past the gate.
13. An aviary comprising: a floor; a first aviary cage including a first outside surface; a second aviary cage including a second outside surface, the second aviary cage positioned adjacent the first aviary cage; an aisle extending between the first aviary cage and the second aviary cage; a first perch extending from the first outside surface of the first aviary cage and into the aisle at a first vertical distance from the floor; and a second perch extending from the second outside surface of the second aviary cage and into the aisle at a second vertical distance from the floor, wherein the first and second vertical distances from the floor are not equal and define a third vertical distance that enables an animal to hop between the first perch and the second perch.
14. The aviary of clause 13 further comprising a plurality of first perches and a plurality of second perches, the plurality of first perches being horizontally offset from one another, the plurality of second perches being horizontally offset from one another.
15. The aviary of clause 13 or clause 14 further comprising a plurality of first perches and a plurality of second perches, the plurality of first perches being vertically offset from one another, the plurality of second perches being vertically offset from the plurality of first perches.
16. The aviary of clause 13 or clause 14 or clause 15, wherein each of the first aviary cage and the second aviary cage further comprises: a belt; and an egg conveyor.
17. The aviary of clause 16, further comprising: a scratching floor extending between the first aviary cage and the second aviary cage and positioned adjacent the belt of each of the first aviary cage and the second aviary cage; and wherein each of the first perch and the second perch extend from the respective first and second outside surfaces above a respective egg conveyor.
18. The aviary of clause 16 or clause 17, wherein said belt forms a floor of the respective aviary cage and is operative to remove a deposit from at least part of the respective aviary cage.
19. The aviary of clause 16 or clause 17 or clause 18 further comprising an egg remover having at least one brush to direct an egg on the belt toward a side of the belt.
20. The aviary of clause 16 or clause 17 or clause 18 or clause 19 further comprising at least one gate positioned in relation to the belt to prevent animals from leaving the respective aviary cage.
21. The aviary of clause 20, wherein said at least one gate further comprises: openings operative to enable debris to pass therethrough; and a hinge operative to rotate the gate to enable eggs and dead animals to move past the gate.
22. A method of constructing an aviary comprising: positioning a first aviary cage including a first outside surface adjacent to a second aviary cage including a second outside surface, wherein both the first aviary cage and the second aviary cage are positioned over a floor; extending an aisle between the first aviary cage and the second aviary cage; extending a first perch from the first outside surface of the first aviary cage and into the aisle at a first vertical distance from the floor; extending a second perch from the second outside surface of the second aviary cage and into the aisle at a second vertical distance from the floor, wherein the first vertical distance and the second vertical distance are not equal; and positioning the first and second vertical distances to define a third vertical distance that enables an animal to hop between the first perch and the second perch.
23. The method of clause 22, wherein the aviary includes a plurality of first perches and a plurality of second perches, the method further comprising: offsetting the plurality of first perches vertically from one another; and offsetting the plurality of second perches vertically from the plurality of first perches.
24. The method of clause 22 or clause 23, further comprising: positioning a scratching floor extending between the first aviary cage and the second aviary cage; and forming a floor of each of the first aviary cage and the second aviary cage with a belt configured to remove a deposit from at least part of the respective aviary cage.
25. The method of clause 24 further comprising positioning an egg remover having at least one brush to direct eggs on the belt toward a side of the belt at an end of the belt.
26. The method of clause 24 or clause 25 further comprising positioning at least one gate in relation to at least one of said belts to prevent animals from leaving the respective aviary cage.
27. The method of clause 26 further comprising: providing openings in said at least one gate to enable debris to pass therethrough; and hinging said at least one gate to rotate the gate and enable eggs and dead animals to move past the gate.
28. The method of clause 22 or any of clauses 23-27 further comprising positioning each of the first perch and the second perch above a respective egg conveyor.

### Certain features of a third aspect of the subject matter are set out in the following clauses:

1. An aviary comprising: a floor; a first aviary cage including a first outside surface; a second aviary cage including a second outside surface and positioned adjacent the first aviary cage, wherein the second aviary cage is positioned at a height from the floor greater than a height from the floor of the first aviary cage; an aisle extending between the first aviary cage and the second aviary cage; a first perch extending from the first outside surface of the first aviary cage and into the aisle at a first vertical distance from the floor; and a second perch extending from the second outside surface of the second aviary cage and into the aisle at a second vertical distance from the floor, wherein the first and second vertical distances from the floor are not equal.
2. The aviary of clause 1, wherein the first vertical distance and the second vertical distance define a third vertical distance that enables an animal to hop between the first perch and the second perch.
3. The aviary of clause 1 or clause 2, further comprising: a first egg conveyor extending from the first outside surface of the first aviary cage and into the aisle at a third vertical distance from the floor; and a second egg conveyor extending from the second outside surface of the second aviary cage and into the aisle at a fourth vertical distance from the floor; wherein the first perch is positioned above the first egg conveyor; wherein the second perch is positioned above the second egg conveyor; and further wherein the third and fourth vertical distances from the floor are not equal.
4. The aviary of clause 3, wherein each of the first aviary cage and the second aviary cage further comprises at least one belt.
5. The aviary of clause 4, further comprising a scratching floor extending between the first aviary cage and the second aviary cage and positioned adjacent the at least one belt of each of the first aviary cage and the second aviary cage.
6. The aviary of clause 4 or clause 5, wherein said at least one belt forms at least one floor of the respective aviary cage.
7. The aviary of clause 4 or clause 5 or clause 6, wherein said at least one belt is operative to remove a deposit from at least part of the respective aviary cage.
8. The aviary of clause 4 or any of clauses 5-7 further comprising an egg remover to direct eggs on the belt toward at least one side of the belt.
9. The aviary of clause 4 or any of clauses 5-8 further comprising a gate positioned in relation to the belt to prevent animals from leaving the respective aviary cage.
10. The aviary of clause 9, wherein each gate further comprises openings operative to enable debris to pass therethrough.
11. The aviary of clause 9 or clause 10, wherein each gate comprises a hinge operative to rotate the gate to enable eggs and dead animals to move past the gate.
12. An aviary comprising: a floor; a first aviary cage including a first outside surface; a second aviary cage including a second outside surface, wherein the second aviary cage is positioned adjacent to the first aviary cage and at a height greater than a height of the first aviary cage; an aisle extending between the first aviary cage and the second aviary cage; a first perch extending from the first outside surface of the first aviary cage and into the aisle at a first vertical distance from the floor; and a second perch extending from the second outside surface of the second aviary cage and into the aisle at a second vertical distance from the floor, wherein the first and second vertical distances from the floor are not equal and define a third vertical distance that enables an animal to hop between the first perch and the second perch.
13. The aviary of clause 12, wherein each of the first perch and the second perch is positioned above a respective egg conveyor.
14. The aviary of clause 12 or clause 13, wherein each of the first aviary cage and the second aviary cage further comprises: at least one belt; and a scratching floor extending between the first aviary cage and the second aviary cage and positioned adjacent at least one of said at least one belt of each of the first aviary cage and the second aviary cage.
15. The aviary of clause 14, wherein said at least one belt forms a floor of the respective aviary cage and is operative to remove a deposit from at least part of the respective aviary cage.
16. The aviary of clause 14 or clause 15 further comprising an egg remover to direct eggs on the belt toward a side of the belt.
17. The aviary of clause 14 or clause 15 or clause 16 further comprising a gate positioned in relation to each belt to prevent animals from leaving the respective aviary cage.
18. The aviary of clause 17, wherein each gate further comprises: openings operative to enable debris to pass therethrough; and a hinge operative to rotate the gate to enable eggs and dead animals to pass therethrough.
19. A method of constructing an aviary comprising: positioning a first aviary cage including a first outside surface adjacent to a second aviary cage including a second outside surface, wherein both the first aviary cage and the second aviary cage are positioned over a floor, and wherein the second aviary cage is positioned adjacent to the first aviary cage and at a height greater than a height of the first aviary cage; extending an aisle between the first aviary cage and the second aviary cage; extending a first perch from the first outside surface of the first aviary cage and into the aisle at a first vertical distance from the floor; extending a second perch from the second outside surface of the second aviary cage and into the aisle at a second vertical distance from the floor, wherein the first vertical distance and the second vertical distance are not equal; and positioning the first and second vertical distances to define a third vertical distance that enables an animal to hop between the first perch and the second perch.
20. The method of clause 19, further comprising: providing each of the first aviary cage and the second aviary cage with a belt; providing each of the first aviary cage and the second aviary cage with a scratching floor extending between the first aviary cage and the second aviary cage; and positioning the scratching floor adjacent the belt of each of the first aviary cage and the second aviary cage.
21. The method of clause 20 further comprising forming a floor of each aviary cage with the respective belt to remove a deposit from at least part of the respective aviary cage.
22. The method of clause 20 or clause 21 further comprising positioning an egg remover having at least one brush to direct eggs on the belt toward at least one side of the belt at an end of each belt.
23. The method of clause 20 or clause 21 or clause 22 further comprising positioning a gate in relation to each belt to prevent animals from leaving the respective aviary cage.
24. The method of clause 23 further comprising: providing openings in each gate to enable debris to pass therethrough; and hinging each gate to rotate the gate and enable eggs and dead animals to move past the gate.
25. The method of clause 19 or any of clauses 20-24 further comprising: positioning each of the first perch and the second perch above a respective egg conveyor; providing at least one belt in the first aviary cage; and providing at least one belt in the second aviary cage.

### Certain features of a fourth aspect of the subject matter are set out in the following clauses:

1. An aviary comprising: an aviary cage having a first side, a second side, and a nesting area, said nesting area positioned between the first side and the second side; a belt extending beneath the nesting area; a grate having a first end and a second end, said grate being positioned over the belt, the first end of the grate extending to the first side of the aviary cage and the second end of the grate extending to the second side of the aviary cage; a first egg conveyor positioned adjacent the first end of the grate; and a second egg conveyor positioned adjacent the second end of the grate.
2. The aviary of clause 1, wherein a first portion of the grate is angled downward toward the first egg conveyor, and a second portion of the grate is angled downward toward the second egg conveyor.
3. The aviary of clause 1 or clause 2, wherein the belt captures and transports debris that falls through the grate.
4. The aviary of clause 1 or clause 2 or clause 3 further comprising a scratching floor extending from the aviary cage adjacent to the grate.
5. The aviary of clause 4, wherein the scratching floor is sloped toward the grate to facilitate movement of an egg on the scratching floor to the grate.
6. The aviary of clause 4 or clause 5, wherein the scratching floor comprises a solid floor.
7. The aviary of clause 1 or any of clauses 2-6 further comprising a belt extending above the aviary cage.
8. The aviary of clause 1 or any of clauses 2-7, wherein the aviary cage is a first aviary cage, the aviary further comprising: a second aviary cage positioned adjacent the first aviary cage; an aisle extending between the first aviary cage and the second aviary cage; a first perch extending from the first aviary cage and into the aisle at a first vertical distance from a floor; and a second perch extending from the second aviary cage and into the aisle at a second vertical distance from the floor, wherein the first and second vertical distances from the floor are not equal.
9. The aviary of clause 8 further comprising a plurality of first perches and a plurality of second perches, the plurality of first perches being horizontally offset from one another, the plurality of second perches being horizontally offset from one another.
10. The aviary of clause 8 or clause 9 further comprising a plurality of first perches and a plurality of second perches, the plurality of first perches being vertically offset from one another, the plurality of second perches being vertically offset from one another.
11. The aviary of clause 8 or clause 9 or clause 10, wherein the first vertical distance and the second vertical distance define a third vertical distance that enables an animal to hop between the first perch and the second perch.
12. An aviary comprising: an aviary cage having a first side, a second side, and a nesting area, said nesting area positioned between the first side and the second side; a belt extending beneath the nesting area; a grate having a first end and a second end, said grate being positioned over the belt, the first end of the grate extending to the first side of the aviary cage and the second end of the grate extending to the second side of the aviary cage; a first egg conveyor positioned adjacent the first end of the grate; a second egg conveyor positioned adjacent the second end of the grate; wherein a first portion of the grate is angled downward toward the first egg conveyor, and a second portion of the grate is angled downward toward the second egg conveyor; and a scratching floor extending from the aviary cage adjacent to the grate, the scratching floor being sloped toward the grate to facilitate movement of an egg on the scratching floor to the grate.
13. The aviary of clause 12, wherein the aviary cage is a first aviary cage, the aviary further comprising:
   a second aviary cage positioned adjacent the first aviary cage; an aisle extending between the first aviary cage and
   the second aviary cage; a first perch extending from the first aviary cage and into the aisle at a first vertical distance from a floor; and a second perch extending from the second aviary cage and into the aisle at a second vertical distance from the floor, wherein the first and second vertical distances from the floor are not equal.
14. A method of forming an aviary including an aviary cage having a first side and a second side, the method comprising: positioning a nesting area between the first side and the second side; extending a belt below the nesting area; positioning a grate having a first end and a second end over the belt; positioning the grate such that the first end of the grate extends to the first side of the aviary cage and such that the second end of the grate extends to the second side of the aviary cage; positioning a first egg conveyor adjacent the first end of the grate; and positioning a second egg conveyor adjacent the second end of the grate.
15. The method of clause 14 further comprising: angling a first portion of the grate downward toward the first egg conveyor; and angling a second portion of the grate downward toward the second egg conveyor.
16. The method of clause 14 or clause 15 further comprising positioning the belt to capture and transport debris that falls through the grate.
17. The method of clause 14 or clause 15 or clause 16 further comprising extending a scratching floor from the aviary cage adjacent to the grate.
18. The method of clause 17 further comprising sloping the scratching floor toward the grate to facilitate movement of an egg on the scratching floor to the grate.
19. The method of clause 17 or clause 18 further comprising positioning a scratching floor that comprises a solid floor.
20. The method of clause 14 or any of clauses 15-19 further comprising extending a belt above the aviary cage.
21. The method of clause 14 or any of clauses 15-20, wherein the aviary cage is a first aviary cage and a second aviary cage is positioned adjacent the first aviary cage, the method further comprising: extending an aisle between the first aviary cage and the second aviary cage; extending a first perch from the first aviary cage and into the aisle at a first vertical distance from a floor; and extending a second perch from the second aviary cage and into the aisle at a second vertical distance from the floor, wherein the first and second vertical distances from the floor are not equal.
22. The method of clause 21, wherein the aviary includes a plurality of first perches and a plurality of second perches, the method further comprising: horizontally offsetting the plurality of first perches from one another; and horizontally offsetting the plurality of second perches from one another.
23. The method of clause 21 or clause 22, wherein the aviary includes a plurality of first perches and a plurality of second perches, the method further comprising: vertically offsetting the plurality of first perches from one another; and vertically offsetting the plurality of second perches from one another.
24. The method of clause 21 or clause 22 or clause 23, wherein the first vertical distance and the second vertical distance define a third vertical distance that enables an animal to hop between the first perch and the second perch.

### Certain features of a fifth aspect of the subject matter are set out in the following clauses:

1. A ventilation system for an aviary including at least one exterior wall disposed between a floor and a roof, the ventilation system comprising: a first fan disposed in one of the at least one exterior walls; a plenum disposed on one of the at least one exterior walls; and a second fan disposed in flow communication with the plenum.
2. The system of clause 1, wherein the plenum is disposed on a side wall and further wherein the first fan is disposed in a back wall.
3. The system of clause 2 further comprising: a first plenum disposed on a first side wall; and a second plenum disposed on a second side wall.
4. The system of clause 1 or clause 2 or clause 3, wherein the plenum is disposed on one of the at least one exterior walls so that a top opening of the plenum is positioned adjacent a top space adjacent the roof, and the bottom opening of the plenum is positioned adjacent a bottom space adjacent the floor.
5. The system of clause 1 or any of clauses 2-4 further comprising: at least one cage tower; and at least one scratching floor extending from the at least one cage tower, wherein the plenum is disposed on one of the at least one exterior walls so that a bottom end of the plenum is positioned below the at least one scratching floor.
6. The system of clause 5, wherein the second fan is disposed below the at least one scratching floor.
7. The system of clause 5 or clause 6 further comprising a grate disposed within the at least one cage tower that permits air to pass through the grate when said air is circulating through the at least one cage tower.
8. The system of clause 5 or clause 6 or clause 7 further comprising a belt disposed within the at least one cage tower around which belt air passes when said air is circulating through the at least one cage tower.
9. The system of clause 1 or any of clauses 2-8 further comprising a plurality of plenums spaced along one of the at least one exterior walls.
10. The system of clause 1 or any of clauses 2-9 further comprising a cage tower and a scratching floor extending from the cage tower, wherein openings are disposed between the scratching floor and the cage tower to facilitate airflow through the aviary.
11. A method of constructing a ventilation system in an aviary, which aviary includes at least one exterior wall disposed between a floor and a roof, a first fan, a plenum, and a second fan, the method comprising: disposing the first fan in one of the at least one exterior walls; disposing the plenum on one of the at least one exterior walls; and disposing the second fan in flow communication with the plenum.
12. The method of clause 11 further comprising disposing the plenum on a side wall and disposing the first fan in a back wall.
13. The method of clause 12 further comprising: disposing a first plenum on a first side wall; and disposing a second plenum on a second side wall.
14. The method of clause 11 or clause 12 or clause 13, wherein the plenum includes a top opening and a bottom opening, the method further comprising disposing the plenum on one of the at least one exterior wall so that the top opening of the plenum is positioned adjacent the roof, and the bottom opening of the plenum is positioned adjacent the floor.
15. The method of clause 11 or any of clauses 12-14, wherein the aviary includes a cage tower and a scratching floor extending from the cage tower, the method further comprising disposing an opening between the scratching floor and cage tower through which air may pass.
16. The method of clause 15, wherein the plenum includes a bottom opening, the method further comprising disposing the bottom opening of the plenum below the scratching floor.
17. The method of clause 15 or clause 16 further comprising disposing the second fan below the scratching floor.
18. The method of clause 11 or any of clauses 12-17 further comprising spacing a plurality of plenums along the at least one exterior wall.
19. The method of clause 11 or any of clauses 12-18 further comprising disposing a grate within the aviary to facilitate air circulation through the aviary.
20. The method of clause 11 or any of clauses 12-19 further comprising disposing a belt within the aviary around which belt air passes when said air is circulating through the aviary.
21. A method of operating a ventilation system in an aviary, which aviary includes a first fan, a second fan, a back wall, a front wall, a plenum having a top opening and a bottom opening, and a cage tower having a grate, a belt, and a scratching floor, the method comprising: disposing the first fan in a back wall; disposing the second fan in flow communication with the plenum; drawing air from the top opening of the plenum to the bottom opening of the plenum through the second fan; discharging the air toward the front wall; and at least one of: drawing the air back through the second fan through the plenum and discharging the air from the aviary through the first fan.
22. The method of clause 21 further comprising circulating the air through openings in the grate of the cage tower.
23. The method of clause 21 or clause 22 further comprising circulating the air through openings disposed adjacent a scratching floor.
24. The method of clause 21 or clause 22 or clause 23 further comprising circulating the air around the belt within the cage tower.

### Certain features of a sixth aspect of the subject matter are set out in the following clauses:

1. A method of building an aviary comprising a floor, a roof, a frame, an exterior wall, and a cage tower including a plurality of support members, the method comprising: disposing the cage tower on the floor; attaching the frame to the plurality of support members; and attaching at least one of the exterior wall and the roof to the frame.
2. The method of clause 1, wherein the frame is a roof frame, the method further comprising: attaching the roof frame to the plurality of support members; and attaching the roof to the roof frame.
3. The method of clause 1 or clause 2, wherein the frame is a wall frame, the method further comprising:
   attaching the wall frame to the plurality of support members; and attaching the exterior wall to the wall frame.
4. The method of clause 3 further comprising securing at least a portion of the wall frame to the floor.
5. The method of clause 3 or clause 4 further comprising securing at least a portion of the exterior wall to the floor.
6. The method of clause 1 or any of clauses 2-5, wherein the plurality of support members includes a first plurality of support members and a second plurality of support members, and wherein the frame includes a roof frame and a wall frame, the method further comprising: attaching the roof frame to the first plurality of support members; attaching a roof to the roof frame; attaching the wall frame to the second plurality of support members; and attaching the exterior wall to the wall frame.
7. The method of clause 6 further comprising attaching the wall frame to the roof frame.
8. The method of clause 6 or clause 7 further comprising attaching the exterior wall to the roof
9. The method of clause 1 or any of clauses 2-8, wherein the cage tower includes at least one aviary cage, the method further comprising extending the plurality of support members at least one of above or below the at least one aviary cage.
10. The method of clause 1 or any of clauses 2-9, further comprising disposing a plurality of cage towers on the floor, each cage tower having at least one support member; and attaching the frame to the at least one support member of each of the plurality of cage towers.
11. A method of building an aviary comprising a floor, a roof, a roof frame, an exterior wall, a wall frame, and a cage tower including a plurality of first support members and a plurality of second support members, the method comprising: disposing the cage tower on the floor; attaching the roof frame to the plurality of first support members; attaching the roof to the roof frame; attaching the wall frame to the plurality of second support members; attaching the wall frame to the roof frame; and attaching the exterior wall to the wall frame.
12. The method of clause 11 further comprising securing at least a portion of the wall frame to the floor.
13. The method of clause 11 or clause 12 further comprising securing at least a portion of the exterior wall to the floor.
14. The method of clause 11 or clause 12 or clause 13 further comprising attaching the exterior wall to the roof
15. The method of clause 11 or any of clauses 12-14, wherein the cage tower includes at least one aviary cage, the method further comprising extending the plurality of support members at least one of above or below the at least one aviary cage.
16. The method of clause 11 or any of clauses 12-15, further comprising disposing a plurality of cage towers on the floor, each cage tower having at least one first support member; and attaching the roof frame to the at least one first support member of each of the plurality of cage towers.
17. An aviary comprising: a floor; a cage tower disposed on the floor; a plurality of first support members extending from the cage tower; a plurality of second support members extending from the cage tower; a roof frame attached to the plurality of first support members; a roof attached to the roof frame; a wall frame attached to the plurality of second support members; and an exterior wall attached to the wall frame.
18. The aviary of clause 17, wherein the plurality of first support members extend from a top of the cage tower.
19. The aviary of clause 17 or clause 18, wherein the plurality of first support members extend from a side of the cage tower.
20. The aviary of clause 17 or clause 18 or clause 19, wherein the wall frame is attached to the roof frame.
21. The aviary of clause 17 or any of clauses 18-20, wherein at least a portion of the wall frame is secured to the floor.
22. The aviary of clause 17 or any of clauses 18-21, wherein the cage tower comprises at least one aviary cage, the plurality of support members extending at least one of above or below the at least one aviary cage.
23. The aviary of clause 17 or any of clauses 18-22, further comprising a plurality of cage towers disposed on the floor, wherein each cage tower has at least one first support member, and wherein the roof frame is attached to the at least one first support member of each of the plurality of cage towers.

### Certain features of a seventh aspect of the subject matter are set out in the following clauses:

1. An aviary comprising: a cage tower including an outside surface; an egg collector extending from the outside surface of the cage tower; a cover positioned over the egg collector; and a perch positioned adjacent to the cover, wherein a gap is formed between the perch and the cover, and further wherein the gap is sized to capture eggs.
2. The aviary of clause 1, wherein the perch is positioned at a greater height than the cover.
3. The aviary of clause 1 or clause 2, wherein the perch extends outward from the egg collector.
4. The aviary of clause 1 or clause 2 or clause 3 further comprising an egg conveyor positioned within the egg collector.
5. The aviary of clause 1 or any of clauses 2-4 further comprising a nesting area within the cage tower, the cover being positioned adjacent the nesting area to enable hens within the nesting area to roost on the cover.
6. The aviary of clause 1 or any of clauses 2-5, wherein the cover includes a scratching surface.
7. The aviary of clause 1 or any of clauses 2-6, wherein the cover is sloped downward from the outside surface.
8. The aviary of clause 1 or any of clauses 2-7, wherein the perch includes padding to prevent breakage of eggs captured in the gap between the perch and the cover.
9. The aviary of clause 1 or any of clauses 2-8, wherein the cover is moveable to allow access to the egg collector.
10. The aviary of clause 1 or any of clauses 2-9 further comprising an aisle positioned adjacent the cage tower, wherein the egg collector, the cover, and the perch extend into the aisle.
11. The aviary of clause 10, wherein eggs captured in the gap between the perch and the cover are manually accessible from the aisle.
12. A method of constructing an aviary including a cage tower including an outside surface, an egg collector, a cover, and a perch, comprising: positioning the cage tower including an outside surface within the aviary; extending the egg collector from the outside surface of the cage tower; positioning the cover over the egg collector; positioning the perch adjacent to the cover so that a gap is formed between the perch and the cover; and sizing the gap to capture eggs.
13. The method of clause 12 further comprising positioning the perch at a greater height than the cover.
14. The method of clause 12 or clause 13 further comprising extending the perch outward from the egg collector.
15. The method of clause 12 or clause 13 or clause 14 further comprising: providing an egg conveyor; and positioning the egg conveyor within the egg collector.
16. The method of clause 12 or any of clauses 13-15 further comprising: providing a nesting area; positioning the nesting area within the cage tower; and positioning the cover adjacent the nesting area to enable hens within the nesting area to roost on the cover.
17. The method of clause 12 or any of clauses 13-16 further comprising: providing a scratching surface; and positioning the scratching surface on the cover.
18. The method of clause 12 or any of clauses 13-17 further comprising sloping the cover downward from the outside surface.
19. The method of clause 12 or any of clauses 13-18 further comprising: providing padding; and covering at least a portion of the perch with padding to prevent breakage of eggs captured in the gap between the perch and the cover.
20. The method of clause 12 or any of clauses 13-19 further comprising moving the cover to allow access to the egg collector.
21. The method of clause 12 or any of clauses 13-20 further comprising: providing an aisle; positioning the aisle adjacent the cage tower; and extending the egg collector, the cover, and the perch into the aisle.
22. The method of clause 21 further comprising manually accessing eggs captured in the gap between the perch and the cover from the aisle.

### Certain features of an eighth aspect of the subject matter are set out in the following clauses:

1. An aviary comprising: a floor; a roof; at least one wall having a plenum to draw air adjacent the roof down the plenum toward the floor; at least one cage tower disposed on the floor; at least one walkway disposed adjacent the at least one cage tower configured to facilitate bird access to the at least one cage tower; and a fan disposed in flow communication with the plenum to circulate air in the aviary.
2. The aviary of clause 1, wherein the plenum further draws outside air into the aviary to create mixed air.
3. The aviary of clause 2, further comprising a bottom space adjacent the floor, wherein the fan circulates the mixed air in a first direction through the bottom space.
4. The aviary of clause 3, further comprising at least one solid floor and at least one grated floor disposed above the bottom space, wherein the fan further circulates the mixed air through the at least one grated floor and further circulates the mixed air above the at least one solid floor in a second direction opposite the first direction.
5. The aviary of clause 3 or clause 4, wherein the at least one walkway is disposed above the at least one solid floor such that the fan circulates the mixed air around the at least one walkway in the second direction.
6. The aviary of clause 5, wherein the at least one walkway comprises a ramp having an upper surface facing at least partially in the second direction such that the ramp is configured to create air turbulence.
7. The aviary of clause 1 or any of clauses 2-6 further comprising a plurality of plenums spaced along the at least one wall.
8. The aviary of clause 1 or any of clauses 2-7, wherein the at least one cage tower comprises a nesting area, the fan circulating air through and below the nesting area.
9. The aviary of clause 1 or any of clauses 2-8, further comprising a plurality of cage towers, each cage tower comprising a nesting area, the fan circulating air through and below the nesting area of each cage tower.
10. An aviary comprising: a floor; a roof; at least one wall having a plenum to draw air toward the floor;
   at least one cage tower disposed on the floor; at least one walkway disposed adjacent the at least one cage tower configured to facilitate bird access to the at least one cage tower; and a fan disposed in flow communication with the plenum to circulate the air in the aviary.
11. The aviary of clause 10, wherein the plenum draws air from inside the aviary adjacent the roof toward the floor.
12. The aviary of clause 10, wherein the plenum draws air from outside the aviary toward the floor.
13. The aviary of clause 11, further comprising a bottom space adjacent the floor, wherein the fan circulates the air in a first direction through the bottom space.
14. The aviary of clause 12, further comprising a bottom space adjacent the floor, wherein the fan circulates the air in a first direction through the bottom space.
15. The aviary of clause 13, further comprising at least one solid floor and at least one grated floor disposed above the bottom space, wherein the fan further circulates the air above the at least one solid floor in a second direction opposite the first direction.
16. The aviary of clause 14, further comprising at least one solid floor and at least one grated floor disposed above the bottom space, wherein the fan further circulates the air above the at least one solid floor in a second direction opposite the first direction.
17. The aviary of clause 15, wherein the at least one walkway is disposed above the at least one solid floor such that the fan circulates the mixed air around the at least one walkway in the second direction.
18. The aviary of clause 16, wherein the at least one walkway is disposed above the at least one solid floor such that the fan circulates the mixed air around the at least one walkway in the second direction.
19. The aviary of clause 15 or clause 17, wherein the at least one walkway comprises a ramp having an upper surface facing at least partially in the second direction such that the ramp is configured to create air turbulence.
20. The aviary of clause 16 or clause 18, wherein the at least one walkway comprises a ramp having an upper surface facing at least partially in the second direction such that the ramp is configured to create air turbulence.
21. A method of circulating air in an aviary comprising: providing an aviary having at least one wall;
   providing a plenum disposed on the at least one wall of the aviary; providing at least one cage tower; providing at least one walkway adjacent the at least one cage tower; drawing air having a temperature higher than air located outside of the aviary toward the floor through the plenum; drawing air located outside of the aviary through the plenum and into the aviary; mixing the higher temperature air and the outside air to create mixed air; and circulating the mixed air around the at least one walkway.
22. The method of clause 21, wherein circulating the mixed air comprises circulating the mixed air in a first direction through a bottom space in the aviary.
23. The method of clause 22, wherein circulating the mixed air further comprises circulating the mixed air around the at least one walkway in a second direction opposite the first direction.
24. The method of clause 21 or clause 22 or clause 23, further comprising directing at least a portion of the mixed air downward as the mixed air circulates around the at least one walkway.
25. The method of clause 21 or any of clauses 22-24, further comprising providing a nesting area in the at least one cage tower and circulating the mixed air through and below the nesting area.
26. The method of clause 21 or any of clauses 22-25, further comprising providing a plurality of spaces adjacent the at least one cage tower, wherein circulating the mixed air comprises circulating the mixed air through the plurality of spaces.
27. A method of circulating air in an aviary comprising: providing an aviary having at least one wall, a top space, and a floor; providing a plenum disposed on the at least one wall of the aviary; providing at least one cage tower; providing at least one walkway adjacent the at least one cage tower; drawing air from the top space of the aviary toward the floor through the plenum; and circulating the air around the at least one walkway.
28. The method of clause 27, wherein the drawing air step further comprises drawing air located outside of the aviary through the plenum and into the aviary.
29. The method of clause 27 or clause 28, wherein the drawing air step further comprises drawing air from the top space having a temperature higher than air located outside of the aviary toward the floor through the plenum.
30. The method of clause 27 or clause 28 or clause 29, wherein circulating the air comprises circulating the air in a first direction through a bottom space in the aviary.
31. The method of clause 30, wherein circulating the air further comprises circulating the mixed air around the at least one walkway in a second direction opposite the first direction.
32. The method of clause 31, further comprising directing at least a portion of the air downward as the air circulates around the at least one walkway.
33. The method of clause 27 or any of clauses 28-32, further comprising providing a nesting area in the at least one cage tower and circulating the air through and below the nesting area.
34. The method of clause 27 or any of clauses 28-33, further comprising providing a plurality of spaces adjacent the at least one cage tower, wherein circulating the air comprises circulating the air through the plurality of spaces.

### Certain features of a ninth aspect of the subject matter are set out in the following clauses:

1. An aviary comprising: a cage tower; an egg collector; a cover positioned over the egg collector and including an inner end and an outer end; and a cover adjustment member coupled to the cover to reversibly raise one of the inner end and the outer end to a higher position than the other of the inner end and the outer end to facilitate movement of a deposit disposed on the cover toward the lower positioned end.
2. The aviary of clause 1, wherein the cover adjustment member includes a pivoting portion coupled to the inner end of the cover to reversibly raise the outer end of the cover to a higher position than the inner end.
3. The aviary of clause 1 or clause 2, wherein the cover adjustment member includes a pivoting portion coupled to the outer end of the cover to reversibly raise the inner end of the cover to a higher position than the outer end.
4. The aviary of clause 1 or clause 2 or clause 3, wherein the cover adjustment member includes a motor coupled to the cover to raise one of the inner end and the outer end to a higher position than the other of the inner end and the outer end.
5. The aviary of clause 1 or any of clauses 2-4 further comprising an egg conveyor positioned within the egg collector.
6. The aviary of clause 1 or any of clauses 2-5 further comprising an inside nesting area within the cage tower, the cover being positioned adjacent the inside nesting area to enable hens to roost on the cover.
7. The aviary of clause 1 or any of clauses 2-6, wherein the cover includes a scratching surface.
8. The aviary of clause 1 or any of clauses 2-7, further comprising a perch positioned adjacent to the cover, wherein a gap is formed between the perch and the cover, and further wherein the gap is sized to capture eggs.
9. The aviary of clause 8, wherein the perch is disposed above the cover.
10. The aviary of clause 8 or clause 9, wherein the perch extends outward from the egg collector.
11. The aviary of clause 8 or clause 9 or clause 10, wherein the perch includes padding to prevent breakage of eggs captured in the gap between the perch and the cover.
12. The aviary of clause 8 or any of clauses 9-11 further comprising an aisle positioned adjacent the cage tower, wherein the egg collector, the cover, and the perch extend into the aisle.
13. The aviary of clause 12, wherein eggs captured in the gap between the perch and the cover are manually accessible from the aisle.
14. A method of constructing an adjustable balcony in an aviary, which aviary includes a cage tower, an egg collector, a deposit, and a cover having an inner end and an outer end, comprising: positioning the cage tower within the aviary; positioning the egg collector adjacent the cage tower; positioning the cover over the egg collector; disposing the deposit on the cover; and reversibly raising one of the inner end and the outer end to a position higher than the other of the inner end and the outer end to facilitate movement of the deposit toward the lower positioned end.
15. The method of clause 14 further comprising: providing an egg conveyor, and positioning the egg conveyor within the egg collector.
16. The method of clause 14 or clause 15 further comprising: providing a nesting area; positioning the nesting area within the cage tower; and positioning the cover adjacent the nesting area to facilitate hens roosting on the cover.
17. The method of clause 14 or clause 15 or clause 16 further comprising providing a scratching surface on the cover.
18. The method of clause 14 or any of clauses 15-17, further comprising: providing a perch; positioning the perch adjacent to the cover so that a gap is formed between the perch and the cover; and sizing the gap to capture eggs.
19. The method of clause 18 further comprising: providing an aisle; positioning the aisle adjacent the cage tower; and extending the egg collector, the cover, and the perch into the aisle.
20. A method of operating an adjustable balcony in an aviary, which aviary includes a cage tower, an egg collector, a cover including an inner end and an outer end, and a deposit, comprising: disposing the cage tower in the aviary; disposing the egg collector on the cage tower; disposing the cover above the egg collector; disposing the deposit on the cover; raising, during a first period of time, one of the inner end and the outer end to a position higher than the other of the inner end and the outer end to facilitate movement of the deposit toward the lower positioned end; and lowering, during a second period of time, the one of the inner end and the outer end to a position lower than the other of the inner end and the outer end to facilitate movement of the deposit away from the higher positioned end.
21. The method of clause 20 further comprising providing an egg conveyor within the egg collector.
22. The method of clause 20 or clause 21 further comprising: providing a nesting area within the cage tower;
   and providing the cover adjacent the nesting area to enable hens within the nesting area to roost on the cover.
23. The method of clause 20 or clause 21 or clause 22 further comprising providing a scratching surface on the cover.
24. The method of clause 20 or any of clauses 21-23 further comprising: providing a perch adjacent to the cover so that a gap is formed between the perch and the cover; and capturing eggs through the gap.

### BRIEF DESCRIPTION OF DRAWINGS

The embodiments described herein and other features, advantages and disclosures contained herein, and the manner of attaining them, will become apparent and the present disclosure will be better understood by reference to the following description of various exemplary embodiments of the present disclosure taken in conjunction with the accompanying drawing, wherein:
FIG. 1 is a front view of an aviary cage formed in accordance with an embodiment.
FIG. 2 is a side view of the aviary cage shown in FIG. 1 without the interior components of the cage towers.
FIG. 3 is a top perspective view of the aviary cage shown in FIG. 1 without the interior components of the cage towers.
FIG. 4 is a front view of an aviary cage formed in accordance with another embodiment.
FIG. 5 is a side perspective view of a conventional egg finger belt.
FIG. 6 is a front view of an aviary cage formed in accordance with another embodiment.
FIG. 7 is a side view of the aviary cage shown in FIG. 6 without the interior components of the cage towers.
FIG. 8 is a top perspective view of the aviary cage shown in FIG. 6 without the interior components of the cage towers.
FIG. 9 is a top view of a mesh floor.
FIG. 10 is a front view of an aviary cage formed in accordance with another embodiment.
FIG. 11 is a front view of a gate formed in accordance with another embodiment.
FIG. 12 is a side perspective view of the gate shown in FIG. 11.
FIG. 13 is a front view of an aviary formed in accordance with another embodiment.
FIG. 14 illustrates a side view of a cage tower formed in accordance with another embodiment.
FIG. 15 is a front view of an aviary formed in accordance with another embodiment.
FIG. 16 is a side view of a cage in a cage tower shown in FIG. 15.
FIG. 17A is a perspective top view of an egg collector formed in accordance with an embodiment.
FIG. 17B is a perspective top view of an egg collector formed in accordance with another embodiment.
FIG. 18 is a front view of a gate formed in accordance with another embodiment.
FIG. 19 is a side perspective view of the gate shown in FIG. 18.
FIG. 20 illustrates a side perspective view of a cage tower formed in accordance with another embodiment.
FIG. 21 is a front view of an aviary formed in accordance with another embodiment.
FIG. 22 is a front view of an aviary formed in accordance with another embodiment.
FIG. 23 is a side view of an aviary cage in a cage tower shown in FIG. 22.
FIG. 24 is a front view of an aviary formed in accordance with another embodiment.
FIG. 25 is a side perspective view of an aviary cage shown in FIG. 24.
FIG. 26 is a side perspective view of a first aviary cage, a second aviary cage, and a scratching floor shown in FIG. 24.
FIG. 27 is a top view of a mesh floor.
FIG. 28 is an expanded view of a scratching floor, a grate, a side of an aviary cage, and a belt formed in accordance with an embodiment.
FIG. 29 is a front view of an aviary formed in accordance with an embodiment and having an end wall removed.
FIG. 30 is a perspective view of an aviary, without cage towers illustrated.
FIG. 31 illustrates a method for constructing a ventilation system in an aviary.
FIG. 32 illustrates a method for operating an aviary ventilation system.
FIG. 33 is a front view of an aviary formed in accordance with an embodiment.
FIG. 34 is a side view of a cage tower formed in accordance with an embodiment.
FIG. 35 is a perspective view of a cage tower formed in accordance with an embodiment.
FIG. 36 illustrates a method for constructing an aviary.
FIG. 37 is a front view of an aviary formed in accordance with an embodiment.
FIG. 38 is a perspective view of a cage tower formed in accordance with an embodiment.
FIG. 39 is a perspective view of a perch, a cover, and an egg collector formed in accordance with an embodiment.
FIG. 40 illustrates a method for constructing an egg-saving perch.
FIG. 41 is an enlarged front view of an aviary formed in accordance with an embodiment.
FIG. 42 is a side view of the aviary shown in FIG. 29.
FIG. 43 illustrates a method of circulating air in an aviary.
FIG. 44 illustrates a method of circulating air in an aviary.
FIG. 45 illustrates a method of circulating air in an aviary.
FIG. 46 is a front view of an aviary formed in accordance with an embodiment.
FIG. 47 is a perspective view of a cage tower formed in accordance with an embodiment.
FIG. 48 is a perspective view of a perch, a cover, and an egg collector formed in accordance with an embodiment.
FIG. 49 illustrates a method of constructing an aviary.
FIG. 50 illustrates a method of operating an aviary.

### DETAILED DESCRIPTION OF THE DISCLOSED EMBODIMENTS

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended.

The present embodiments provide aviaries having open space that may include a floor serving as a pecking area where hens can move freely, peck the floor with their beaks, and scratch the floor with their feet. By permitting space for the hens to move freely, the aviary cages of the present embodiments satisfy the requirements to be considered "cage free" birds. *See* http://en.wikipedia.org/wiki/Cage-free. In other words, the hens are not continuously confined to a caged area. The present embodiments allow the removal of freshly laid eggs, which eggs may be sold under the label "cage free" because they were laid outside of a nest box environment. The present embodiments also prevent eggs from becoming contaminated due to slow retrieval thereof from the scratching areas or cage floors (during which time the eggs could be infiltrated by bacteria).

Some embodiments include at least one belt extending through the cage tower below the nesting area to remove a deposit from at least part of the cage tower. A deposit may include, but is not limited to, one or more items such as manure, an egg, litter, feathers, feed, or a dead bird. In one embodiment, the belt extends through the cage tower along the length of the cage tower. In one embodiment, the belt extends approximately 400 feet along the length of the cage tower. In one embodiment, the belt carries manure from the cage tower to a collection area (not shown) positioned outside of the cage tower. By removing deposits, particularly manure, from at least part of the cage tower, ammonia levels within the aviary are significantly reduced. Additionally, the need for an individual to enter the cage and clean the cage by hand is greatly reduced. Accordingly, the present embodiments permit one person to care for 150,000 to 200,000 birds, compared with the 3-5 people per 150,000 to 200,000 birds required when known cages and aviaries are used. The present embodiments also eliminate the requirement for extreme body positions, including squatting for extended periods of time and crawling and lying on the floor while loading and unloading the cage and while gathering eggs from the cage. The present embodiments further reduce potential respiratory hazards and infection hazards to the workers. If a hen lays an egg outside of the nesting area, the egg will be collected by the belt and carried to an egg collection area (not shown) positioned outside of the cage tower.

It should be noted that the various elements of each of the embodiments described below may be combined in any manner to form new embodiments of an aviary.

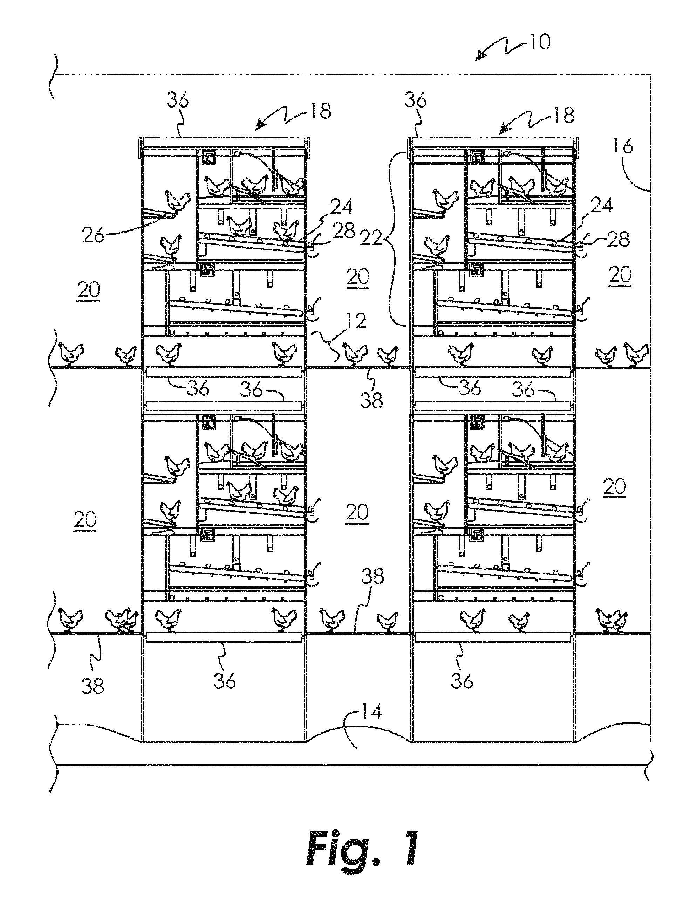

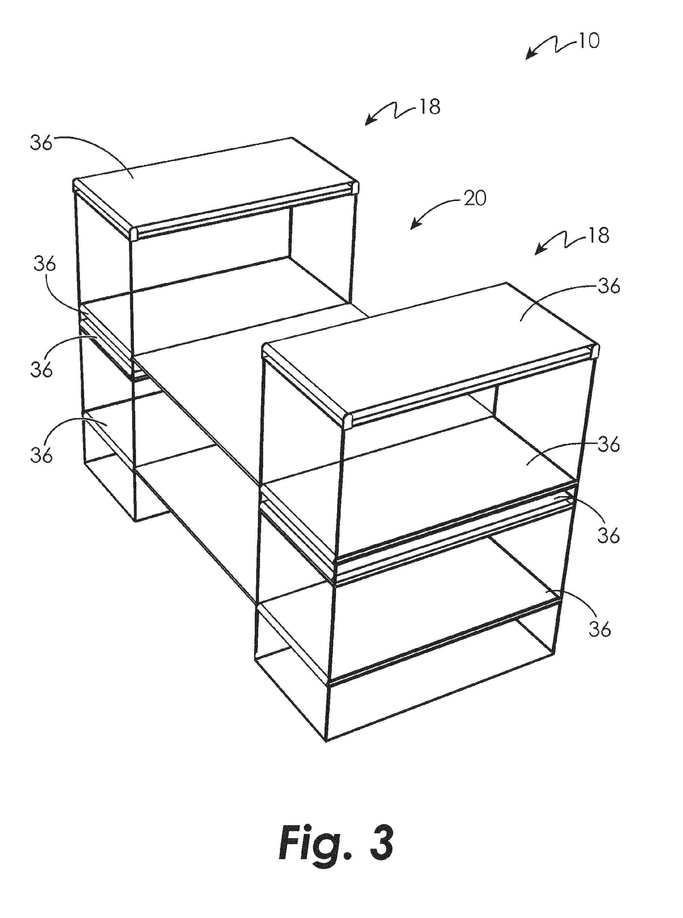

FIGS. 1-3 illustrate an aviary 10 configured with a manure removal system 12 according to one embodiment. The aviary 10 may include a concrete floor 14 enclosed by exterior walls 16. The exterior walls 16 enclose at least two cage towers 18 where hens may be caged. Although the present embodiment illustrates only two cage towers 18, it should be noted that the aviary 10 may be constructed with any number of cage towers 18, including a single cage tower 18. An open space 20 extends between the two cage towers 18 to provide an inspection area. In an embodiment having more than two cage towers 18, an open space 20 may extend between each adjacent cage tower 18. In an embodiment having a single cage tower 18, an open space 20 is present on at least one side of the cage tower 18. In an embodiment, open space 20 is positioned between the cage tower 18 and the respective exterior wall 16.

Each cage tower 18 includes at least one nesting area 22. The nesting area 22, as illustrated, may include various sloped nesting platforms 24 where a hen may sit to lay eggs. The nesting platforms 24 may be offset from sloped platforms 26 that allow the hens to move freely up and down the cage tower 18 to a desirable nesting area 22. As the hens lay their eggs, the eggs are collected in egg conveyors 28 that extend along the sides of the nesting platforms 24. The egg conveyors 28 carry the eggs from the nesting area 22 to a collection area.

In one embodiment, the belt 36 forms a floor of the cage tower 18. Accordingly, the birds are allowed to move freely and walk on the belt 36. In addition to collecting eggs and manure, the belt 36 may also remove dead birds from at least part of a cage tower 18. The illustrated embodiment includes a belt 36 positioned beneath each nesting area 22. In addition to the belts 36 positioned below the nesting area 22, a belt 36 is likewise positioned above each nesting area 22. The belts 36 above each nesting area 22 provide additional space for the hens to move freely. Deposits, which may include, but are not limited to, manure, eggs, litter, feathers, feed, or dead birds, within the aviary 10 are collected on the belts 36.

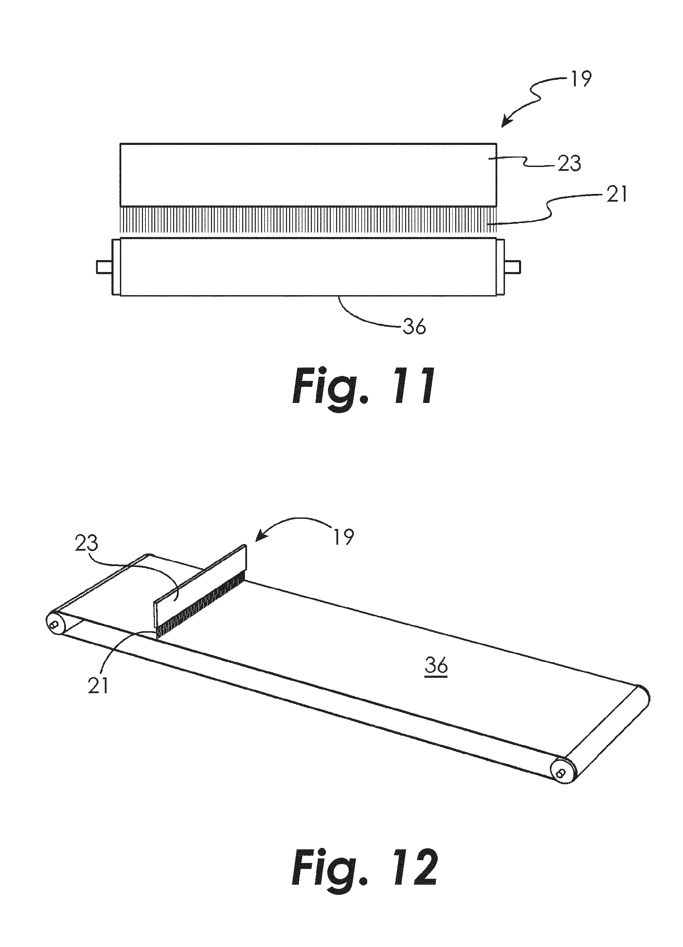

In one embodiment, as illustrated in FIGs. 11 and 12, at least one gate 19 is positioned along each belt 36 to permit deposits on the belt 36 to pass thereunder and/or therethrough and to prevent birds from traveling beyond the gate. In the illustrated embodiment, the gate 19 includes plastic strips 21 extending downward from a solid partition 23. In the illustrated embodiment, the plastic strips 21 may be positioned approximately 1½ inches from the belt 36. If a deposit on the belt 36 in the illustrated embodiment is taller than the 1½ inch gap between the gate 19 and the belt 36, then the plastic strips 21 move when in contact with such a deposit to allow the deposit to pass therethrough. In an embodiment, the gate 19 may be positioned so that its lower edge is in contact with the belt 36. In an embodiment, the gate 19 may include plastic strips. In one embodiment, the gate 19 including plastic strips may be positioned so that the lower edges of the plastic strips are in contact with the belt 36. In an embodiment, the gate 19 may include a hinged door that moves to permit deposits larger than a gap between the hinged door and the belt 36 to pass thereunder. In an embodiment, the gate 19 may comprise one or more hinged doors to permit deposits larger than a gap between the hinged doors and the belt 36 to pass thereunder. In an embodiment, the gate 19 may comprise one or more swinging doors to permit deposits larger than a gap between the swinging doors and the belt 36 to pass thereunder. In an embodiment, an electric fence may be positioned on the gate 19 to prevent live birds from entering the gate 19. Alternately, an electric fence may be spaced apart from the gate 19 to prevent birds from reaching and entering the gate 19. In embodiments including at least one gate 19, birds are prevented from leaving a part of the aviary 10, while deposits are permitted to travel away from that part of the aviary 10.

In the illustrated embodiment, a scratching floor 38 extends from the cage tower 18. In some embodiments, the scratching floor is solid. In an embodiment having more than one cage tower 18, a scratching floor 38 may extend between any adjacent cage towers 18. Additionally, a scratching floor 38 may extend between the cage tower 18 and the respective exterior wall 16. In an embodiment having more than two cage towers 18, a scratching floor may extend from adjacent cage towers 18 but not be continuous between adjacent cage towers 18.

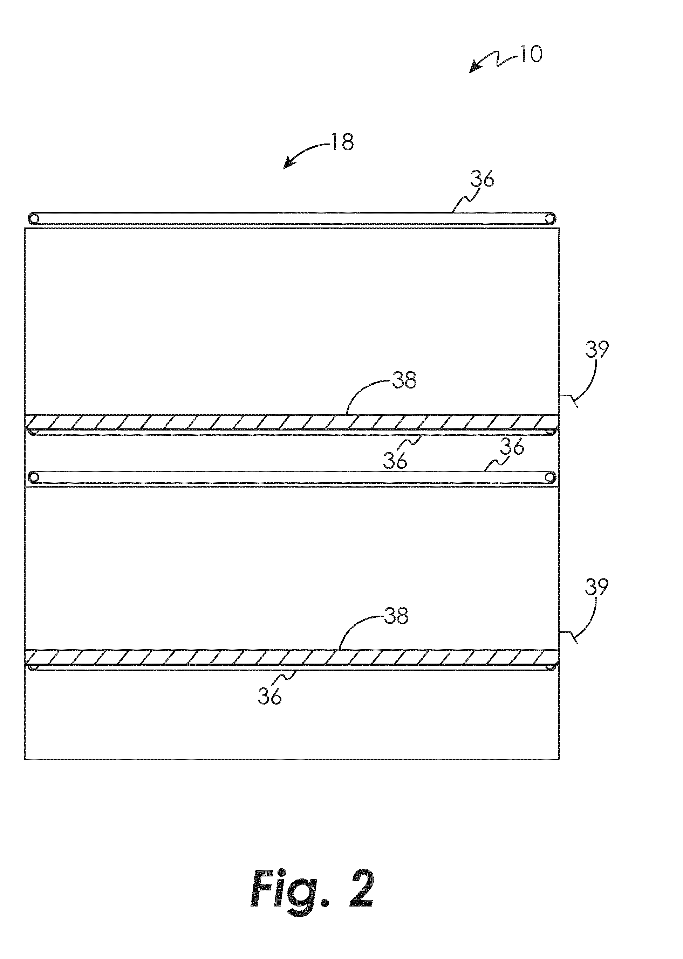

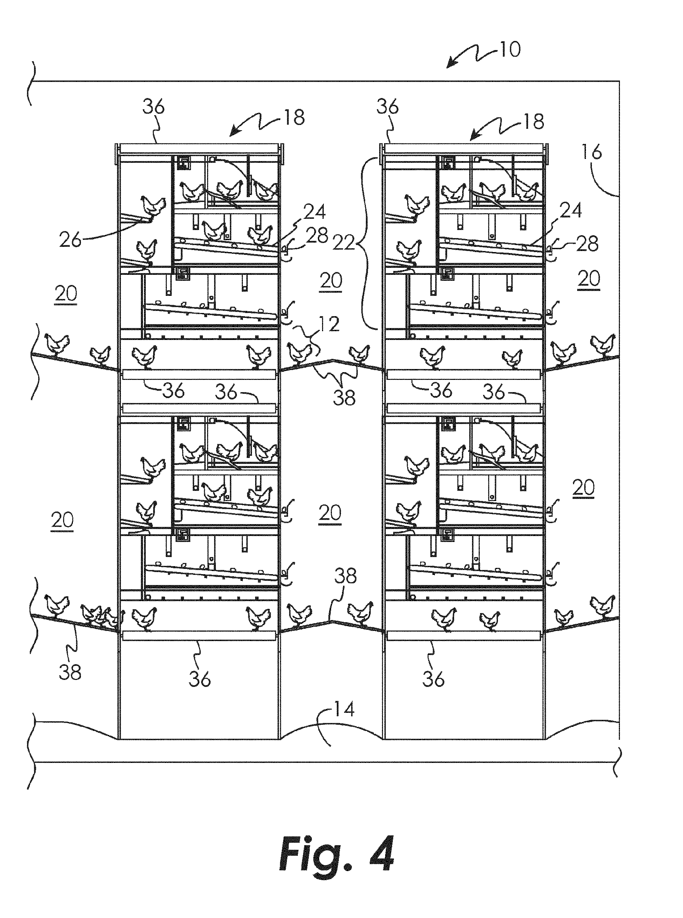

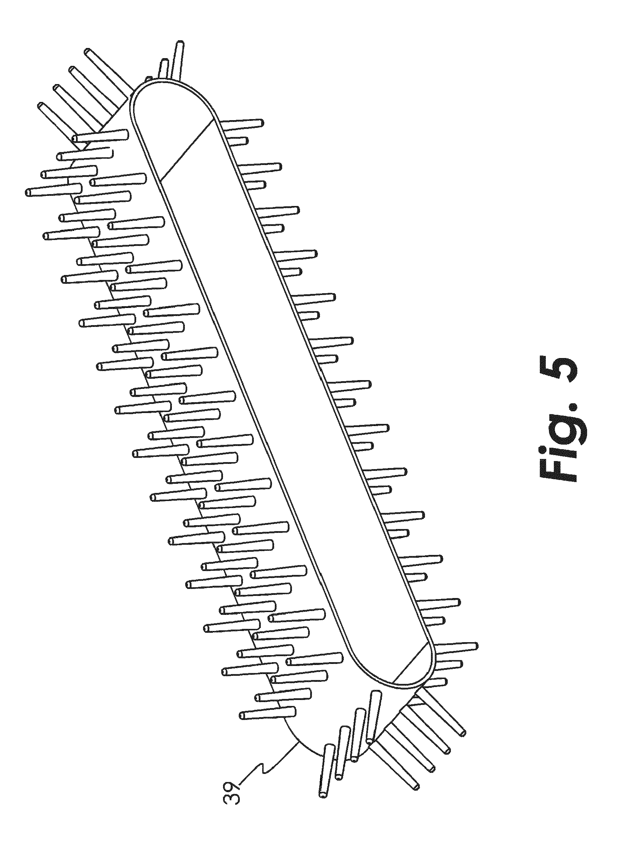

The scratching floor 38 is oriented with respect to at least one belt 36. In one embodiment, the scratching floor 38 is planar with a belt 36 from which the scratching floor 38 extends. Alternatively, the scratching floor 38 is sloped to allow deposits to move back toward the belt 36, as shown in FIG. 4. The scratching floor 38 extends into the open space 20 of the aviary 10. The scratching floor 38 provides yet another pecking area for the hens to utilize while they are not nesting. In particular, the scratching floor 38 provides a scratching area for the birds within the aviary 10. When the birds scratch the scratching floor 38, they scratch much of the deposits made on the scratching floor 38 onto the respective belt 36. Accordingly, since it is common for birds to defecate in a scratching area, the scratching floor 38 becomes relatively self-cleaning as the hens scratch. The scratching floor 38 is configured so that the deposits are scratched back to the respective belt 36. Such configuration greatly reduces the amount of ammonia captured within the aviary 10 and also reduces the required frequency for cleaning of the aviary 10. Any eggs laid on the scratching floor 38 may be directed back toward the belt 36 by the scratching of the hens. These eggs are then collected on the belt 36 and removed from the belt 36. In one embodiment, the eggs are removed through the use of any conventional egg finger belt 39, shown in FIGs. 2 and 5, positioned at the end of the belt 36.

It should be noted that the cage tower 18 illustrated includes two nesting areas 22 positioned in a stacked configuration. Each nesting area 22 may have its own belt 36 extending therebelow. Each belt 36 may be joined to a corresponding belt 36 of the adjacent cage tower 18 by a scratching floor 38. As will be appreciated by one of skill in the art, the configuration of the nesting areas 22, belts 36, and scratching floor 38 can be unstacked to have just one level of nesting areas 22, belts 36, and a scratching floor 38 or can be repeated any number of times to create the desired number of levels in a stacked configuration within the aviary 10. As will also be appreciated by one of skill in the art, each level may contain multiple nesting areas 22 set adjacent each other to permit or prohibit, as desired, bird movement from one nesting area to another.

The present invention also provides a method of constructing an aviary 10 for deposit removal. The method includes positioning a belt 36 beneath a nesting area 22 to remove a deposit therefrom. In one embodiment, the belt 36 is configured to capture eggs laid outside of the nesting area 22. The method also includes extending a scratching floor 38 from the belt 36. In one embodiment, the scratching floor 38 is planar with the belt 36 from which the scratching floor 38 extends. In another embodiment, the scratching floor 38 is sloped toward the belt 36 to facilitate the movement of deposits, with or without the assistance of gravity, from the scratching floor 38 onto the belt 36. In one embodiment, the scratching floor 38 forms a scratching area for birds in the aviary 10. In one embodiment, the scratching area is configured for the birds to scratch manure on the scratching floor 38 onto the belt 36. In one embodiment, a belt 36 is also positioned along a top of the nesting area 22. In one embodiment, a belt 36 is also positioned along a floor 14 of the aviary 10.

In one embodiment, the method includes positioning at least two nesting areas 22 in a stacked configuration. The method also includes extending a belt 36 below each nesting area 22. The method also includes extending a scratching floor 38 from a belt 36 to a corresponding belt 36 of an adjacent nesting area 22.

In one embodiment, the method includes positioning at least two nesting areas 22 in a stacked configuration. The method also includes extending a belt 36 below each nesting area 22. The method also includes extending a scratching floor 38 from each belt 36, but not making the scratching floor 38 extending from a belt 36 of a first nesting area 22 continuous with a scratching floor 38 extending from a corresponding belt 36 of an adjacent nesting area 22.

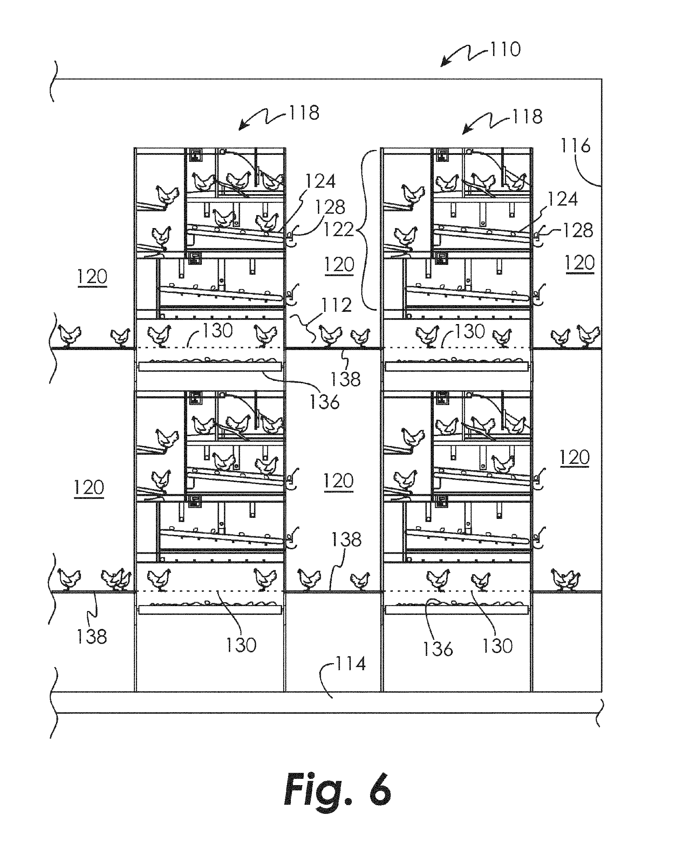

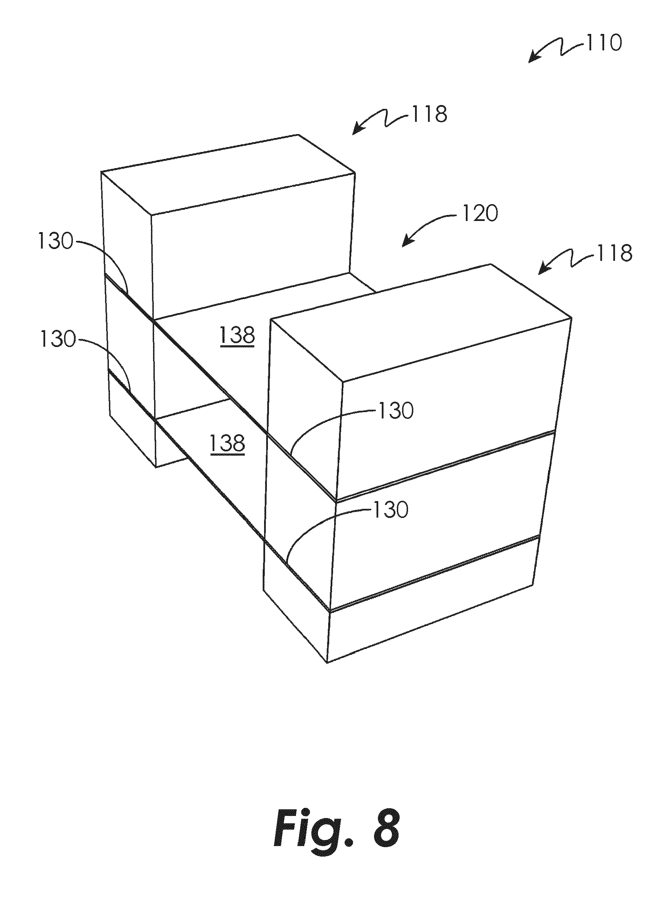

FIGS. 6-8 illustrate an aviary 110 configured with a manure removal system 112. The aviary 110 includes a concrete floor 114 enclosed by exterior walls 116. The exterior walls 116 enclose at least one cage tower 118 where hens are caged to lay eggs. Although the illustrated embodiment shows only two cage towers 118, it should be noted that the aviary 110 may be constructed with any number of cage towers 118, including a single cage tower 118. An open space 120 extends between the two cage towers 118. In an embodiment having more than two cage towers 118, an open space 120 extends between each adjacent cage tower 118. In an embodiment having a single cage tower 118, an open space 120 is present on at least one side of the cage tower 118. In an embodiment, open space 120 is likewise positioned between cage tower 118 and the respective exterior wall 116.

Each cage tower 118 includes at least one nesting area 122. The nesting area 122, as illustrated, may include various nesting platforms 124 where the hen may sit to lay eggs. The nesting platforms 124 allow the hens to move freely up and down the cage tower 118 to a desirable nesting area 122. As the hens lay their eggs, the eggs are collected in egg conveyors 128 that extend along the sides of the nesting platforms 124. The egg conveyors 128 carry the eggs from the nesting area 122 to an egg collection area (not shown).

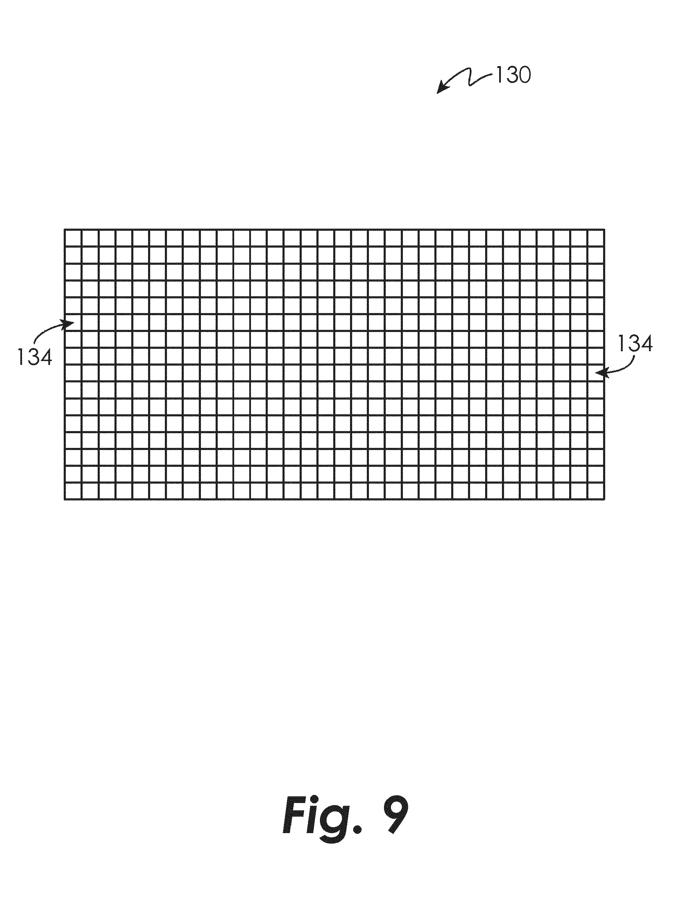

A mesh floor 130, as shown in FIG. 9, is positioned beneath each nesting area 122. In particular, the hens may leave the nesting area 122 and gather on the mesh floor 130. Like the open space 120, the mesh floor 130 provides an area for the hens to peck and scratch. The mesh floor 130 is formed from metal, plastic, or the like. The mesh floor 130 includes openings 134 therein that are sized to receive an egg therethrough, but are also spaced so as to support a hen. The openings 134 allow deposits such as, by way of example and not of limitation, manure, feed, litter, feathers, and eggs to pass therethrough.

A belt 136 extends below the mesh floor 130 to remove deposits that fall through openings 134 in the mesh floor 130. In one embodiment, the belt 136 extends substantially the length of the cage tower 118 and carries manure from the cage tower 118 to a collection area (not shown) positioned outside of the cage tower 118. Moreover, if a hen lays an egg outside of the nesting area 122 on the mesh floor 130, the egg is likewise collected by the belt 136 and carried to an egg collection area (not shown).

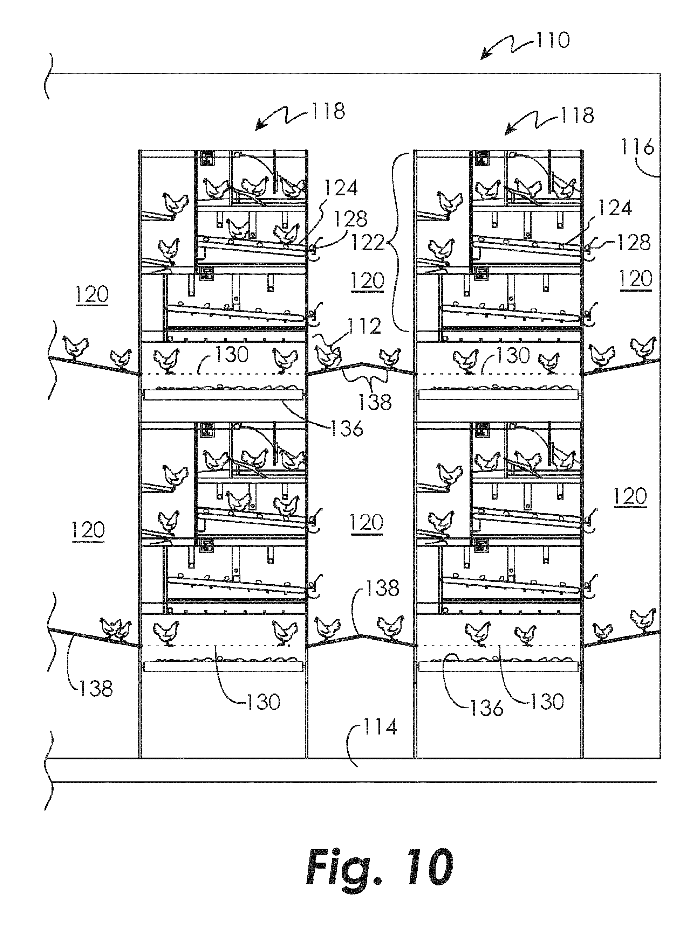

In the illustrated embodiment, a scratching floor 138 extends between the mesh floors 130 of the cage towers 118. In an embodiment having more than two cage towers 118, a scratching floor 138 may extend between any adjacent cage towers 118. In an embodiment having a single cage tower 118, a scratching floor 138 may extend from the cage tower 118. Additionally, a scratching floor 138 may extend between a cage tower 118 and an adjacent exterior wall 116. In one embodiment, the scratching floor 138 is planar with the mesh floors 130 between which the scratching floor 138 extends. Alternatively, the scratching floor 138 may be sloped toward the mesh floor 130, as illustrated in FIG. 10. The scratching floor 138 extends into the open space 120 of the aviary 110.

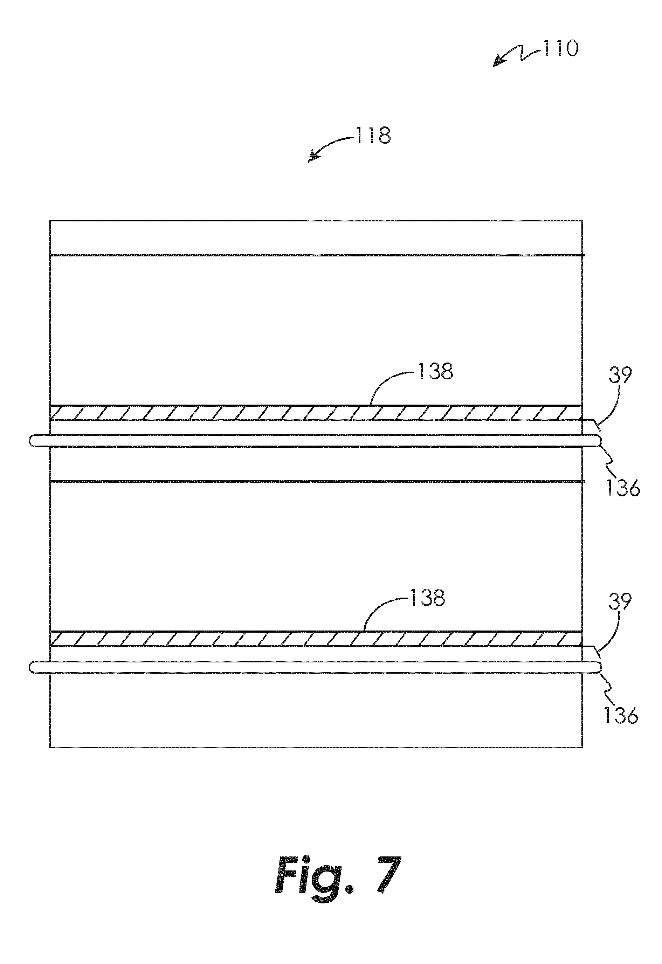

The scratching floor 138 provides yet another pecking area for the hens to utilize while they are not nesting. In particular, the scratching floor 138 provides a scratching area for the hens to scratch and peck within the aviary 110. When the birds scratch, they may scratch deposits on the scratching floor 138 through the mesh floor 130 and onto the belt 136. Accordingly, since it is common for birds to defecate in their scratching area, the scratching floor 138 becomes self-cleaning as the hens scratch. The scratching floor 138 is configured so that the deposits are scratched back to the mesh floor 130. Such configuration greatly reduces the amount of ammonia captured within the aviary 110 while also reducing the requirement for frequent cleaning of the aviary 110. Any eggs laid on the scratching floor 138 may be directed back toward the mesh floor 30 by the scratching of the hens. These eggs are then collected on the belt 136 and removed from the belt 136. In one embodiment, the eggs are removed through the use of any conventional egg finger belt 39, shown in FIGs. 5 and 7, positioned at the end of the belt 136.

It should be noted that the cage towers 118 illustrated each include at least two nesting areas 122 positioned in a stacked configuration. Each nesting area 122 has its own mesh floor 130 and belt 136 extending therebelow. Each mesh floor 130 is joined to a corresponding mesh floor 130 of the adjacent cage tower 118 by a scratching floor 138. As will be appreciated by one of skill in the art, the configuration of the nesting areas 122, mesh floors 130, belts 136, and scratching floors 138 can be repeated any number of times in a stacked configuration within the aviary 110. As well, a single belt 136 may underlie multiple nesting areas 122 in a single level in a cage tower 118.

The present invention also provides a method of constructing an aviary 110 to facilitate deposit removal. The method includes positioning a mesh floor 130 beneath a nesting area 122. The method also includes positioning a belt 136 below the mesh floor 130 to remove deposits that fall through openings 134 in the mesh floor 130. In one embodiment, the belt 136 is configured to capture eggs laid outside of the nesting area 122. The method also includes extending a scratching floor 138 from the mesh floor 130 to a mesh floor 130 of an adjacent nesting area 122. In one embodiment, the scratching floor 138 is planar with the mesh floors 130 between which the scratching floor 138 extends. Alternatively, the scratching floor 138 can be sloped toward the mesh floor 130. In one embodiment, the scratching floor 138 forms a scratching area for birds in the aviary 110. In one embodiment, the scratching area is configured for the birds to scratch deposits on the scratching floor 138 from the scratching floor 138 to the mesh floor 130 and through the mesh floor 130 to the belt 136.

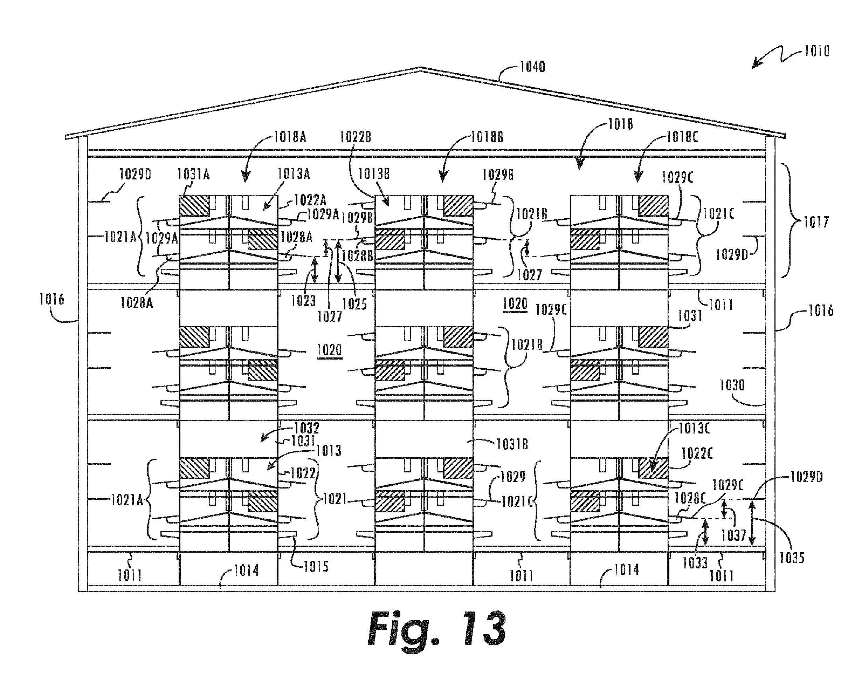

FIG. 13 illustrates an aviary 1010 having a floor 1014 and which is enclosed by exterior walls 1016 and a roof 1040. The exterior walls 1016 define an interior surface 1030. The exterior walls 1016 enclose at least one cage tower 1018 where hens may be caged. Although the illustrated embodiment includes three cage towers 1018, it should be noted that the aviary 1010 may be constructed with any number of cage towers 1018, including a single cage tower 1018. In an embodiment with multiple cage towers 1018, an aisle 1020 extends between each cage tower 1018 to provide an inspection area and space in which the birds housed in the aviary 1010 may move. In an embodiment having a single cage tower 1018, an aisle 1020 is present on at least one side of the cage tower 1018. In an embodiment, an aisle 1020 is positioned between a cage tower 1018 and the respective exterior wall 1016. At least one scratching floor 1011 extends between each at least one cage tower 1018. In an embodiment, at least one scratching floor 1011 is positioned between a cage tower 1018 and the resp ective exterior wall 1016.

Each at least one cage tower 1018 includes at least one aviary cage 1021. Each at least one aviary cage 1021 includes a first outside surface 1022 enclosing an inside area 1013. Each at least one cage tower 1018 includes an outside surface 1031 enclosing an inside area 1032. At least one bump rail 1015 extends from the outside surface 1031 and into the aisle 1020 to allow equipment to be maneuvered through the aisle 1020 without damaging the at least one cage tower 1018 or the at least one aviary cage 1021. The bump rail 1015 may be used by the birds as a perch.

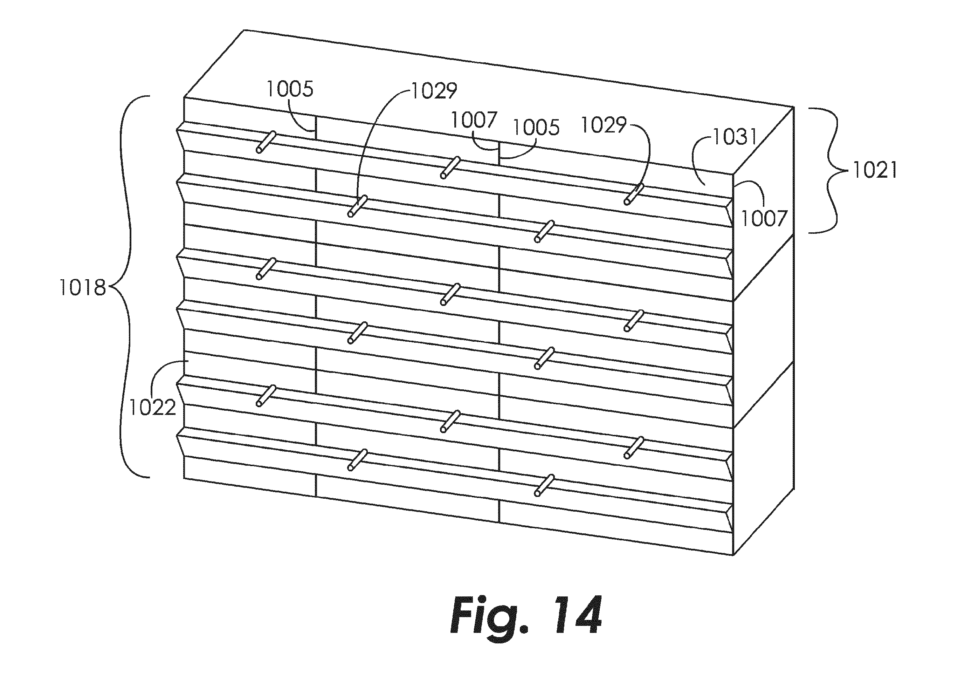

In an embodiment, the aviary 1010 includes at least two cage towers 1018A and 1018B. In an embodiment, a first cage tower 1018A includes a first aviary cage 1021A, and a second cage tower 1018B includes a second aviary cage 1021B, which second aviary cage 1021B is similar to the first aviary cage 1021A. In the illustrated embodiment, a third cage tower 1018C includes a third aviary cage 1021C, which third aviary cage 1021C is similar to the first aviary cage 1021A and the second aviary cage 1021B. In an embodiment, multiple first aviary cages 1021A are stacked on top of one another. In an embodiment, each aviary cage 1021 has a first end 1005 and a second end 1007. In an embodiment, a level in at least one cage tower 1018 is formed by placing at least two aviary cages 1021 in a row, with the first end 1005 of a first aviary cage 1021 adjacent the second end 1007 of a second aviary cage 1021, as shown in FIG. 14. In an embodiment, each first aviary cage 1021A has a first outside surface 1022A enclosing an inside area 1013A. In an embodiment, multiple second aviary cages 1021B are stacked on top of one another. In an embodiment, each second aviary cage 1021B includes an outside surface 1022B enclosing an inside area 1013B. In an embodiment, multiple third aviary cages 1021C are stacked on top of one another. In an embodiment, each third aviary cage 1021C includes an outside surface 1022C enclosing an inside area 1013C. The second aviary cage 1021B is positioned adjacent the first aviary cage 1021A and an aisle 1020 is formed therebetween. The second aviary cage 1021B is also positioned adjacent the third aviary cage 1021C and an aisle 1020 is formed therebetween.

In an embodiment, a scratching floor 1011 extends between at least one aviary cage 1021 and the interior surface 1030 of an adjacent exterior wall 1016. In an embodiment, a scratching floor 1011 extends between the first aviary cage 1021A and the second aviary cage 1021B. In an embodiment, a scratching floor 1011 extends between the second aviary cage 1021B and the third aviary cage 1021C. In an embodiment, a scratching floor 1011 extends from the outside surface 1031 of the cage tower 1018.

In an embodiment, the scratching floor 1011 is configured so that a worker can walk across the scratching floor 1011 between the cage towers 1018A and 1018B. In an embodiment, a scratching floor 1011 is configured so that a worker can walk between cage tower 1018A and the respective exterior wall 1016. In an embodiment, the scratching floor 1011 is configured so that a worker can walk across the scratching floor 1011 between the cage towers 1018C and 1018B. In an embodiment, a scratching floor 1011 is configured so that a worker can walk between cage tower 1018C and the respective exterior wall 1016. The scratching floor 1011 serves as a scratching area where hens can move freely, peck the floor with their beaks, and scratch the scratching floor 1011 with their feet. In one embodiment, the scratching floor 1011 is sloped (not shown) toward the respective aviary cage 1021 to allow deposits to move back toward the aviary cage 1021. In an embodiment including a belt positioned under each aviary cage 1021, the scratching floor 1011 is sloped toward the respective belt to allow deposits to move back toward the belt.

The first outside surface 1022 of the at least one aviary cage 1021 includes a first perch 1029 extending into the aisle 1020. In an embodiment, each perch 1029 may extend a portion of the length of the at least one cage tower 1018. In an embodiment, each perch 1029 may extend substantially the entire length of the at least one cage tower 1018. In an embodiment, the interior surface 1030 of the exterior wall 1016 includes a second perch 1029D extending into the aisle 1020. In an embodiment, each perch 1029D may extend a portion of the length of the interior surface 1030 of the exterior wall 1016 of the aviary 1010. In an embodiment, each perch 1029D may extend substantially the entire length of the interior surface 1030 of the exterior wall 1016.

In some embodiments, the perch 1029, 1029D is solid. In one embodiment, the perch 1029, 1029D may be square. In one embodiment, the perch 1029, 1029D may be round. In one embodiment, a square perch 1029, 1029D may have a width of¾ inches to 2 inches. In one embodiment, a round perch 1029, 1029D may have a diameter of¾ inches to 2 inches. The width or diameter of the perch 1029, 1029D is configured to allow a hen to stand on the perch 1029, 1029D.

Referring to an embodiment, a first perch 1029A extends from the first outside surface 1022A and is positioned above a first egg conveyor 1028A that extends from the first outside surface 1022A and that extends substantially the length of the first cage tower 1018A. When hens lay their eggs, the eggs may be collected in the first egg conveyor 1028A. The first egg conveyor 1028A carries the eggs from the aviary cage 1021A to a collection area. The first perch 1029A extends into the aisle 1020 at a first vertical distance 1023 from the scratching floor 1011. A second perch 1029B extends from the second outside surface 1022B and is positioned above a second egg conveyor 1028B that extends from the second outside surface 1022B and that extends substantially the length of the second cage tower 1018B. The second egg conveyor 1028B carries the eggs from the aviary cage 1021B to a collection area. The second perch 1029B extends into the aisle 1020 at a second vertical distance 1025 from the scratching floor 1011. The first vertical distance 1023 is not equal to the second vertical distance 1025.

In an embodiment, each of the perches 1029A, 1029B may extend a portion of the length of the respective cage tower 1018A, 1018B. In an embodiment, each of the perches 1029A, 1029B may extend the entire length of the respective cage tower 1018A, 1018B. In some embodiments, the perches 1029A, 1029B are solid. In one embodiment, the perches 1029A, 1029B may be square. In one embodiment, the perches 1029A, 1029B may be round. In one embodiment, the perches 1029A, 1029B may be square or round. The width or diameter of the perches 1029A, 1029B is configured to allow a hen to stand on the perches 1029A, 1029B.

In an embodiment, the first vertical distance 1023 and the second vertical distance 1025 define a third vertical distance 1027. The third vertical distance 1027 is configured to permit a bird to hop from the first perch 1029A to the second perch 1029B or vice versa.

It will be understood by one of ordinary skill in the art of aviary design that the offset cage and perch design may be replicated for as many cage tower combinations as are desired in an aviary 1010. In each case of an adjacent set of cage towers 1018, the perches 1029 of each cage tower 1018 should be offset from the perches 1029 of the adjacent cage tower 1018 by the third vertical distance 1027 to enable a bird to hop from perch 1029 to perch 1029 through aisle 1020 in a ladder-like manner.

In an embodiment, the first aviary cage 1021A may include multiple first egg conveyors 1028A, and the second aviary cage 1021B may include multiple second egg conveyors 1028B, wherein the first egg conveyors 1028A and the second egg conveyors 1028B are staggered vertically relative to each other along the first and second outside surfaces 1031A, 1031B of the cage towers 1018A, 1018B. In an embodiment, the first aviary cage 1021A may include multiple first perches 1029A, and the second aviary cage 1021B may include multiple second perches 1029B, wherein the first perches 1029A and the second perches 1029B are staggered vertically relative to each other along the first and second outside surfaces 1022A, 1022B of the aviary cages 1021A, 1021B.

In the illustrated embodiments, the scratching floors 1011 form similarly configured levels 1017 in the aviary 1010, wherein each level 1017 may be accessed by a worker. A hen may walk, peck, scratch, socialize, sleep, and lay eggs, as the bird desires, in the inside area 1013 and the inside area 1032. These same hen activities can be carried out on the at least one scratching floor 1011. The at least one aviary cage 1021 may house a specific group of birds or it may be open to birds from other aviary cages 1021. In an embodiment, the cage tower 1018 may be configured to allow the birds to move freely up and down the cage tower 1018. In an embodiment, the cage tower 1018 may be configured to keep birds in the aviary 1010 segregated by vertical level 1017. In an embodiment, the cage tower 1018 may be configured to keep birds segregated horizontally within a level 1017 of the cage tower 1018. When the hens lay their eggs, the eggs may be collected in egg conveyors 1028 that extend substantially the length of the cage tower 1018. The egg conveyor 1028 carries the eggs from the aviary cage 1021 to a collection area.

Each perch 1029 and each bump rail 1015 provide yet other areas for the hens to utilize when they are not confined to the at least one aviary cage 1021. In particular, hens may sit, hop, walk, scratch, socialize, sleep, and lay eggs from or on any perch 1029 and/or any bump rail 1015.

When a first perch 1029A and a second perch 1029B are included in an embodiment, the first vertical distance 1023 and the second vertical distance 1025 define a third vertical distance 1027, which third vertical distance is configured to facilitate the behavior of birds to hop from one surface to another and thereby create a ladder effect between the outside surfaces 1022A, 1022B of the aviary cages 1021A, 1021B and, concomitantly, the outside surfaces 1031A, 1031B of the cage towers 1018A, 1018B.

In one embodiment, an angle formed between the first perch 1029A and the second perch 1029B is no greater than 45°, which facilitates the behavior of birds to hop or fly from one surface to another. In one embodiment, a plurality of first and second perches 1029A, 1029B are spaced apart about the outside surfaces 1031A, 1031B of the respective cage towers 1018A, 1018B. In an embodiment, each perch 1029A, 1029B extends into the aisle 1020 to provide usable vertical space that creates additional habitable cubic inches for the birds, thereby enabling the aviary 1010 to be considered cage free.

In an embodiment, the first aviary cage 1021A may include multiple first perches 1029A, corresponding to the number of first egg conveyors 1028A, and the second aviary cage 1021B may include multiple second perches 1029B, corresponding to the number of second egg conveyors 1028B, wherein the first perches 1029A and the second perches 1029B are staggered in relation to each other along the first and second outside surfaces 1031A, 1031B of the cage towers 1018A, 1018B. In one embodiment, the first perches 1029A and the second perches 1029B are staggered vertically on the first and second outside surfaces 1031A, 1031B of the cage towers 1018A, 1018B. In one embodiment, the first perches 1029A and the second perches 1029B are staggered horizontally along the first and second outside surfaces 1031A, 1031B of the cage towers 1018A, 1018B.

In the illustrated embodiment, a cage tower 1018C is positioned adjacent the exterior wall 1016 and includes an aviary cage 1021C adjacent the scratching floor 1011. An egg conveyor 1028C extends from an outside surface 1022C of the aviary cage 1021C and into the aisle 1020. A perch 1029C extends from the outside surface 1022C of the aviary cage 1021C and is positioned above the egg conveyor 1028C. A perch 1029D extends from the interior surface 1030 of the exterior wall 1016 and into the aisle 1020.

In an embodiment, a perch 1029C is elevated at a first vertical distance 1033 from the scratching floor 1011, and a perch 1029D is positioned at a second vertical distance 1035 from the scratching floor 1011. In an embodiment, the first vertical distance 1033 and the second vertical distance 1035 define a third vertical distance 1037, which third vertical distance 1037 is configured to facilitate the behavior of birds to hop from one surface to another and thereby create a ladder effect between the aviary cage 1021C and the exterior wall 1016. In one embodiment, an angle formed between the perch 1029C and the perch 1029D is no greater than 45°, which configuration facilitates the behavior of birds to hop from one surface to another. In one embodiment, a plurality of perches 1029C is spaced apart about the outside surface 1031C of the cage tower 1018C. In one embodiment, a plurality of perches 1029D is spaced apart about the interior surface 1030 of the exterior wall 1016. Each perch 1029C, 1029D extends into the aisle 1020 to provide usable vertical space that creates additional habitable cubic inches for the birds, thereby enabling the aviary 1010 to be considered cage free.

As illustrated in Figure 14, each of the perches 1029 may be offset horizontally with respect to one another. The perches 1029 are offset in a spaced apart arrangement to accommodate the behavior of birds to hop from one surface to another and thereby create a ladder effect on the outside surface 1022 of the aviary cage 1021 and, concomitantly, the outside surface 1031 of the cage tower 1018. In an embodiment (not shown), the perches 1029 are sloped downward from the cage tower 1018. In an embodiment, the perches 1029 extend from the outside surface 1022 parallel to the scratching floor 1011. In an embodiment (not shown), the perches 1029 may extend upward from the outside surface 1022 relative to the cage tower 1018.

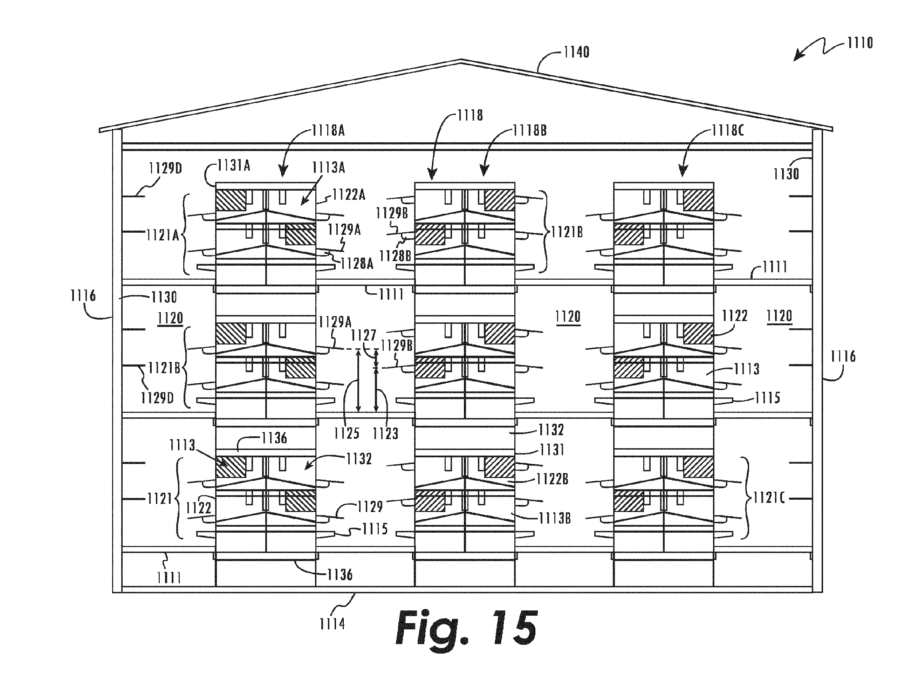

FIG. 15 illustrates an aviary 1110 having a floor 1114, exterior walls 1116, and a roof 1140. The exterior walls 1116 define an interior surface 1130. The exterior walls 1116 enclose at least one cage tower 1118 where hens may be caged. In an embodiment with multiple cage towers 1118, an aisle 1120 extends between each cage tower 1118 to provide an inspection area and space in which the birds housed in the aviary 1110 may move. In an embodiment having a single cage tower 1118, an aisle 1120 is present on at least one side of the cage tower 1118. In an embodiment, an aisle 1120 is positioned between an end tower 1118 and the respective exterior wall 1116. At least one scratching floor 1111 extends between each at least one cage tower 1118. In an embodiment, at least one scratching floor 1111 is positioned between an end cage tower 1118 and the respective exterior wall 1116.

Each at least one cage tower 1118 includes at least one aviary cage 1121. Each at least one aviary cage 1121 includes a first outside surface 1122 enclosing an inside area 1113. Each at least one cage tower 1118 includes an outside surface 1131 enclosing an inside area 1132. At least one bump rail 1115 extends from the outside surface 1131 and into the aisle 1120 to allow equipment to be maneuvered through the aisle 1120 without damaging the at least one cage tower 1118 or the at least one aviary cage 1121. The bump rail 1115 may be used by the birds as a perch.

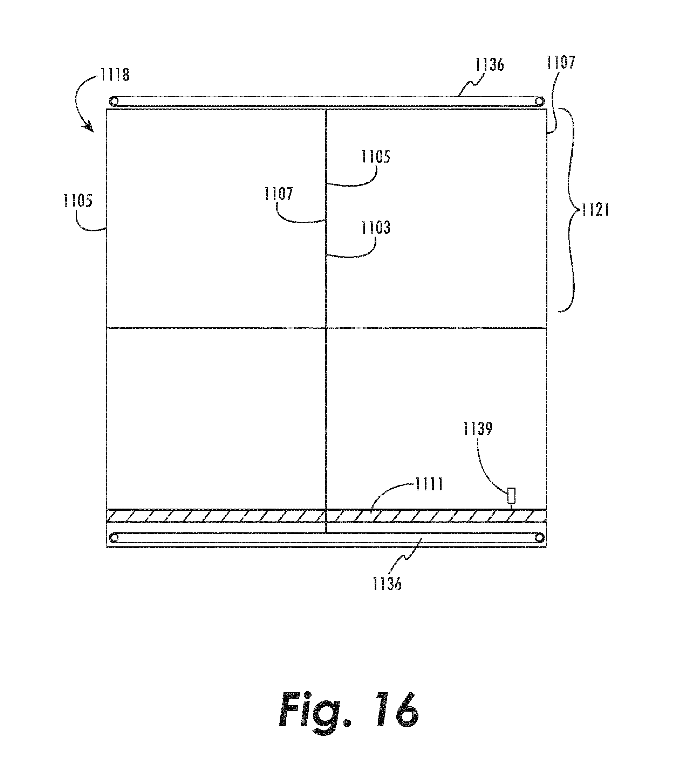

FIGs. 15 and 16 illustrate at least one cage tower 1118. In an embodiment, the aviary 1110 includes at least two cage towers 1118A, 1118B. In an embodiment, a first cage tower 1118A includes a first aviary cage 1121A, and a second cage tower 1118B includes a second aviary cage 1121B, which second aviary cage 1121B is similar to the first aviary cage 1121A. In the illustrated embodiment, a third cage tower 1118C includes a third aviary cage 1121C, which third aviary cage 1121C is similar to the first aviary cage 1121A and the second aviary cage 1121B. In an embodiment, multiple first aviary cages 1121A are stacked on top of one another. In an embodiment, aviary cage 1121 has a first end 1105 and a second end 1107. In an embodiment, a level in at least one cage tower 1118 is formed by placing at least two aviary cages 1121 in a row, with the first end 1105 of a first aviary cage 1121 adjacent the second end 1107 of a second aviary cage 1121. In an embodiment, a divider 1103 may be positioned between the adjacent aviary cages 1121. For example, the divider 1103 may be positioned at the juncture of the first end 1105 of the first aviary cage 1121 and the second end 1107 of the second aviary cage 1121. In that embodiment, the divider 1103 prevents birds from roaming between the first aviary cage 1121 and the second aviary cage 1121. In another embodiment (not shown), a gap may be positioned between the first end 1105 of the first aviary cage 1121 and the second end 1107 of the second aviary cage 1121. In that embodiment, the gap maybe sized to prevent birds from traversing the gap and roaming between the first aviary cage 1121 and the second aviary cage 1121.

In an embodiment, each first aviary cage 1121A has a first outside surface 1122A enclosing an inside area 1113A. In an embodiment, multiple second aviary cages 1121B are stacked on top of one another. In an embodiment, each second aviary cage 1121B includes a second outside surface 1122B enclosing an inside area 1113B. In an embodiment, multiple third aviary cages 1121C are stacked on top of one another. In an embodiment, each third aviary cage 1121C includes a third outside surface 1122C enclosing an inside area 1113C. The second aviary cage 1121B is positioned adjacent the first aviary cage 1121A and an aisle 1120 is formed therebetween. The second aviary cage 1121B is also positioned adjacent the third aviary cage 1121C and an aisle 1120 is formed therebetween.

In an embodiment, a scratching floor 1111 extends between at least one aviary cage 1121 and the interior surface 1130 of an adjacent exterior wall 1116. In an embodiment, a scratching floor 1111 extends between the first aviary cage 1121A and the second aviary cage 1121B. In an embodiment, a scratching floor 1111 extends between the second aviary cage 1121B and the third aviary cage 1121C. In an embodiment, a scratching floor 1111 extends from the outside surface 1131 of the cage tower 1118.

In an embodiment, the scratching floor 1111 is configured so that a worker can walk across the scratching floor 1111 between the cage towers 1118A and 1118B. In an embodiment, a scratching floor 1111 is configured so that a worker can walk between cage tower 1118A and the respective exterior wall 1116. In an embodiment, the scratching floor 1111 is configured so that a worker can walk across the scratching floor 1111 between the cage towers 1118C and 1118B. In an embodiment, a scratching floor 1111 is configured so that a worker can walk between cage tower 1118C and the respective exterior wall 1116. The scratching floor 1111 serves as a scratching area where hens can move freely, peck the floor with their beaks, and scratch the scratching floor 1111 with their feet. In one embodiment, the scratching floor 1111 is sloped (not shown) toward the respective aviary cage 1121 to allow deposits to move back toward the aviary cage 1121. In an embodiment including a belt 1136 positioned under each aviary cage 1121, the scratching floor 1111 is sloped toward the respective belt 1136 to allow deposits to move back toward the belt 1136.

The first outside surface 1122 of the at least one aviary cage 1121 includes a first perch 1129 extending into the aisle 1120. In an embodiment, each perch 1129 may extend a portion of the length of the at least one cage tower 1118. In an embodiment, each perch 1129 may extend substantially the length of the at least one cage tower 1118. In an embodiment, the interior surface 1130 of the exterior wall 1116 includes a second perch 1129D extending into the aisle 1120. In an embodiment, each perch 1129D may extend a portion of the length of the interior surface 1130 of the exterior wall 1116 of the aviary 1110. In an embodiment, each perch 1129D may extend substantially the length of the interior surface 1130 of the exterior wall 1116.

Referring to an embodiment, a first perch 1129A extends from the first outside surface 1122A of the first aviary cage 1121A and is positioned above a first egg conveyor 1128A that extends from the first outside surface 1122A and that extends substantially the length of the first cage tower 1118A. When the hens lay their eggs, the eggs may be collected in the first egg conveyor 1128A. The first egg conveyor 1128A carries the eggs from the aviary cage 1121A to a collection area. The first perch 1129A extends into the aisle 1120 at a first vertical distance 1123 from the scratching floor 1111. A second perch 1129B extends from the second outside surface 1122B of the second aviary cage 1121B and is positioned above a second egg conveyor 1128B that extends from the second outside surface 1122B and that extends substantially the length of the second cage tower 1118B. The second egg conveyor 1128B carries the eggs from the aviary cage 1121B to a collection area. The second perch 1129B extends into the aisle 1120 at a second vertical distance 1125 from the scratching floor 1111. The first vertical distance 1123 is not equal to the second vertical distance 1125.

In an embodiment, the first vertical distance 1123 and the second vertical distance 1125 define a third vertical distance 1127. The third vertical distance 1127 is configured to permit a bird to hop from the first perch 1129A to the second perch 1129B or vice versa.

It will be understood by one of ordinary skill in the art of aviary design that the offset cage and perch design may be replicated for as many cage tower combinations as are desired in an aviary 1110. In each case of an adjacent set of cage towers 1118, the perches 1129 of each cage tower 1118 should be offset from the perches 1129 of the adjacent cage tower 1118 by the third vertical distance 1127 to enable a bird to hop from perch 1129 to perch 1129 through aisle 1120 in a ladder-like manner.

In an embodiment, the first cage tower 1118A may include multiple first egg conveyors 1128A, and the second cage tower 1118B may include multiple second egg conveyors 1128B, wherein the first egg conveyors 1128A and the second egg conveyors 1128B are staggered vertically relative to each other along the first and second outside surfaces 1131A, 1131B of the cage towers 1118A, 1118B. In an embodiment, the first cage tower 1118A may include multiple first perches 1129A, and the second cage tower 1118B may include multiple second perches 1129B, wherein the first perches 1129A and the second perches 1129B are staggered vertically relative to each other along the first and second outside surfaces 1131A, 1131B of the cage towers 1118A, 1118B.

When a first perch 1129A and a second perch 1129B are included in an embodiment, the first vertical distance 1123 and the second vertical distance 1125 define a third vertical distance 1127, which third vertical distance is configured to facilitate the behavior of birds to hop from one surface to another and thereby create a ladder effect between the outside surfaces 1122A, 1122B of the aviary cages 1121A, 1121B and, concomitantly, the outside surfaces 1131 A, 1131B of the cage towers 1118A, 1118B.

At least one belt 1136 extends through each cage tower 1118 to remove a deposit from at least part of the cage tower 1118. In one embodiment, the belt 1136 extends through each cage tower 1118 substantially the length of the cage tower 1118. In one embodiment, the belt 1136 extends approximately 400 feet along the length of each cage tower 1118. In one embodiment, the belt 1136 carries deposits from the cage tower 1118 to a collection area (not shown) positioned outside of the cage tower 1118.

A scratching floor 1111 extends between the first aviary cage 1121A and the second aviary cage 1121B. The scratching floor 1111 is oriented with respect to and positioned adjacent to a respective belt 1136. In one embodiment, the scratching floor 1111 is planar with the respective adjacent belt 1136. In one embodiment, the scratching floor 1111 is sloped to allow deposits to move back toward the respective belt 1136. When the birds scratch the scratching floor 1111, they scratch much of the deposits made on the scratching floor 1111 onto the belt 1136. Accordingly, since it is common for birds to defecate in a scratching area, the scratching floor 1111 becomes relatively self-cleaning as the hens scratch. The scratching floor 1111 is configured so that the deposits are scratched back to the respective belt 1136. Such configuration reduces the required frequency for cleaning of the aviary 1110. Any eggs laid on the scratching floor 1111 may be directed back toward the belt 1136 by the scratching of the hens. These eggs are then collected from the belt 1136 and removed from the belt 1136.

In one embodiment, the belt 1136 forms a floor of the aviary cage 1121. Accordingly, the birds are allowed to move freely and walk on the belt 1136.

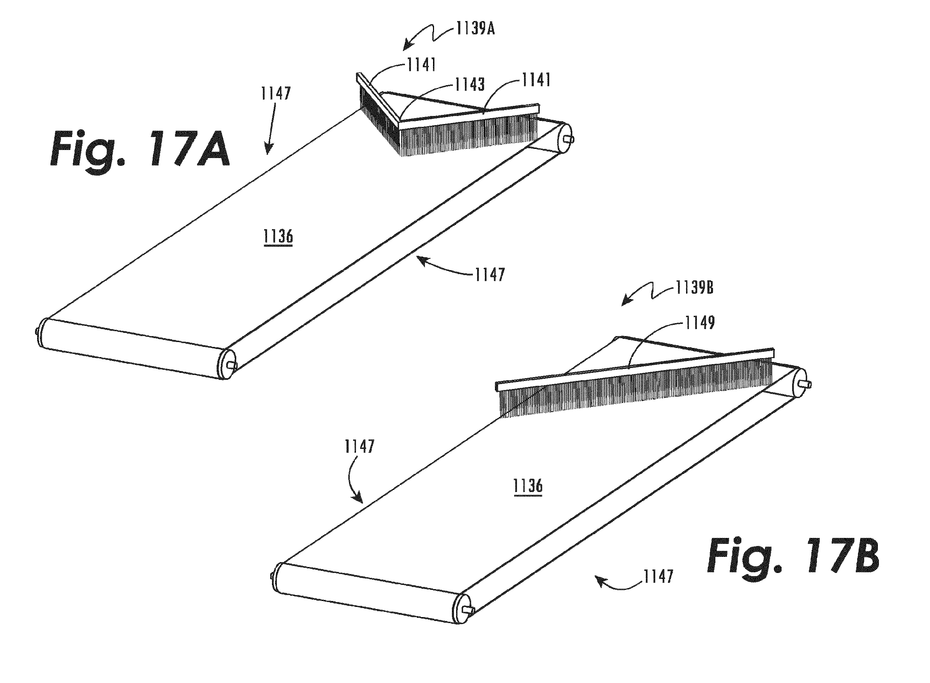

In one embodiment, eggs are removed from the belt 1136 through the use of an egg remover 1139 positioned at the end of the belt 1136. FIG. 17A shows one embodiment of an egg remover 1139A. In the illustrated embodiment, the egg remover 1139A includes two brushes 1141 that meet at a point 1143. From the point 1143, each brush 1141 extends toward a side 1147 of the belt 1136. In particular, each brush 1141 extends at an angle toward a side 1147 of the belt 1136 in the direction of movement of the belt 1136, wherein the brushes 1141 extend over the full width of the belt 1136. In an embodiment, the brushes 1141 are round. In that embodiment, the brushes 1141 rotate in a direction that moves material to at least one side 1147 of the belt 1136. In one embodiment, the brush 1141 may be an auger-shaped brush. In an embodiment, the brushes 1141 are flat and divert the eggs toward a side 1147 of the belt 1136. Additionally, in one embodiment, a finger belt (not shown) is utilized to move the eggs to a side 1147 of the belt 1136. In yet another embodiment, any egg conveying apparatus, including but not limited to a roller having a flange, can be utilized to move the eggs to a side 1147 or both sides 1147 of the belt 1136.

FIG. 17B shows another embodiment of an egg remover 1139B. The egg remover 1139B includes a single brush 1149 that extends the width of the belt 1136 at an angle from one side 1147 of the belt 1136 to the other side 1147 of the belt 1136. In an embodiment, the brush 1149 is round. In that embodiment, the brush 1149 rotates in a direction that moves material to the downstream end of the brush 1149 with respect to the direction of movement of the belt 1136. In an embodiment, the brush 1149 is flat and moves material to the downstream end of the brush 1149 with respect to the direction of movement of the belt 1136.

Each brush 1141, 1149 is formed from a material having a rigidity that enables the brush 1141, 1149 to move eggs toward at least one side 1147 of the belt 1136. However, the rigidity is such that the brush 1141, 1149 is incapable of moving deceased birds. Rather, deceased birds pass through and/or under the brush 1141, 1149 and are deposited at an end of the belt 1136. Additionally, the brush 1141, 1149 is positioned above the belt 1136 to enable deposits other than eggs to pass under the brush 1141, 1149.

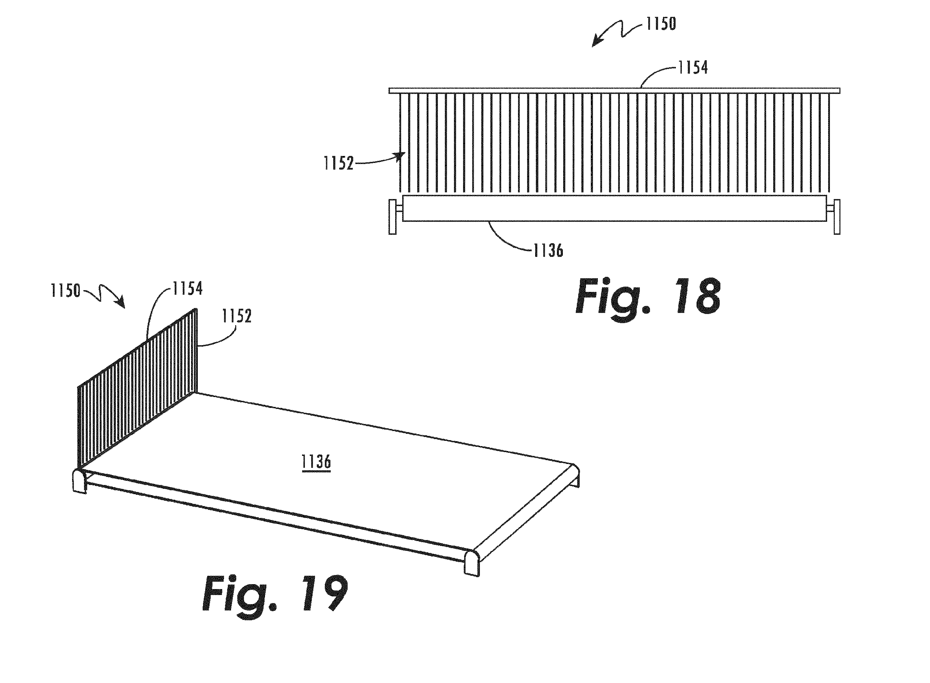

In one embodiment, illustrated in FIGs. 18 and 19, at least one gate 1150 is positioned along at least one belt 1136 to permit deposits on the belt 1136 to pass thereunder and/or therethrough and to prevent birds from traveling beyond the gate 1150. In one embodiment, the gate 1150 includes openings 1152 operative to enable deposits to pass therethrough. In an embodiment, the gate 1150 includes overlapping plastic or cloth strips operative to enable deposits to pass therethrough and/or thereunder and to prevent birds from traveling beyond the gate 1150. Additionally, in one embodiment, the gate 1150 includes a hinge 1154 operative to rotate the gate 1150 and thereby enable larger deposits, such as eggs and dead animals, to move past the gate 1150. In an embodiment, an electric fence may be positioned on the gate 1150 to prevent live birds from entering the gate 1150. In an embodiment, an electric fence may be spaced apart from the gate 1150 to prevent birds from reaching and entering the gate 1150. In embodiments including at least one gate 1150, birds are prevented from leaving a part of the aviary 1110 while deposits are permitted to travel away from that part of the aviary 1110.

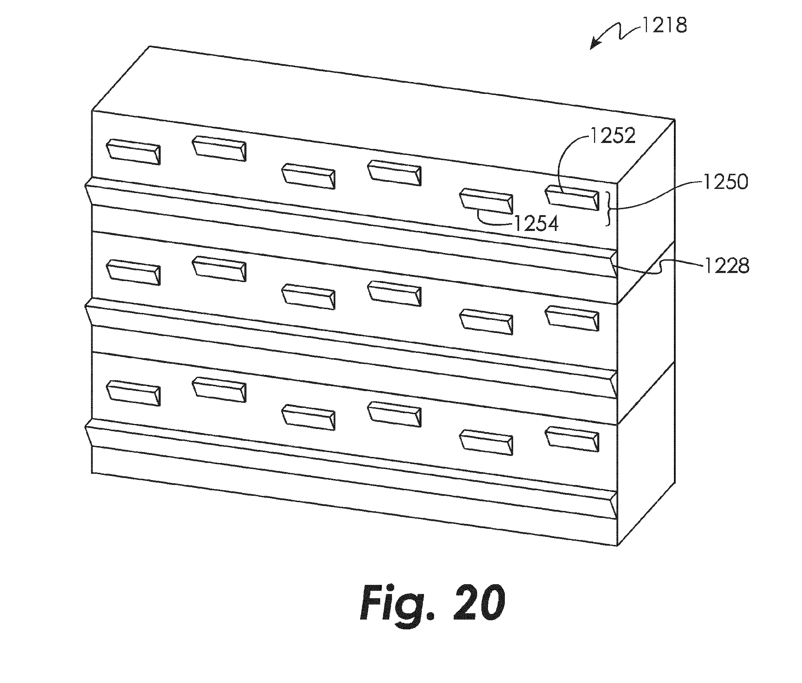

In one embodiment shown in FIG. 20, a plurality of perches 1250 is spaced apart about an outside of a cage tower 1218. First perches 1252 and second perches 1254 may be offset horizontally with respect to one another. In an embodiment, the first perches 1252 and the second perches 1254 may be offset vertically with respect to one another. The perches 1250, if they are offset from each other, may be offset by a hopping distance for a bird. The perches 1250 may be positioned above and below the egg conveyors 1228. Each perch 1250 extends into an aisle formed between adjacent cage towers 1218 or into an aisle formed between a cage tower 1218 and an exterior wall 1216. The usable vertical space created by the perches 1250 provides additional habitable cubic inches for the birds.

In one embodiment, a method of constructing an aviary 1010 is provided. The method includes positioning a first cage tower 1018A adjacent to a second cage tower 1018B, wherein the first cage tower 1018A includes a first aviary cage 1021A, and the second cage tower 1018B includes a second aviary cage 1021B. In an embodiment, the method may include stacking multiple first aviary cages 1021A on top of one another. In an embodiment, each aviary cage 1021 has a first end 1005 and a second end 1007. In an embodiment, the method may include forming a level in at least one cage tower 1018 by placing at least two aviary cages 1021 in a row, with the first end 1005 of a first aviary cage 1021 adjacent the second end 1007 of a second aviary cage 1021. In an embodiment, each first aviary cage 1021A includes a first outside surface 1022A enclosing an inside area 1013A. In an embodiment, the method may include stacking multiple second aviary cages 1121B on top of one another. In an embodiment, each second aviary cage 1021B includes a second outside surface 1022B enclosing an inside area 1013B. The method may include extending an aisle 1020 between the first aviary cage 1021A and the second aviary cage 1021B.

In an embodiment, the method may include extending a scratching floor 1011 from a first aviary cage 1021A through the aisle 1020 to a second aviary cage 1021B. The method may include extending a first perch 1029A from the first outside surface 1022A of the first aviary cage 1021A and into the aisle 1020 at a first vertical distance 1023 from a scratching floor 1011. The method may include extending a second perch 1029B from the second outside surface 1022B of the second aviary cage 1021B and into the aisle 1020 at a second vertical distance 1025 from the scratching floor 1011. In an embodiment, the first vertical distance 1023 and the second vertical distance 1025 define a third vertical distance 1027 in a spaced apart arrangement to accommodate the behavior of birds to hop from one surface to another and thereby create a ladder effect between the outside surfaces 1022A, 1022B of the aviary cages 1021A and 1021B.

Each of the first cage tower 1018A and the second cage tower 1018B may include at least one belt 1136 positioned within the inside area 1013A, 1013B. The method further includes positioning the first perch 1029A and the second perch 1029B adjacent the respective belt 1136. In one embodiment, the respective belt 1136 forms at least one floor of each cage tower 1018A, 1018B. The at least one belt 1136 is configured to remove a deposit from at least part of the respective cage tower 1018A, 1018B. An egg remover 1139 may be positioned at an end of each belt 1136 to remove eggs from the belt 1136. The egg remover 1139 may include at least one brush 1149 to direct material to at least one side 1147 of the belt 1136.

In an embodiment, the method may include positioning a gate 1150 in relation to each belt 1136 to prevent animals from leaving the respective aviary cage 1021A, 1021B. The gate 1150 may include openings 1152 to enable debris to pass therethrough. Additionally, the gate 1150 may include a hinge 1154 to rotate the gate 1150 and thereby enable eggs and dead animals to move past the gate 1150.

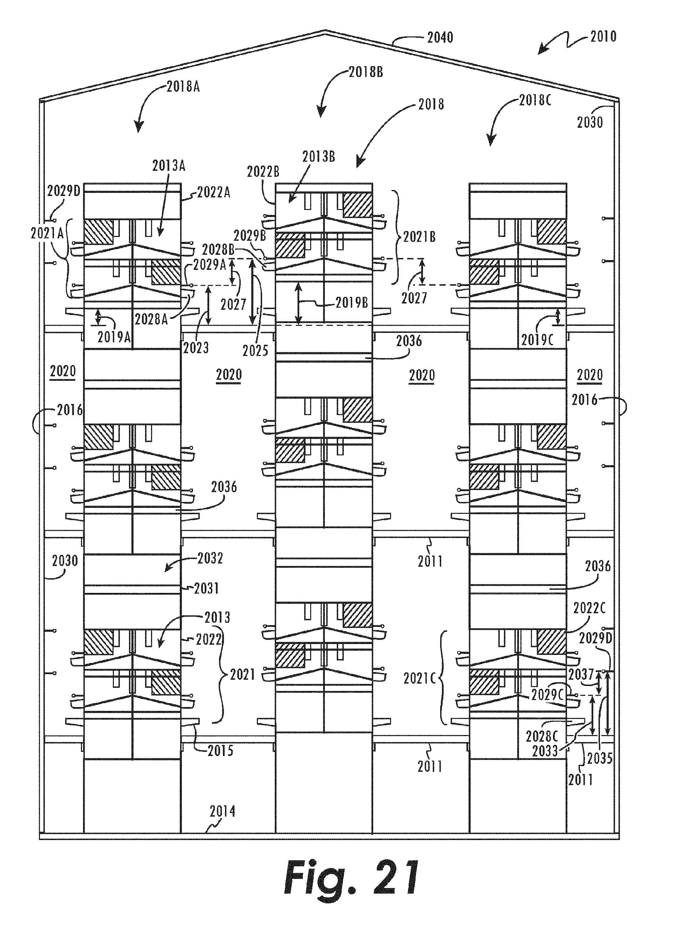

FIG. 21 illustrates an aviary 2010 having a floor 2014, which aviary 2010 is enclosed by exterior walls 2016 and a roof 2040. The exterior walls 2016 define an interior surface 2030. The exterior walls 2016 enclose at least one cage tower 2018 where hens may be caged. Although the illustrated embodiment shows three cage towers 2018, it should be noted that the aviary may be constructed with any number of cage towers 2018, including a single cage tower 2018. In an embodiment with multiple cage towers 2018, an aisle 2020 extends between each cage tower 2018 to provide an inspection area and space in which the birds housed in the aviary 2010 may move. In an embodiment, an aisle 2020 is positioned between a cage tower 2018 and the respective exterior wall 2016. In an embodiment, at least one scratching floor 2011 extends between each at least one cage tower 2018. In an embodiment, at least one scratching floor 2011 is positioned between a cage tower 2018 and the respective exterior wall 2016.

Each at least one cage tower 2018 includes at least one aviary cage 2021. Each at least one aviary cage 2021 includes a first outside surface 2022 enclosing an inside area 2013. Each at least one cage tower 2018 includes an outside surface 2031 enclosing an inside area 2032. At least one bump rail 2015 extends from the outside surface 2031 and into the aisle 2020 to allow equipment to be maneuvered through the aisle 2020 without damaging the at least one cage tower 2018 or the at least one aviary cage 2021. The bump rail 2015 may be used by the birds as a perch.

In an embodiment, a first cage tower 2018A includes a first aviary cage 2021A, and a second cage tower 2018B includes a second aviary cage 2021B, which second aviary cage 2021B is similar to the first aviary cage 2021A. In the illustrated embodiment, a third cage tower 2018C includes a third aviary cage 2021C, which third aviary cage 2021C is similar to the first aviary cage 2021A and the second aviary cage 2021B. In an embodiment, multiple first aviary cages 2021A are stacked on top of one another. In an embodiment, each first aviary cage 2021A has a first outside surface 2022A enclosing an inside area 2013A. In an embodiment, multiple second aviary cages 2021B are stacked on top of one another. In an embodiment, each second aviary cage 2021B includes a second outside surface 2022B enclosing an inside area 2013B. In an embodiment, multiple third aviary cages 2021C are stacked on top of one another. In an embodiment, each third aviary cage 2021C includes a third outside surface 2022C enclosing an inside area 2013C. The second aviary cage 2021B is positioned adjacent the first aviary cage 2021A and an aisle 2020 is formed therebetween. The second aviary cage 2021B is also positioned adjacent the third aviary cage 2021C and an aisle 2020 is formed therebetween. In an embodiment, the second aviary cage 2021B is positioned at a height 2019B from the scratching floor 2011 that is greater than a height 2019A of the first aviary cage 2021A from the scratching floor 2011. In an embodiment, the second aviary cage 2021B is positioned at a height 2019B from the scratching floor 2011 that is greater than a height 2019C of the third aviary cage 2021C from the scratching floor 2011. In an embodiment, the height 2019A is substantially equal to the height 2019C. In another embodiment, the height 2019A is not equal to the height 2019C.

In an embodiment, a scratching floor 2011 extends between at least one aviary cage 2021 and the interior surface 2030 of an adjacent exterior wall 2016. In an embodiment, a scratching floor 2011 extends between the first aviary cage 2021A and the second aviary cage 2021B. In an embodiment, a scratching floor 2011 extends between the second aviary cage 2021B and the third aviary cage 2021C. In an embodiment, a scratching floor 2011 extends from the outside surface 2031 of the cage tower 2018.

In an embodiment, the scratching floor 2011 is configured so that a worker can walk across the scratching floor 2011 between the cage towers 2018A and 2018B. In an embodiment, a scratching floor 2011 is configured so that a worker can walk between cage tower 2018A and the respective exterior wall 2016. In an embodiment, the scratching floor 2011 is configured so that a worker can walk across the scratching floor 2011 between the cage towers 2018C and 2018B. In an embodiment, a scratching floor 2011 is configured so that a worker can walk between cage tower 2018C and the respective exterior wall 2016. The scratching floor 2011 serves as a scratching area where hens can move freely, peck the floor with their beaks, and scratch the scratching floor 2011 with their feet. In one embodiment, the scratching floor 2011 is sloped (not shown) toward the respective aviary cage 2021 to allow deposits to move back toward the aviary cage 2021. In an embodiment including a belt 2036 positioned under each aviary cage 2021, the scratching floor 2011 is sloped toward the respective belt 2036 to allow deposits to move back toward the belt 2036.

The first outside surface 2022 of the at least one aviary cage 2021 includes a first perch 2029 extending into the aisle 2020. In an embodiment, each perch 2029 may extend a portion of the length of the at least one cage tower 2018. In an embodiment, each perch 2029 may extend substantially the length of the at least one cage tower 2018. In an embodiment, the interior surface 2030 of the exterior wall 2016 includes a second perch 2029D extending into the aisle 2020. In an embodiment, each perch 2029D may extend a portion of the length of the interior surface 2030 of the exterior wall 2016 of the aviary 2010. In an embodiment, each perch 2029D may extend substantially the length of the interior surface 2030 of the exterior wall 2016.

Referring to an embodiment, a first perch 2029A extends from the first outside surface 2022A of the first aviary cage 2021A and is positioned above a first egg conveyor 2028A that extends from the first outside surface 2022A and that extends substantially the length of the first cage tower 2018A. When hens lay their eggs, the eggs may be collected in the first egg conveyor 2028A. The first egg conveyor 2028A carries the eggs from the aviary cage 2021A to a collection area. The first perch 2029A extends into the aisle 2020 at a first vertical distance 2023 from the scratching floor 2011. A second perch 2029B extends from the second outside surface 2022B of the second aviary cage 2021B and is positioned above a second egg conveyor 2028B that extends from the second outside surface 2022B and that extends substantially the length of the second cage tower 2018B. The second egg conveyor 2028B carries the eggs from the aviary cage 2021B to a collection area. The second perch 2029B extends into the aisle 2020 at a second vertical distance 2025 from the scratching floor 2011. The first vertical distance 2023 is not equal to the second vertical distance 2025.

In an embodiment, the first vertical distance 2023 and the second vertical distance 2025 define a third vertical distance 2027. The third vertical distance 2027 is configured to permit a bird to hop from the first perch 2029A to the second perch 2029B or vice versa.

It will be understood by one of ordinary skill in the art of aviary design that the offset cage and perch design may be replicated for as many cage tower combinations as are desired in an aviary 2010. In each case of an adjacent set of cage towers 2018, the perches 2029 of each cage tower 2018 should be offset from the perches 2029 of the adjacent cage tower 2018 by the third vertical distance 2027 to enable a bird to hop from perch 2029 to perch 2029 through aisle 2020 in a ladder-like manner. In an embodiment, the first cage tower 2018A may include multiple first egg conveyors 2028A, and the second cage tower 2018B may include multiple second egg conveyors 2028B, wherein the first egg conveyors 2028A and the second egg conveyors 2028B are staggered vertically relative to each other along the first and second outside surfaces 2031A, 2031B of the cage towers 2018A, 2018B. In an embodiment, the first cage tower 2018A may include multiple first perches 2029A, and the second cage tower 2018B may include multiple second perches 2029B, wherein the first perches 2029A and the second perches 2029B are staggered vertically relative to each other along the first and second outside surfaces 2031A, 2031B of the cage towers 2018A, 2018B.

When a first perch 2029A and a second perch 2029B are included in an embodiment, the first vertical distance 2023 and the second vertical distance 2025 define a third vertical distance 2027, which third vertical distance is configured to facilitate the behavior of birds to hop from one surface to another and thereby create a ladder effect between the outside surfaces 2022A, 2022B of the aviary cages 2021A, 2021B and, concomitantly, the outside surfaces 2031A, 2031B of the cage towers 2018A, 2018B.

In an illustrated embodiment, a cage tower 2018C is positioned adjacent the exterior wall 2016 and includes an aviary cage 2021C adjacent the scratching floor 2011. An egg conveyor 2028C extends from an outside surface 2022C of the aviary cage 2021C and into the aisle 2020. A perch 2029C extends from the outside surface 2022C of the aviary cage 2021C and is positioned above the egg conveyor 2028C. A perch 2029D extends from the interior surface 2030 of the exterior wall 2016 and into the aisle 2020.

In an embodiment, the perch 2029C is elevated at a first vertical distance 2033 from the scratching floor 2011, and the perch 2029D is positioned at a second vertical distance 2035 from the scratching floor 2011. In an embodiment, the first vertical distance 2033 and the second vertical distance 2035 define a third vertical distance 2037, which third vertical distance 2037 is configured to facilitate the behavior of birds to hop from one surface to another and thereby create a ladder effect between the aviary cage 2021C and the exterior wall 2016.

In one embodiment, an angle formed between the perch 2029C and the perch 2029D is no greater than 45°, which configuration facilitates the behavior of birds to hop from one surface to another. In one embodiment, a plurality of perches 2029C is spaced apart about the outside surface 2031C of the cage tower 2018C. In one embodiment, a plurality of perches 2029D is spaced apart about the interior surface 2030 of the exterior wall 2016. Each perch 2029C, 2029D extends into the aisle 2020 to provide usable vertical space that creates additional habitable cubic inches for the birds, thereby enabling the aviary 2010 to be considered cage free.

In an embodiment, the perches 2029A, 2029B, 2029C are offset as a result of the aviary cages 2021A, 2021B, 2021C being positioned at different heights from the scratching floor 2011. Accordingly, by offsetting the heights 2019A, 2019B, 2019C of the aviary cages 2021A, 2021B, 2021C the perches 2029A, 2029B, 2029C become offset. Each of the perches 2029 are offset in a spaced apart arrangement to accommodate the behavior of birds to hop from one surface to another and thereby create a ladder effect on the outside surface 2022 of the aviary cage 2021 and, concomitantly, the outside surface 2031 of the cage tower 2018. In an embodiment, the perches 2029 are sloped downward from the cage tower 2018. In an embodiment, the perches 2029 extend from the outside surface 2022 parallel to the scratching floor 2011. In an embodiment, the perches 2029 may extend upward from the outside surface 2022 relative to the cage tower 2018.

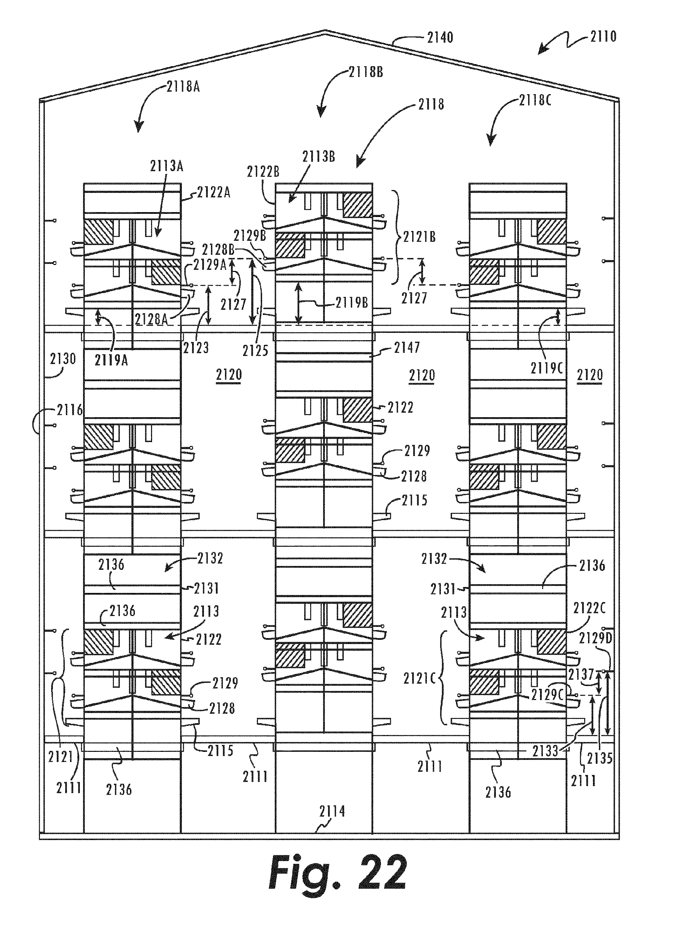

FIG. 22 illustrates an aviary 2110 having a floor 2114, which aviary 2110 is enclosed by exterior walls 2116 and a roof 2140. The exterior walls 2116 define an interior surface 2130. The exterior walls 2116 enclose at least one cage tower 2118 where hens may be caged. In an embodiment having multiple cage towers 2118, an aisle 2120 extends between each cage tower 2118 to provide an inspection area and space in which the birds housed in the aviary 2110 may move. In an embodiment, an aisle 2120 is positioned between an end cage tower 2118 and the respective exterior wall 2116. In an embodiment having multiple cage towers 2118, at least one scratching floor 2111 extends between each at least one cage tower 2118. In an embodiment, at least one scratching floor 2111 is positioned between an end cage tower 2118 and the respective exterior wall 2116

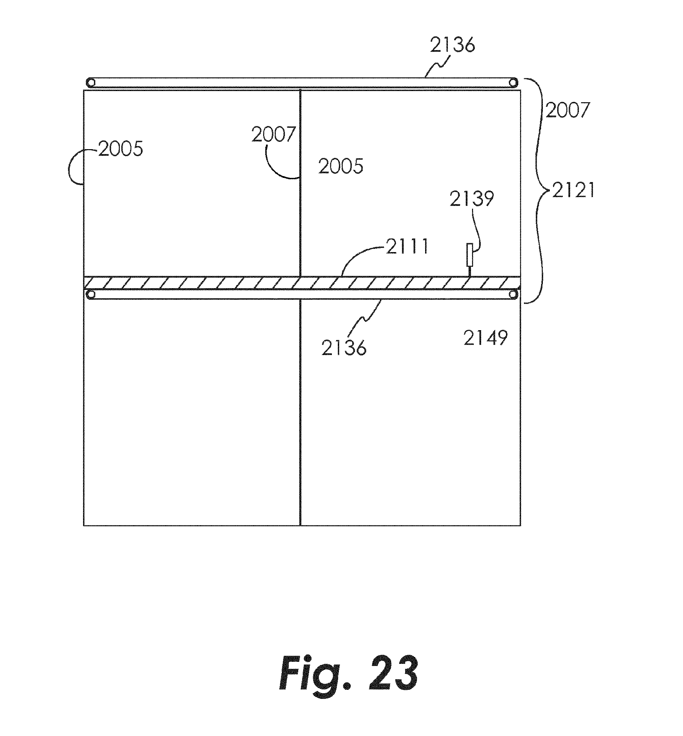

FIGs. 22 and 23 illustrate at least one cage tower 2118. Each at least one cage tower 2118 includes at least one aviary cage 2121. Each at least one aviary cage 2121 includes a first outside surface 2122 enclosing an inside area 2113. Each at least one cage tower 2118 includes an outside surface 2131 enclosing an inside area 2132. At least one bump rail 2115 extends from the outside surface 2131 and into the aisle 2120 to allow equipment to be maneuvered through the aisle 2120 without damaging the at least one cage tower 2118 or the at least one aviary cage 2121. The bump rail 2115 may be used by the birds as a perch.

In an embodiment, a first cage tower 2118A includes a first aviary cage 2121A, and a second cage tower 2118B includes a second aviary cage 2121B, which second aviary cage 2121B is similar to the first aviary cage 2121A. In the illustrated embodiment, a third cage tower 2118C includes a third aviary cage 2121C, which third aviary cage 2121C is similar to the first aviary cage 2121A and the second aviary cage 2121B. In an embodiment, multiple first aviary cages 2121A are stacked on top of one another. In an embodiment, each first aviary cage 2121A has a first outside surface 2122A enclosing an inside area 2113A. In an embodiment, multiple second aviary cages 2121B are stacked on top of one another. In an embodiment, each second aviary cage 2121B includes a second outside surface 2122B enclosing an inside area 2113B. In an embodiment, multiple third aviary cages 2121C are stacked on top of one another. In an embodiment, each third aviary cage 2121C includes a third outside surface 2122C enclosing an inside area 2113C. The second aviary cage 2121B is positioned adjacent the first aviary cage 2121A and an aisle 2120 is formed therebetween. The second aviary cage 2121B is also positioned adjacent the third aviary cage 2121C and an aisle 2120 is formed therebetween. In an embodiment, the second aviary cage 2121B is positioned at a height 2119B from the scratching floor 2111 that is greater than a height 2119A of the first aviary cage 2121A from the scratching floor 2111. In an embodiment, the second aviary cage 2121B is positioned at a height 2119B from the scratching floor 2111 that is greater than a height 2119C of the third aviary cage 2121C from the scratching floor 2111. In an embodiment, the height 2119A is substantially equal to the height 2119C. In another embodiment, the height 2119A is not equal to the height 2119C.

In an embodiment, a scratching floor 2111 extends between at least one aviary cage 2121 and the interior surface 2130 of an adjacent exterior wall 2116. In an embodiment, a scratching floor 2111 extends between the first aviary cage 2121A and the second aviary cage 2121B. In an embodiment, a scratching floor 2111 extends between the second aviary cage 2121B and the third aviary cage 2121C. In an embodiment, a scratching floor 2111 extends from the outside surface 2131 of the cage tower 2118.

In an embodiment, the scratching floor 2111 is configured so that a worker can walk across the scratching floor 2111 between the cage towers 2118A and 2118B. In an embodiment, a scratching floor 2111 is configured so that a worker can walk between cage tower 2118A and the respective exterior wall 2116. In an embodiment, the scratching floor 2111 is configured so that a worker can walk across the scratching floor 2111 between the cage towers 2118C and 2118B. In an embodiment, a scratching floor 2111 is configured so that a worker can walk between cage tower 2118C and the respective exterior wall 2116. The scratching floor 2111 serves as a scratching area where hens can move freely, peck the floor with their beaks, and scratch the scratching floor 2111 with their feet. In one embodiment, the scratching floor 2111 is sloped (not shown) toward the respective aviary cage 2121 to allow deposits to move back toward the aviary cage 2121. In an embodiment including a belt 2136 positioned under each aviary cage 2121, the scratching floor 2111 is sloped toward the respective belt 2136 to allow deposits to move back toward the belt 2136.

The first outside surface 2122 of the at least one aviary cage 2121 includes a first perch 2129 extending into the aisle 2120. In an embodiment, each perch 2129 may extend a portion of the length of the at least one cage tower 2118. In an embodiment, each perch 2129 may extend substantially the length of the at least one cage tower 2118. In an embodiment, the interior surface 2130 of the exterior wall 2116 includes a second perch 2129D extending into the aisle 2120. In an embodiment, each perch 2129D may extend a portion of the length of the interior surface 2130 of the exterior wall 2116 of the aviary 2110. In an embodiment, each perch 2129D may extend substantially the length of the interior surface 2130 of the exterior wall 2116.

Referring to an embodiment, a first perch 2129A extends from the first outside surface 2122A of the first aviary cage 2121A and is positioned above a first egg conveyor 2128A that extends from the first outside surface 2122A and that extends substantially the length of the first cage tower 2118A. When the hens lay their eggs, the eggs may be collected in the first egg conveyor 2128A. The first egg conveyor 2128A carries the eggs from the aviary cage 2121A to a collection area. The first perch 2129A extends into the aisle 2120 at a first vertical distance 2123 from the scratching floor 2111. A second perch 2129B extends from the second outside surface 2122B of the second aviary cage 2121B and is positioned above a second egg conveyor 2128B that extends from the second outside surface 2122B and that extends substantially the length of the second cage tower 2118B. The second egg conveyor 2128B carries the eggs from the aviary cage 2121B to a collection area. The second perch 2129B extends into the aisle 2120 at a second vertical distance 2125 from the scratching floor 2111. The first vertical distance 2123 is not equal to the second vertical distance 2125.

In an embodiment, the first vertical distance 2123 and the second vertical distance 2125 define a third vertical distance 2127. The third vertical distance 2127 is configured to permit a bird to hop from the first perch 2129A to the second perch 2129B or vice versa. In such an embodiment, the perches 2129A, 2129B are offset as a result of the aviary cages 2121A, 2121B being positioned at different heights. Accordingly, by offsetting the heights 2119A, 2119B ofthe similar aviary cages 2121A, 2121B the perches 2129A, 2129B become offset.

It will be understood by one of ordinary skill in the art of aviary design that the offset cage and perch design may be replicated for as many cage tower combinations as are desired in an aviary 2110. In each case of an adjacent set of cage towers 2118, the perches 2129 of each cage tower 2118 should be offset from the perches 2129 of the adjacent cage tower 2118 by the third vertical distance 2127 to enable a bird to hop from perch 2129 to perch 2129 through aisle 2120 in a ladder-like manner. It will also be understood by one of ordinary skill that manufacturing, assembly, and installation time may be saved when building aviary 2110 when aviary cage units 2121 are similar to each other. Similar aviary cage units 2121 permit the construction of cage towers 2118 with perches 2129 that are offset in height from perches 2129 on cage towers 2118 that are separated by an aisle 2120 by simply installing the aviary cage unit 2121 in one cage tower 2118 at a height different from the height of installation for an aviary cage unit 2121 in an adjacent cage tower 2118.

In an embodiment, the first cage tower 2118A may include multiple first egg conveyors 2128A, and the second cage tower 2118B may include multiple second egg conveyors 2128B, wherein the first egg conveyors 2128A and the second egg conveyors 2128B are staggered vertically relative to each other along the first and second outside surfaces 2131A, 2131B of the cage towers 2118A, 2118B. In an embodiment, the first cage tower 2118A may include multiple first perches 2129A, and the second cage tower 21181B may include multiple second perches 2129B, wherein the first perches 2129A and the second perches 2129B are staggered vertically relative to each other along the first and second outside surfaces 2131A, 2131B of the cage towers 2118A, 2118B.

When a first perch 2129A and a second perch 2129B are included in an embodiment, the first vertical distance 2123 and the second vertical distance 2125 define a third vertical distance 2127, which third vertical distance is configured to facilitate the behavior of birds to hop from one surface to another and thereby create a ladder effect between the outside surfaces 2122A, 2122B of the aviary cages 2121A, 2121B and, concomitantly, the outside surfaces 2131A, 2131B of the cage towers 2118A, 2118B.

At least one belt 2136 extends through each cage tower 2118 to remove a deposit from at least part of the cage tower 2118. In one embodiment, the belt 2136 extends through each cage 2118 substantially the length of the cage tower 2118. In one embodiment, the belt 2136 extends approximately 400 feet along the length of each cage tower 2118. In one embodiment, the belt 2136 carries deposits from the cage tower 2118 to a collection area (not shown) positioned outside of the cage tower 2118.

A scratching floor 2111 extends between the first aviary cage 2121A and the second aviary cage 2121B. The scratching floor 2111 is oriented with respect to and positioned adjacent to a respective belt 2136. In one embodiment, the scratching floor 2111 is planar with the respective belt 2136. In an embodiment, the scratching floor 2111 is sloped to allow deposits to move back toward the respective belt 2136. When the birds scratch the scratching floor 2111, they scratch much of the deposits made on the scratching floor 2111 onto the belt 2136. Accordingly, since it is common for birds to defecate in a scratching area, the scratching floor 2111 becomes relatively self-cleaning as the hens scratch. The scratching floor 2111 is configured so that the deposits are scratched back to the respective belt 2136. Such configuration reduces the required frequency for cleaning of the aviary 2110. Any eggs laid on the scratching floor 2111 may be directed back toward the belt 2136 by the scratching of the hens. These eggs are then collected from the belt 2136 and removed from the belt 2136.

In one embodiment, the belt 2136 forms a floor of the aviary cage 2121. Accordingly, the birds are allowed to move freely and walk on the belt 2136.

In one embodiment, a method of constructing an aviary 2010 is provided. The method includes positioning a first cage tower 2018A adjacent to a second cage tower 2018B, wherein the first cage tower 2018A includes a first aviary cage 2021A, and the second cage tower 2018B includes a second aviary cage 2021B. In an embodiment, the method may include stacking multiple first aviary cages 2021A on top of one another. In an embodiment, each aviary cage 2021 has a first end 2005 and a second end 2007. In an embodiment, the method may include forming a level in at least one cage tower 2018 by placing at least two aviary cages 2021 in a row, with the first end 2005 of a first aviary cage 2021 adjacent the second end 2007 of a second aviary cage 2021. In an embodiment, each first aviary cage 2021A includes a first outside surface 2022A enclosing an inside area 2013A. In an embodiment, the method may include stacking multiple second aviary cages 2121B on top of one another. In an embodiment, each second aviary cage 2021B includes a second outside surface 2022B enclosing an inside area 2013B. The method may include extending an aisle 2020 between the first aviary cage 2021A and the second aviary cage 2021B. In an embodiment, the method may include positioning the second aviary cage 2021B at a height 2019B from the scratching floor 2011 that is greater than a height 2019A ofthe first aviary cage 2021A from the scratching floor 2011.

In an embodiment, the method may include extending a scratching floor 2011 from a first aviary cage 2021A through the aisle 2020 to a second aviary cage 2021B. The method may include extending a first perch 2029A from the first outside surface 2022A of the first aviary cage 2021A and into the aisle 2020 at a first vertical distance 2023 from a scratching floor 2011. The method may include extending a second perch 2029B from the second outside surface 2022B of the second aviary cage 2021B and into the aisle 2020 at a second vertical distance 2025 from the scratching floor 2011. In an embodiment, the first vertical distance 2023 and the second vertical distance 2025 define a third vertical distance 2027 in a spaced apart arrangement to accommodate the behavior of birds to hop from one surface to another and thereby create a ladder effect between the outside surfaces 2022A, 2022B of the aviary cages 2021A and 2021B.

Each of the first cage tower 2018A and the second cage tower 2018B may include at least one belt 2136 positioned within the inside area 2013A, 2013B. The method further includes positioning the first perch 2029A and the second perch 2029B adjacent the respective belt 2136. In one embodiment, the respective belt 2136 forms at least one floor of each cage tower 2018A, 2018B. The at least one belt 2136 is configured to remove a deposit from at least part of the respective cage tower 2018A, 2018B. An egg remover 2139 may be positioned at an end of each belt 2136 to remove eggs from the belt 2136. The egg remover 2139 may include at least one brush 2149 to direct material to at least one side 2147 ofthe belt 2136.

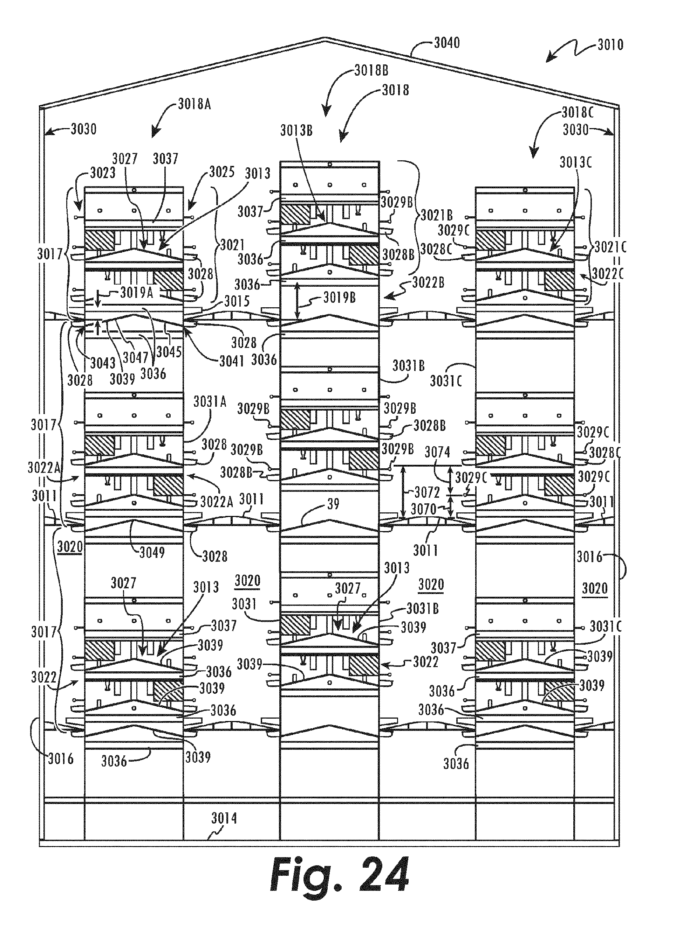

FIG. 24 illustrates an aviary 3010 having a floor 3014, which aviary 3010 is enclosed by exterior walls 3016 and a roof 3040. The exterior walls 3016 define an interior surface 3030. The exterior walls 3016 enclose at least one cage tower 3018 where hens may be caged. Each at least one cage tower 3018 includes an outside surface 3031 enclosing an inside area 3032. In an embodiment having multiple cage towers, an aisle 3020 extends between each cage tower 3018 to provide an inspection area and space in which the birds housed in the aviary 3010 may move. In an embodiment, an aisle 3020 is positioned between a cage tower 3018 and the respective exterior wall 3016. In an embodiment having multiple cage towers, at least one scratching floor 3011 extends between each at least one cage tower 3018. In an embodiment, a scratching floor 3011 extends between the interior surface 3030 of each exterior wall 3016 and the adjacent cage tower 3018.

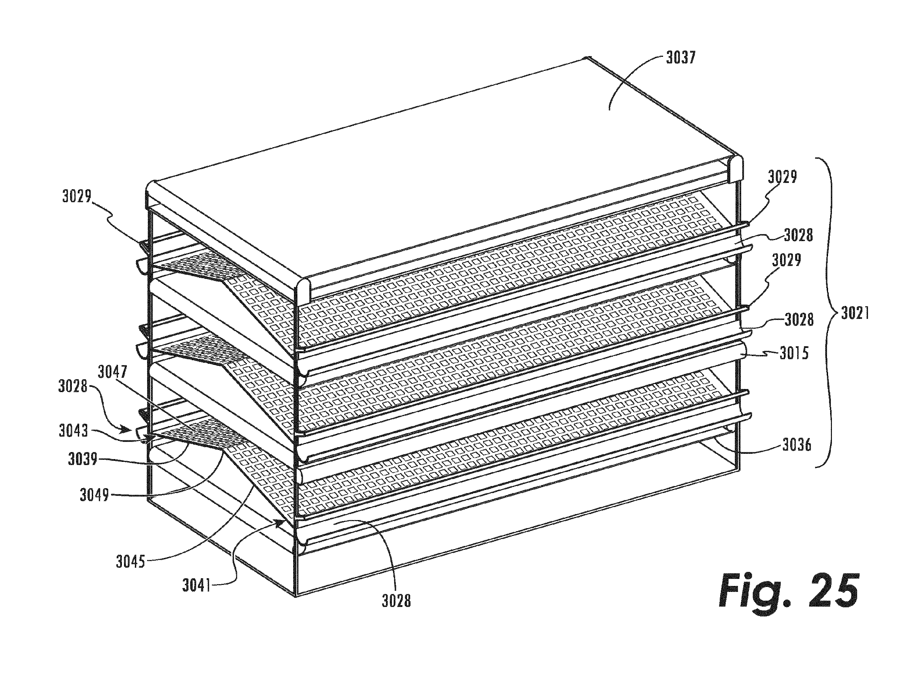

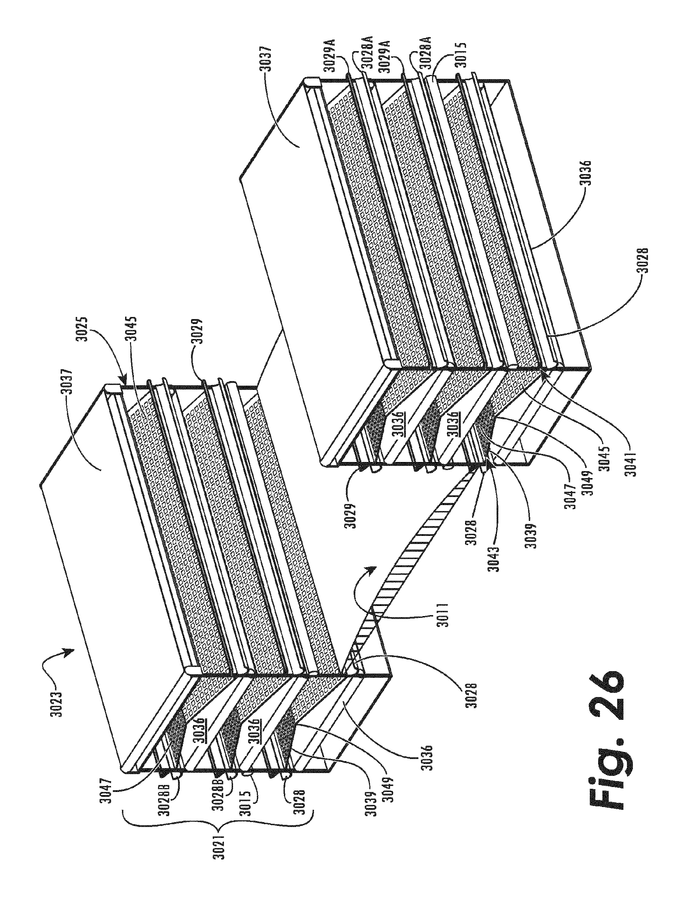

FIGs. 25 and 26 illustrate at least one aviary cage 3021. Each at least one cage tower 3018 includes at least one aviary cage 3021. Each at least one aviary cage 3021 includes a first side 3025 and a second side 3023 enclosing an inside area 3013. At least one bump rail 3015 extends from each of the first side 3025 and the second side 3023 and into the respective aisle 3020 to allow equipment to be maneuvered through the aisle 3020 without damaging the at least one cage tower 3018 or the at least one aviary cage 3021. The bump rail 3015 may be used by the birds as a perch.

Each aviary cage 3021 includes at least one nesting area 3027. The nesting area 3027 provides space where a hen may sit to lay eggs. As the hens lay their eggs, the eggs are collected in egg conveyors 3028 that extend along the sides 3025 and 3023 of the aviary cage 3021. The egg conveyors 3028 carry the eggs from the nesting area 3027 to a collection area (not shown).

At least one belt 3036 extends through the cage tower 3018 to remove a deposit from at least part of the cage tower 3018. In an embodiment, a plurality of belts 3036 extends through the cage tower 3018 to remove deposits from at least part of the tower 3018. The plurality of belts 3036 are positioned at various vertical locations within each cage tower 3018. At least one belt 3036 of the plurality of belts 3036 is positioned below the nesting area 3027 of each aviary cage 3021. Additional belts 3036 of the plurality of belts 3036 extend through the nesting area 3027 of each aviary cage 3021. In one embodiment, at least one belt 3036 extends through the cage tower 3018 substantially the length of the cage tower 3018. In one embodiment, the belt 3036 extends approximately 400 feet along the length of the cage tower 3018. In one embodiment, the belt 3036 carries manure from the cage tower 3018 to a collection area (not shown) positioned outside of the cage tower 3018.

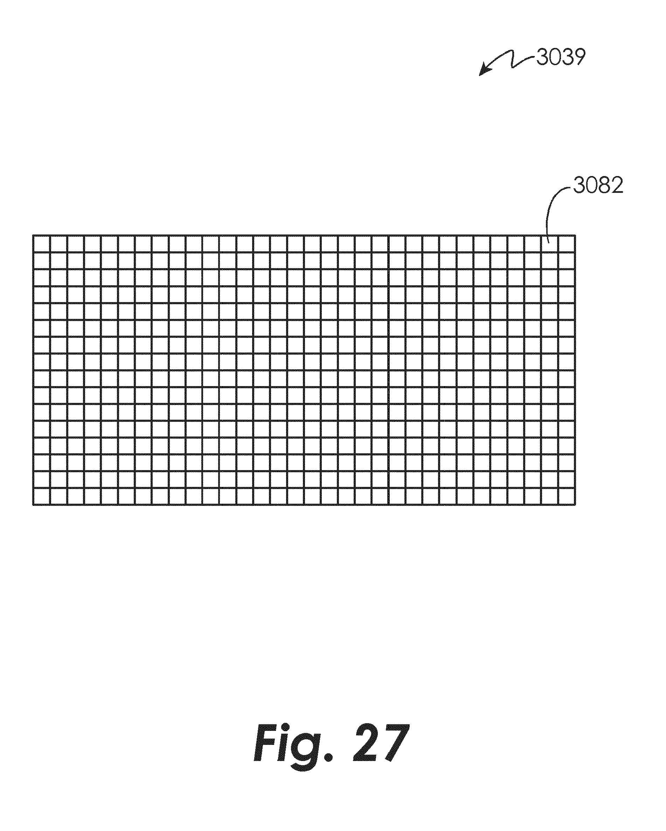

In one embodiment, a grate 3039 is positioned over the belt 3036. A portion of the grate 3039 is illustrated in FIG. 27. As illustrated in FIGs. 25-27, the grate 3039 includes openings 3082 therethrough that allow deposits, but not eggs, to pass through the grate 3039 to the belt 3036. The grate 3039 has a first end 3041 and a second end 3043. The first end 3041 extends to the first side 3025 ofthe aviary cage 3021. The second end 3043 extends to the second side 3023 of the aviary cage 3021. In an embodiment (not shown), the grate 3039 is flat. In an embodiment, the grate 3039 is shaped so that it is sloped toward each end 3041 and 3043. Each end 3041, 3043 of the grate 3039 is positioned adjacent an egg conveyor 3028. The egg conveyors 3028 are adapted to carry eggs from the aviary cage 3021 to a collection area (not shown). In one embodiment, a grate 3039 is positioned over each belt 3036.

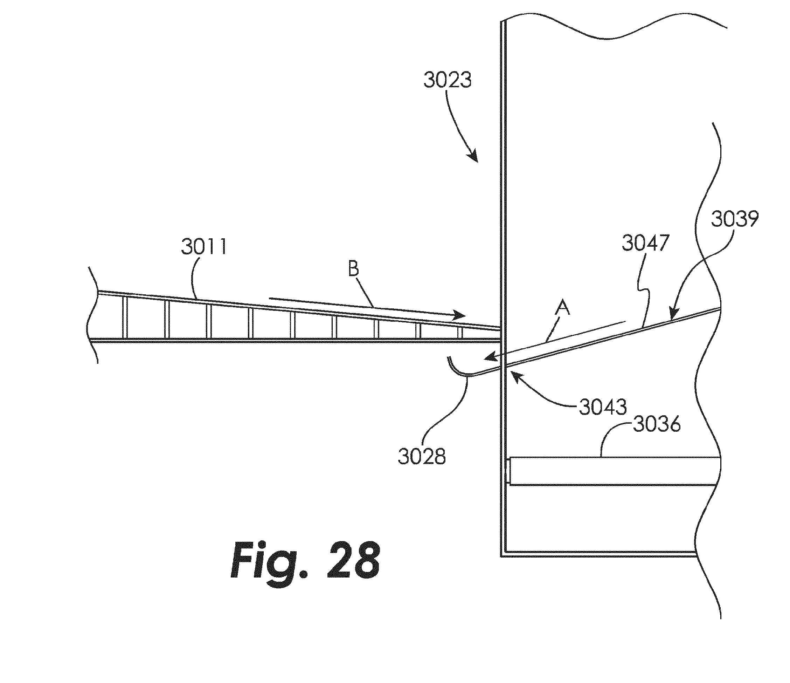

In an embodiment, a first portion 3045 of the grate 3039 is angled downward toward an egg conveyor 3028 positioned adjacent the first end 3041 of the grate 3039. In this embodiment, a second portion 3047 of the grate 3039 is angled downward toward an egg conveyor 3028 positioned adjacent the second end 3043 of the grate 3039. In one embodiment, the first portion 3045 and second portion 3047 of the grate 3039 each extend from a centerline 3049 of the grate 3039. In one embodiment, the first portion 3045 and the second portion 3047 are angled from the centerline 3049 at approximately a 7° to 8° angle. Eggs laid on the second portion 3047 of grate 3039 roll to the respective egg conveyor 3028 adjacent the second end 3043 of the grate 3039, which is in the direction of arrow A (shown in FIG. 28). The egg conveyor 3028 carries the eggs to the collection area. Eggs laid on the first portion 3045 of the grate 3039 roll to the respective egg conveyor 3028 adjacent the first end 3041 of the grate 3039. In an embodiment in which the grate 3039 is flat, the hens scratch the eggs to an egg conveyor 3028.

In the illustrated embodiment, a scratching floor 3011 extends between adjacent cage towers 3018. In an embodiment, a scratching floor 3011 extends between the cage tower 3018 and the respective exterior wall 3016. In some embodiments, the scratching floor is solid. The scratching floor 3011 is oriented with respect to at least one belt 3036. In one embodiment, the scratching floor 3011 is oriented with respect to a belt 3036 that extends below the nesting area 3027 of an aviary cage 3021. In one embodiment, the scratching floor 3011 is sloped to allow deposits to move back toward the belt 3036. In one embodiment, the scratching floor 3011 is crowned so that each side of the scratching floor 3011 slopes toward a belt 3036. In particular, in the crowned scratching floor embodiment, the scratching floor 3011 is sloped toward the grate 3039. In one embodiment (not shown), the scratching floor 3011 is flat. In an embodiment, the ends 3041 and 3043 of the grate 3039 are positioned below the scratching floor 3011 so that the egg conveyors 3028 extend below the scratching floor 3011.

The scratching floor 3011 provides a pecking area for the hens to utilize while they are not nesting. In particular, the scratching floor 3011 provides a scratching area for birds within the aviary 3010. When the birds scratch the scratching floor 3011, they scratch much of the deposits made on the scratching floor 3011 onto the respective belt 3036. Accordingly, since it is common for birds to defecate in a scratching area, the scratching floor 3011 becomes relatively self-cleaning as the hens scratch.

Particularly, by way of example, deposits may be scratched from the scratching floor 3011 in the direction of arrow B (shown in FIG. 28) toward the grate 3039. Deposits may be scratched toward a grate 3039 from either direction on the scratching floor 3011. The deposits small enough to pass through the openings 3082 in the grate 3039 then pass through those openings 3082 and onto the belt 3036, from which they are removed from the aviary 3010. Such configuration greatly reduces the amount of ammonia captured within the aviary 3010 and also reduces the required frequency for cleaning of the aviary 3010. Those of skill in the art will appreciate that, while FIG. 28 illustrates the movement of a deposit toward the second end 3043 of the grate 3039, a mirror image of the movement of a deposit toward the first end 3041 of the grate 3039 may occur when a deposit is made on the first portion 3045 of the grate 3039 or on the scratching floor 3011 and scratched back toward the first end 3041 of the grate 3039.

Any eggs laid on the scratching floor 3011 are directed toward an egg conveyor 3028 by the scratching of the hens. By way of example and not of limitation, eggs laid on the scratching floor 3011 illustrated in FIG. 28 may be scratched in the direction of arrow B toward the grate 3039. Eggs may be scratched toward a grate 3039 from either direction on the scratching floor 3011. Upon reaching the grate 3039, the eggs roll or are scratched toward the respective egg conveyor 3028, such as, for example, in the direction of arrow A along the grate 3039, under the scratching floor 3011, and into the egg conveyor 3028. In an embodiment (not shown), eggs laid on a flat scratching floor 3011 are rolled by the scratching of the hens toward the grate 3039 and, upon reaching the grate 3039, are scratched by the hens into the egg conveyor 3028.

In the illustrated embodiment, a first cage tower 3018A includes a first aviary cage 3021A, and a second cage tower 3018B includes a second aviary cage 3021B, which second aviary cage 3021B is similar to the first aviary cage 3021A. A third cage tower 3018C includes a third aviary cage 3021C, which third aviary cage 3021C is similar to the first aviary cage 3021A and the second aviary cage 3021B. In an embodiment, multiple first aviary cages 3021A are stacked on top of one another. In an embodiment, each first aviary cage 3021A has a first outside surface 3022A enclosing an inside area 3013A. In an embodiment, multiple second aviary cages 3021B are stacked on top of one another. In an embodiment, each second aviary cage 3021B includes a second outside surface 3022B enclosing an inside area 3013B. In an embodiment, multiple third aviary cages 3021C are stacked on top of one another. In an embodiment, each third aviary cage 3021C includes a third outside surface 3022C enclosing an inside area 3013C. The second aviary cage 3021B is positioned adjacent the first aviary cage 3021A and an aisle 3020 is formed therebetween. The second aviary cage 3021B is also positioned adjacent the third aviary cage 3021C and an aisle 3020 is formed therebetween. The second aviary cage 3021B is positioned at a height 3019B from the grate 3039. The first aviary cage 3021A is positioned at a height 3019A from the scratching floor 3011. Height 3019B is greater than height 3019A.

Referring to an embodiment, a first perch 3029A extends from the first outside surface 3031A of the first cage tower 3018A and is positioned above a first egg conveyor 3028A that extends from the first outside surface 3031A along the sides 3025 and 3023 of the aviary cage 3021A. The first egg conveyor 3028A extends substantially the length of the first cage tower 3018A. When the hens lay their eggs, the eggs may be collected in the first egg conveyor 3028A. The first egg conveyor 3028A carries the eggs from the aviary cage 3021A to a collection area (not shown). The first perch 3029A extends into the aisle 3020 at a first vertical distance 3070 from the scratching floor 3011. A second perch 3029B extends from the second outside surface 3031B of the second cage tower 3018B and is positioned above a second egg conveyor 3028B that extends from the second outside surface 3031B along the sides 3025 and 3023 of the aviary cage 3021B. The second egg conveyor 3028B extends substantially the length of the second cage tower 3018B. The second egg conveyor 3028B carries the eggs from the aviary cage 3021B to a collection area (not shown). The second perch 3029B extends into the aisle 3020 at a second vertical distance 3072 from the scratching floor 3011. The first vertical distance 3070 is not equal to the second vertical distance 3072. In an embodiment, the first vertical distance 3070 and the second vertical distance 3072 define a third vertical distance 3074. The third vertical distance 3074 is configured to permit a bird to hop from the first perch 3029A to the second perch 3029B or vice versa.

In an embodiment, the first cage tower 3018A may include multiple first perches 3029A, corresponding to the number of first egg conveyors 3028A, and the second cage tower 3018B may include multiple second perches 3029B, corresponding to the number of second egg conveyors 3028B, wherein the first perches 3029A and the second perches 3029B are staggered in relation to each other along the first and second outside surfaces 3031A, 3031B of the cage towers 3018A, 3018B. In one embodiment, the first perches 3029A and the second perches 3029B are staggered vertically on the first and second outside surfaces 3031A, 3031B of the cage towers 3018A, 3018B. In one embodiment, the first perches 3029A and the second perches 3029B are staggered horizontally along the first and second outside surfaces 3031A, 3031B of the cage towers 3018A, 3018B. In one embodiment, the first perches 3029A and the second perches 3029B are staggered vertically and horizontally on the first and second outside surfaces 3031A, 3031B ofthe cage towers 3018A, 3018B.

In the illustrated embodiments, the scratching floors 3011 form three levels 3017 in the aviary 3010, wherein each level 3017 may be accessed by a worker. A hen may walk, peck, scratch, socialize, sleep, and lay eggs, as the bird desires in the inside areas 3013, 3032. These same daily activities can be carried out on the at least one scratching floor 3011. The at least one aviary cage 3021 may house a specific group of birds or it may be open to birds from other aviary cages 3021. In an embodiment, the cage tower 3018 may be configured to allow the birds to move freely up and down the cage tower 3018. In an embodiment, the cage tower 3018 may be configured to keep birds in the aviary segregated by vertical level 3017. When the hens lay their eggs, the eggs may be collected in egg conveyors 3028 that extend along the sides of the aviary cage 3021. The egg conveyors 3028 carry the eggs from the aviary cage 3021 to a collection area.

When a first perch 3029A and a second perch 3029B are included in an embodiment, the first vertical distance 3070 and the second vertical distance 3072 define a third vertical distance 3074, which third vertical distance 3074 is configured to facilitate the behavior of birds to hop from one surface to another and thereby create a ladder effect between the outside surfaces 3022A, 3022B of the aviary cages 3021A, 3021B and, concomitantly, outside surfaces 3031A, 3031B ofthe cage towers 3018A, 3018B.

In one embodiment, a method of forming an aviary 3010 including an aviary cage 3021 having a first side 3025, a second side 3023, and a nesting area 3027 is provided. The method includes positioning the nesting area 3027 between the first side 3025 and the second side 3023 and extending a belt 3036 through the nesting area 3027. A grate 3039 is positioned over the belt 3036 so that a first end 3041 of the grate 3039 extends to the first side 3025 of the aviary cage 3021, and a second end 3043 of the grate 3039 extends to a second side 3023 of the aviary cage 3021. A first egg conveyor 3028 is positioned at the first end 3041 of the grate 3039, and a second egg conveyor 3028 is positioned at the second end 3043 of the grate 3039.

In one embodiment, the grate 3039 is flat. In one embodiment, a first portion 3045 of the grate 3039 is angled downward toward the egg conveyor 3028 on side 3025 of aviary cage 3021, and a second portion 3047 of the grate 3039 is angled downward toward the egg conveyor 3028 on side 3023 of aviary cage 3021. In one embodiment, the belt 3036 is positioned to capture and transport debris that falls through the grate 3039. In one embodiment, a scratching floor 3011 is extended from the aviary cage 3021 adjacent to the grate 3039. In one embodiment, the scratching floor 3011 is sloped toward the grate 3039 to facilitate movement of a deposit on the scratching floor 3011 to the grate 3039. In one embodiment, the scratching floor 3011 is a solid floor. In one embodiment, a belt 3037 is extended above the aviary cage 3021. The belt 3037 is positioned to capture and transport deposits that fall onto it. Birds are allowed to move freely and walk on the belt 3037.

In an embodiment (not shown), the cage tower 3018 includes the belts 3036 without the grates 3039. In such an embodiment, the belts 3036, 3037 carry deposits from the cage tower 3018, as described previously. In particular, deposits may be scratched onto the belts 3036 from the scratching floor 3011. In one embodiment, eggs are laid directly on the belts 3036, 3037 and the birds walk on the moving belts 3036, 3037.

In one embodiment, a first aviary cage 3021A and a second aviary cage 3021B are provided and are positioned adjacent each other. In such an embodiment, the method includes extending an aisle 3020 between the first aviary cage 3021A and the second aviary cage 3021B. A first perch 3029A is extended from the first aviary cage 3021A and into the aisle 3020 at a first vertical distance 3070 from a scratching floor 3011. A second perch 3029B is extended from the second aviary cage 3021B and into the aisle 3020 at a second vertical distance 3072 from the scratching floor 3011. The first and second vertical distances 3070, 3072 from the scratching floor 3011 are not equal.

In one embodiment, the aviary 3010 includes a plurality of first perches 3029A and a plurality of second perches 3029B. The method in this embodiment includes horizontally offsetting the plurality of first perches 3029A from one another and horizontally offsetting the plurality of second perches 3029B from one another. In one embodiment, the aviary 3010 includes a plurality of first perches 3029A and a plurality of second perches 3029B, and the method includes vertically offsetting the plurality of first perches 3029A from one another and vertically offsetting the plurality of second perches 3029B from one another. In one embodiment, the first vertical distance 3070 and the second vertical distance 3072 define a third vertical distance 3074. The third vertical distance 3074 enables an animal to hop between the first perch 3029A and the second perch 3029B or vice versa. In such an embodiment, the perches 3029A, 3029B are offset as a result of the aviary cages 3021A, 3021B being positioned at different heights. Accordingly, by offsetting the heights 3019A, 3019B of the similar aviary cages 3021A, 3021B the perches 3029A, 3029B become offset.

It will be understood by one of ordinary skill in the art of aviary design that the offset cage and perch design may be replicated for as many cage tower combinations as are desired in an aviary 3010. In each case of an adjacent set of cage towers 3018, the perches 3029 of each cage tower 3018 should be offset from the perches 3029 of the adjacent cage tower 3018 by the third vertical distance 3027 to enable a bird to hop from perch 3029 to perch 3029 through aisle 3020 in a ladder-like manner. It will also be understood by one of ordinary skill that manufacturing, assembly, and installation time may be saved when building aviary 3010 when aviary cage units 3021 are similar to each other. Similar aviary cage units 3021 permit the construction of cage towers 3018 with perches 3029 that are offset in height from perches 3029 on cage towers 3018 that are separated by an aisle 3020 by simply installing the aviary cage unit 3021 in one cage tower 3018 at a height different from the height of installation for an aviary cage unit 3021 in an adjacent cage tower 3018.

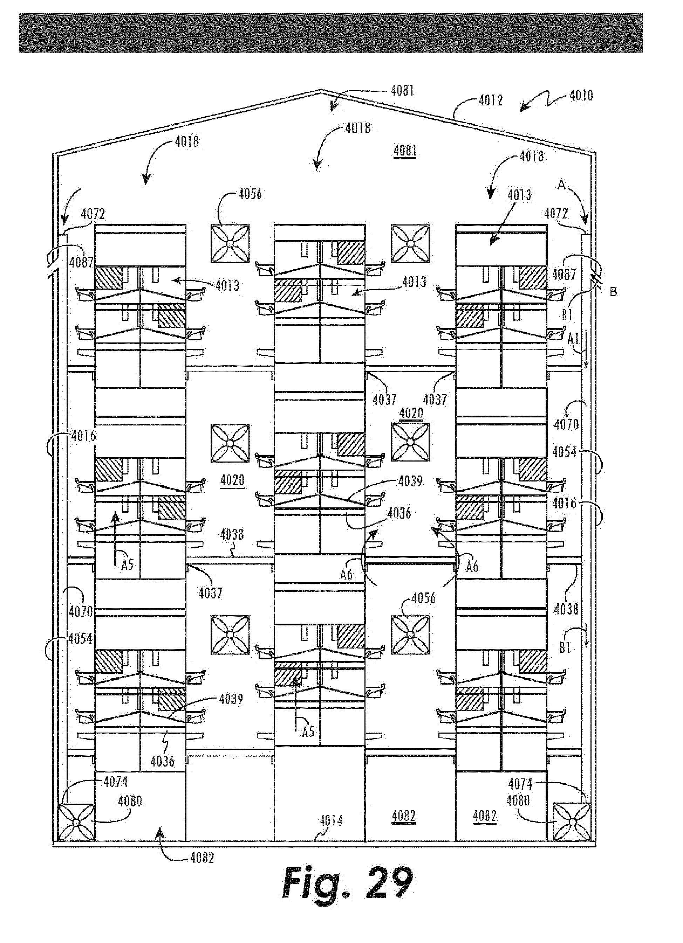

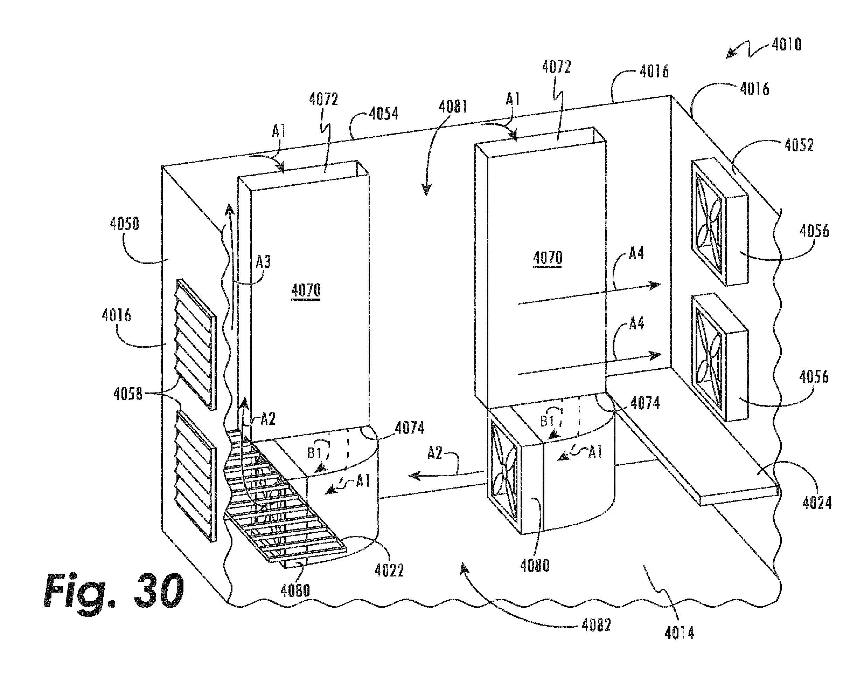

FIGs. 29 and 30 illustrate an aviary 4010 configured to house hens for egg production. It should be noted that the system and method described in FIGs. 29-32 may be utilized with any of the embodiments described in FIGs. 1-28 and the foregoing description. The aviary 4010 includes a floor 4014, exterior walls 4016, and a roof 4012. At least one cage tower 4018 where hens may be caged is disposed within the aviary 4010. Although the present embodiment illustrates three cage towers 4018, it should be noted that the aviary 4010 may be constructed with any number of cage towers 4018, including a single cage tower 4018. In an embodiment having more than one cage tower 4018, an open space 4020 extends between adjacent cage towers 4018 to provide an inspection area and to facilitate airflow through the aviary 4010. In an embodiment having a single cage tower 4018, an open space 4020 is present on at least one side of the cage tower 4018. In an embodiment, an open space 4020 may be positioned between a cage tower 4018 and one or more respective exterior walls 4016. The open space 4020 may include a scratching floor 4038 serving as a pecking area where hens can move freely, peck the floor with their beaks, and scratch the floor with their feet.

Each cage tower 4018 includes at least one inside area 4013 within the cage tower 4018. In an embodiment, the inside area 4013 includes at least one grate 4039 and at least one manure belt 4036 disposed below the at least one grate 4039. The grate 4039 enables the hens to move freely throughout the inside area 4013 of the cage tower 4018. In an embodiment, the grate 4039 includes openings therein that allow deposits to fall through the grate 4039 onto a respective belt 4036. The belt 4036 removes the deposits from the cage tower 4018. In an embodiment, the openings in the grate 4039 allow air to flow through the inside area 4013 of the cage tower 4018 to facilitate drying of manure and maintain poultry health through the concomitant temperature regulation and removal of harmful gases.

In an embodiment, a scratching floor 4038 extends from the cage tower 4018. In an embodiment, the scratching floor 4038 is solid. In an embodiment having more than one cage tower 4018, a scratching floor 4038 may extend between any adjacent cage towers 4018. In an embodiment, a scratching floor 4038 may extend between the cage tower 4018 and one or more respective exterior walls 4016. In an embodiment having more than two cage towers 4018, a scratching floor may extend from adjacent cage towers 4018 but not be continuous between adjacent cage towers 4018. In an embodiment, the scratching floor 4038 is disposed adjacent openings 4037 adjacent the cage tower 4018 that allow air to flow through the aviary 4010.

The exterior walls 4016 of the aviary include a front wall 4050, a back wall 4052, and at least two side walls 4054. In an embodiment, at least one first fan 4056 is positioned in the back wall 4052 in air communication with the aviary 4010 and the outside (not shown). In an embodiment, at least one vent 4058 is positioned in the front wall 4050 in air communication with the aviary 4010 and the outside (not shown). When the outside air temperature is high enough that bird health will not be risked if the unconditioned outside air is permitted to enter the aviary 4010 directly through the at least one vent 4058, the at least one vent 4058 is opened and the at least one first fan 4056 is operated so that the at least one first fan 4056 draws air from outside the aviary 4010 into the aviary 4010 through the at least one vent 4058. In an embodiment, the air in the aviary 4010 is drawn through and around the cage tower 4018 and toward the back wall 4052 of the aviary 4010. The at least one first fan 4056 discharges air from the aviary 4010 to outside the aviary 4010.

At least one plenum 4070 is disposed on at least one of the at least two side walls 4054. In an embodiment, at least one plenum 4070 is disposed in each of the at least two side walls 4054. In an embodiment, a plurality of plenums 4070 is spaced along at least one of the at least two side walls 4054. In an embodiment, a plurality of plenums 4070 is equally spaced along the at least two side walls 4054. In an embodiment, the at least one plenum 4070 is disposed on the back wall 4052. In an embodiment, a plurality of plenums 4070 is spaced to maximize air circulation through the aviary 4010. In an embodiment, each plenum in the plurality of plenums 4070 has the same width, depth, and length. In an embodiment, the width, depth, and length of each plenum in the plurality of plenums 4070 is selected to maximize air circulation through the aviary 4010.

In an embodiment, at least one grated floor 4022 extends from the front wall 4050 to the at least one cage tower 4018. The at least one grated floor 4022 is positioned adjacent to the at least one vent 4058. Although FIG. 30 illustrates only one grated floor 4022, the aviary 4011 may be constructed with any number of grated floors 4022. In an embodiment, the number of grated floors 4022 corresponds to a number of vertical levels of aviary cages in the at least one cage tower 4018. In an embodiment, the at least one grated floor 4022 is configured to allow airflow therethrough. In an embodiment, at least one solid floor 4024 extends from the back wall 4052 to the at least one cage tower 4018. In an embodiment, the at least one solid floor 4024 is positioned adjacent the at least one first fan 4056. Although FIG. 30 illustrates only one solid floor 4024, the aviary 4010 may be constructed with any number of solid floors 4024. In an embodiment, the number of solid floors 4024 corresponds to a number of vertical levels of aviary cages in the at least one cage tower 4018. In an embodiment, the solid floor 4024 is configured to prevent airflow therethrough.

Although the present embodiments are described with respect to the at least first fan 4056 being positioned in the back wall 4052, the at least one vent 4058 being positioned in the front wall 4050, and the at least one plenum 4070 being formed in the side walls 4054, it should be appreciated that other embodiments may include configurations wherein the at least one first fan 4056, the at least one vent 4058, and the at least one plenum 4070 may be positioned or formed on or in other exterior walls 4016.

The at least one plenum 4070 includes a top opening 4072 and a bottom opening 4074. In an embodiment, the top opening 4072 is positioned adjacent to a top space 4081 of the aviary 4010 that is adjacent to the roof 4012. In an embodiment, the bottom opening 4074 is positioned adjacent the floor 4014 of the aviary 4010. In the illustrated embodiment, the bottom opening 4074 is positioned below the lowest scratching floor 4038 extending between the cage tower 4018 and the respective exterior wall 4016. At least one second fan 4080 is positioned in flow communication with the at least one plenum 4070. In an embodiment, at least one second fan 4080 is positioned adjacent the bottom opening 4074 of the plenum 4070. In an embodiment (not shown), the at least one second fan 4080 is spaced from the bottom opening 4074 of the plenum 4070. In an embodiment (not shown), at least one second fan 4080 is positioned adjacent the top opening 4072 of the plenum 4070. In an embodiment (not shown), the at least one second fan 4080 is spaced from the top opening 4072 of the plenum 4070. In an embodiment, the at least one second fan 4080 is positioned within the plenum 4070. In an embodiment, the bottom opening 4074 of the plenum 4070 is connected to the second fan 4080. In an embodiment, the top opening 4072 of the plenum 4070 is connected to the second fan 4080. In an embodiment, at least one second plenum (not shown) connects the at least one plenum 4070 and the at least one second fan 4080. In an embodiment, the at least one second fan 4080 is positioned below the lowest scratching floor 4038. In an embodiment, the at least one second fan 4080 is oriented to facilitate airflow in a direction parallel to the at least two side walls 4054, which direction is shown in FIG. 30 by arrows A2.

The at least one plenum 4070 is configured to circulate warm air from the top space 4081 of the aviary 4010 to a bottom space 4082 ofthe aviary 4010 when desired to maintain poultry health. As used herein, "warm" air is defined by air that is warmer than a temperature of air outside the aviary 4010. In an embodiment, the at least one vent 4058 is closed when the at least one second fan 4080 is operating. In an embodiment, the at least one second fan 4080 draws air A through the top opening 4072 of the plenum 4070 to the bottom opening 4074 of the plenum 4070, as illustrated in FIG. 30 with arrows A1. In an embodiment, fresh outside air B is drawn through a fresh air vent 4087 in air communication with the plenum 4070 and the environment outside the aviary 4010, as illustrated in FIG. 30 with arrows B1. In an embodiment, the fresh outside air B mixes with the warm air A in the plenum 4070. In an embodiment, the fresh air vent 4087 may be closed so that only warm air A flows through the plenum 4070. In an embodiment, the top opening 4072 of the plenum 4070 may be closed so that only fresh outside air B flows through the plenum 4070.

In an embodiment, the air in the plenum 4070 is discharged by the at least one second fan 4080 toward the front wall 4050 of the aviary 4010, as illustrated in FIG. 30 by arrows A2. Because the at least one vent 4058 is closed, the air flowing in direction A2 hits the front wall 4050 and rises through the aviary 4010, as illustrated in FIG. 30 by arrow A3. In an embodiment, the air circulates upward through the at least one grated floor 4022. In an embodiment, the at least one first fan 4056 operates to draw the air through the at least one cage tower 4018 and open space 4020 toward the back wall 4052, as illustrated in FIG. 30 with arrows A4. In an embodiment, the air circulates through the at least one cage tower 4018 toward the top space 4081, as illustrated in FIG. 29 with arrows A5. In an embodiment, the air circulates upward through a spaced defined between the at least one scratching floor 4038 and the at least one cage tower 4018, as illustrated in FIG. 29 with arrows A6. In an embodiment, the air circulates around the at least one belt 4036. In an embodiment, as the air reaches the top space 4081 of the aviary 4010, it may be drawn back through the plenum 4070. In an embodiment, the air is drawn through the inside area 4013 of the at least one cage tower 4018 toward the back wall 4052, as illustrated in FIG. 30 by arrows A4. Air near the back wall 4052 of the aviary 4010 may be discharged through the at least one first fan 4056.

In an embodiment, the at least one first fan 4056 is disposed above the bottom space 4082 of the aviary 4010 and above the at least one solid floor 4024. In this embodiment, the at least one solid floor 4024 prevents the second fan 4080 from competing with the first fan 4056 for control of the airflow in the aviary 4010. That is, air discharged by the at least one first fan 4056 in this embodiment is relatively unaffected by the operation of the at least one second fan 4080 because the solid floor 4024 separates the air flow generated by each of the at least one first fan 4056 and the at least one second fan 4080. Those of skill in the art will recognize that the combination of at least one grated floor 4022 and at least one solid floor 4024 facilitates airflow in opposing directions A2 and A4 and prevents the action of the at least one first fan 4056 from overwhelming the action of the at least one second fan 4080 or vice versa.

By permitting warm air to rise from the floor 4014 through the cage tower 4018 and open space 4020 and up to the top space 4081 of the aviary 4010, lower fan speeds may be utilized since the air moves through natural convection in addition to forced air. The lower fan speeds provide lower noise and lower energy consumption within the aviary 4010. In an embodiment, the ventilation system described herein moves air around the at least one belt 4036 to assist in the drying of manure, thereby providing cost savings since drier manure takes less energy to dry out completely for storage, disposal, and/or sale. Additionally, the circulation of air through the aviary 4010 may reduce ammonia levels within the aviary 4010, thereby improving bird health within the aviary 4010. The circulation of air throughout the aviary reduces and may eliminate cold spots within the aviary 4010. "Cold" in the context of "cold spots" refers to any air temperature that is low enough to cause stress to the poultry. By reducing cold spots within the aviary 4010, the birds are less likely to huddle together to keep warm. As such, the circulation of air through the aviary 4010 may reduce overcrowding within the aviary 4010 due to stress.

In an embodiment, airflow throughout the aviary 4010 may be manually controlled. In an embodiment, airflow throughout the aviary 4010 may be controlled by means of automated controls. In an embodiment, airflow throughout the aviary 4010 may be controlled remotely. In an embodiment, one or more sensors (not shown) may be disposed adjacent the at least one plenum 4070 to monitor one or more conditions, including but not limited to conditions of a temperature and/or a humidity, of the air in the at least one plenum 4070. In an embodiment, the sensor senses a condition that initiates operation of the at least one second fan 4080. In an embodiment, the sensor senses a condition that increases the speed of the at least one second fan 4080. In an embodiment, the sensor senses a condition that decreases the speed of the at least one second fan 4080.

In an embodiment, one or more gates (not shown) may be disposed adjacent the at least one plenum 4070. In an embodiment, the sensor senses a condition that opens a fresh air gate in the fresh air vent 4087 to permit outside air B to enter the plenum 4070. In an embodiment, the sensor senses a condition that closes a fresh air gate in the fresh air vent 4087 to prevent outside air B from entering the plenum 4070. In an embodiment, the sensor senses a condition that opens a gate in the plenum 4070 to permit air A to enter the plenum 4070. In an embodiment, the sensor senses a condition that closes a gate in the plenum 4070 to prevent air A from entering the plenum 4070.

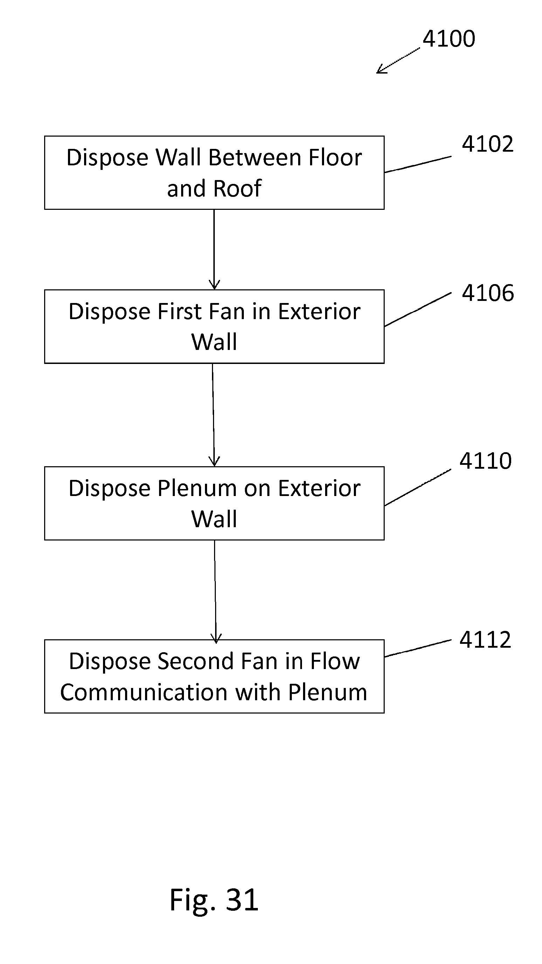

FIG. 31 illustrates a method 4100 of providing a ventilation system within an aviary, which aviary has at least one exterior wall, a floor, a roof, at least one first fan, and at least one plenum. The method 4100 includes disposing, at step 4102, the at least one exterior wall between the floor and the roof In an exemplary embodiment, a front wall, a back wall, and at least two side walls are disposed between the floor and the roof. The at least one first fan is disposed in the at least one exterior wall, at step 4106. In an embodiment, the at least one first fan is disposed in the back wall. At least one plenum is disposed on at least one exterior wall, at step 4110. In an embodiment, at least one plenum is disposed on each of the at least two side walls. In an embodiment, at least one plenum may be disposed in the front wall. In an embodiment, at least one plenum may be disposed in the back wall. A plurality of plenums may be spaced along at least one exterior wall. At step 4112, at least one second fan is disposed in flow communication with the at least one plenum.

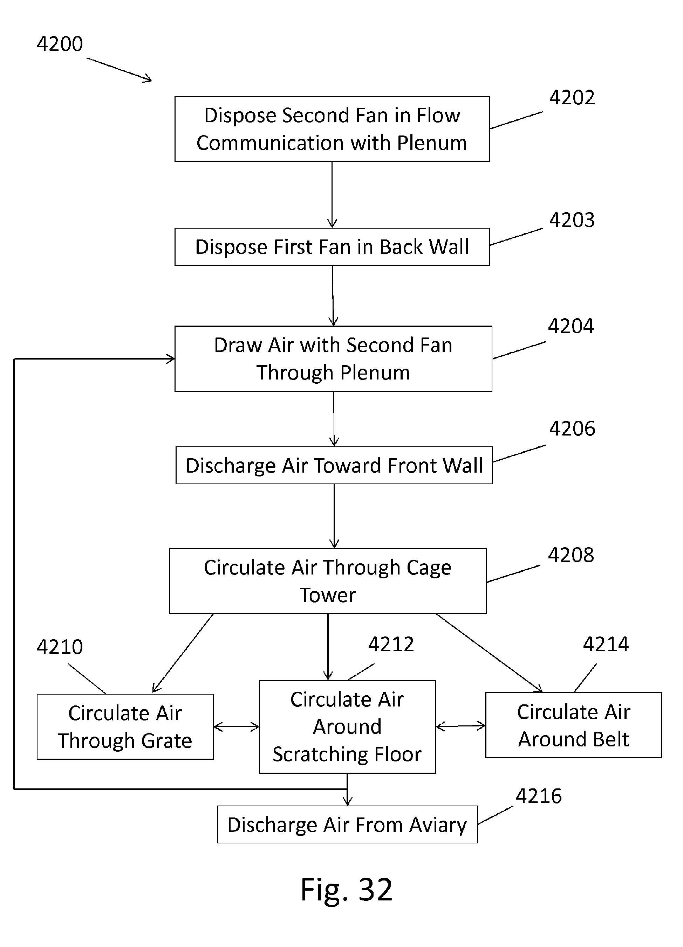

FIG. 32 illustrates a method 4200 of operating a ventilation system in an aviary having at least one first fan, at least one second fan, at least one plenum having a top opening and a bottom opening, a front wall, a back wall, and at least one cage tower having at least one grate, at least one scratching floor, and at least one belt. At step 4202, the at least one second fan is disposed in flow communication with the at least one plenum. At step 4203, the at least one first fan is disposed in the back wall. In an embodiment, air is drawn by the at least one second fan, at step 4204, from the top opening of the at least one plenum to the bottom opening of the at least one plenum. The air is discharged, at step 4206, by the at least one second fan toward the front wall of the aviary. The air discharged at step 4206 hits the front wall and circulates through the at least one cage tower, at step 4208. In an embodiment, the air circulates through openings in the at least one grate of the at least one cage tower, at step 4210. In an embodiment, the air circulates through openings adjacent the scratching floor, at step 4212. In an embodiment, the air circulates around the at least one belt in the at least one cage tower, at step 4214. As the air reaches the top opening of the plenum, it may be drawn back through the plenum by repeating step 4204. In an embodiment, air near the back wall of the aviary may be discharged through the at least one first fan, at step 4216.

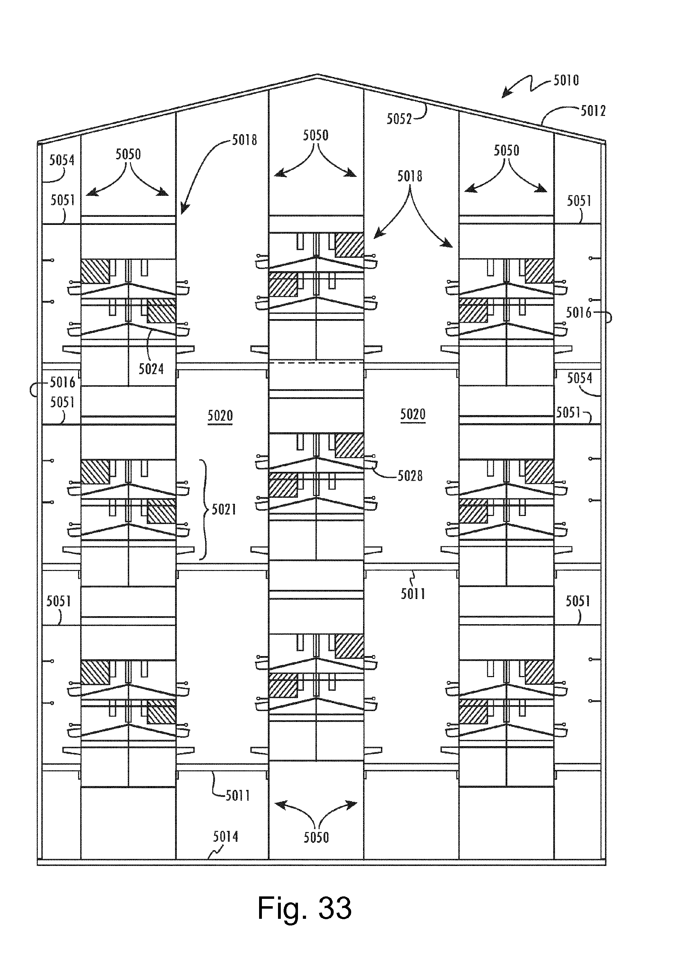

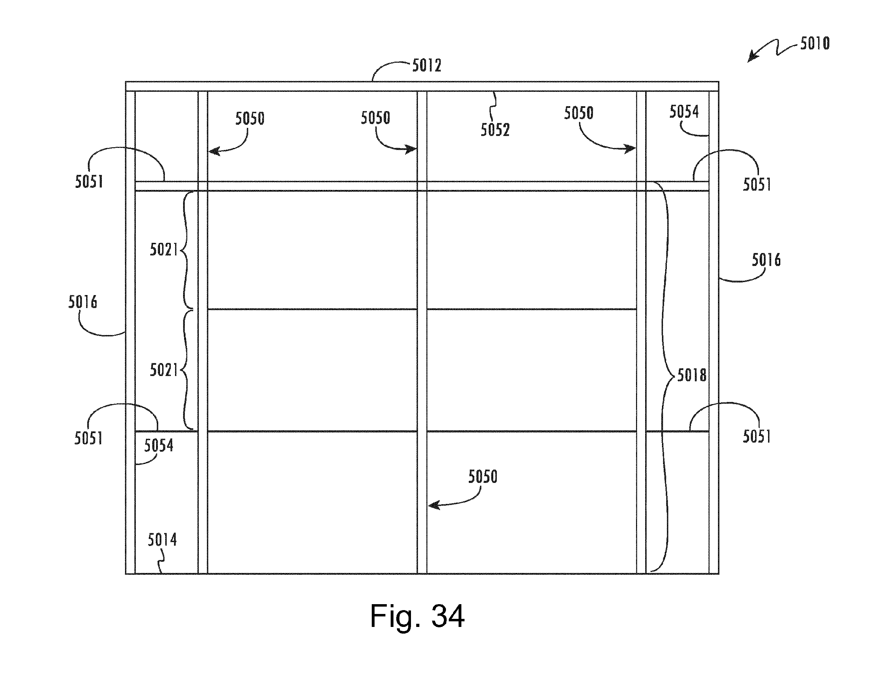

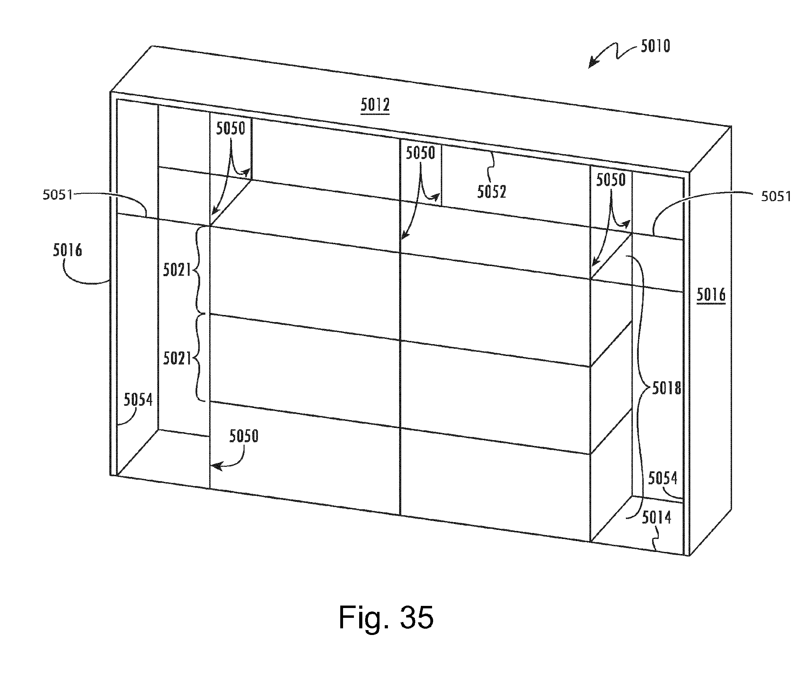

FIGs. 33-35 illustrate an aviary 5010 configured to house hens. It should be noted that the system and method described in FIGs. 33-36 may be utilized with any of the embodiments described in FIGs. 1-32 and the foregoing description. The aviary 5010 may include a floor 5014, exterior walls 5016, and a roof 5012. In an embodiment, the floor 5014 is concrete. The exterior walls 5016 and the roof 5012 enclose at least one cage tower 5018 where hens may be caged. Although FIG. 33 illustrates three cage towers 5018, it should be noted that the aviary 5010 may be constructed with any number of cage towers 5018, including a single cage tower 5018. In an embodiment having more than two cage towers 5018, an open space 5020 may extend between each adjacent cage tower 5018. In an embodiment having a single cage tower 5018, an open space 5020 is present on at least one side of the cage tower 5018. Open space 5020 may likewise be positioned between the cage tower 5018 and one or more respective exterior walls 5016. The open space 5020 may include a scratching floor 5011 on which hens can move freely, peck the floor with their beaks, and scratch the floor with their feet.

Each cage tower 5018 includes a plurality of vertical support members 5050 that are disposed on the floor 5014 and support and provide attachment points for the roof 5012. In one embodiment, the vertical support members 5050 are continuous from the floor 5014 to the roof 5012. In an embodiment, the vertical support members 5050 extend from a top of the cage tower 5018. In an embodiment, the vertical support members 5050 extend from the sides of the cage tower 5018. In one embodiment, the vertical support members 5050 include several members that are joined together between the floor 5014 and the roof 5012. The vertical support members 5050 support at least one aviary cage 5021 within the cage tower 5018. In one embodiment, the vertical support members 5050 extend above the at least one aviary cage 5021. In one embodiment, the vertical support members 5050 extend below the at least one aviary cage 5021. Those of skill in the art will recognize that vertical support members 5050 may exist in any configuration, including but not limited to trusses, I-beams, A-frames, etc., that are capable of supporting at least the at least one aviary cage 5021 and the roof 5012.

In at least one embodiment, the at least one cage tower 5018 includes a plurality of support members 5051 that support and provide attachment points for the exterior walls 5016. In one embodiment, the support members 5051 are continuous from the cage tower 5018 to the exterior walls 5016. In one embodiment, the support members 5051 include several members that are joined together between the cage tower 5018 and the exterior walls 5016. The support members 5051 support at least one aviary cage 5021 within the cage tower 5018. Those of skill in the art will recognize that support members 5051 may exist in any configuration, including but not limited to trusses, I-beams, A-frames, etc., that are capable of supporting at least the at least one aviary cage 5021 and the exterior walls 5016.

The aviary cage 5021, as illustrated, may include various sloped nesting platforms 5024 where a hen may sit to lay eggs. The nesting platforms 5024 allow the hens to move freely up and down the cage tower 5018 to a desirable inside area 5013. As the hens lay their eggs, the eggs are collected in egg conveyors 5028 that extend along sides of the nesting platforms 5024. The egg conveyors 5028 carry the eggs from the inside area 5013 to a collection area.

In the illustrated embodiment, a scratching floor 5011 extends from the cage tower 5018. In some embodiments, the scratching floor 5011 is solid. In an embodiment having more than one cage tower 5018, a scratching floor 5011 may extend between any adjacent cage towers 5018. Additionally, a scratching floor 5011 may extend between the cage tower 5018 and the respective exterior wall 5016. In an embodiment having more than two cage towers 5018, a scratching floor may extend from adjacent cage towers 5018 but not be continuous between adjacent cage towers 5018. In an embodiment in which the scratching floor 5011 extends between two cage towers 5018 and is connected to each cage tower 5018, the scratching floor 5011 may additionally provide stability to each of the cage towers 5018 by joining the cage towers 5018 together. Moreover, the scratching floor 5011 may join the cage tower 5018 adjacent one or more of the exterior walls 5016 to one or more of the exterior walls 5016 to provide stability to the aviary 5010.

In one embodiment, the roof 5012 includes a roof frame 5052 to which the roof 5012 is attached. In an embodiment, the roof frame 5052 is constructed of wooden beams. In one embodiment, the roof frame 5052 is constructed of metal beams. In an embodiment, the roof frame is constructed in a truss configuration. In the illustrated embodiment, the roof frame 5052 is attached to the plurality of vertical support members 5050. In an embodiment having a plurality of cage towers 5018 each with at least one vertical support member 5050, the roof frame 5052 is attached to at least one vertical support member 5050 of each of the plurality of cage towers 5018. The roof frame 5052 may be attached to the vertical support members 5050 piecemeal, i.e. one beam of the roof frame 5052 at a time, for example. In an embodiment, the roof frame 5052 may be constructed separately and then secured to the vertical support members 5050. The roof frame 5052 is attached to the plurality of vertical support members 5050 so that the roof frame 5052 is supported by the plurality of vertical support members 5050. The roof frame 5052 is constructed above the cage tower 5018 so that the roof frame 5052 at least partially covers the cage tower 5018. The roof 5012 is attached to the roof frame 5052 to at least partially cover the cage tower 5018. In an embodiment, the roof 5012 may comprise metal. In an embodiment, the roof 5012 may comprise underlayment and roofing shingles. In an embodiment, the roof 5012 may comprise underlayment and metal panels.

In an embodiment, at least one wall frame 5054 is attached to the roof frame 5052. In an embodiment, the at least one wall frame 5054 is attached to the plurality of support members 5051 so that the at least one wall frame 5054 is supported by the plurality of support members 5051. In an embodiment, the at least one wall frame 5054 is attached to both the roof frame 5052 and the plurality of support members 5051. In an embodiment, the wall frames 5054 are constructed around the at least one cage tower 5018 so that the wall frames 5054 surround the at least one cage tower 5018. In an embodiment, at least a portion of each wall frame 5054 is secured to the floor 5014. An exterior wall 5016 is attached to each wall frame 5054 to enclose the at least one cage tower 5018. In an embodiment, the at least one wall frame 5054 is attached to a side of the cage tower 5018 by the plurality of support members 5051. Those of skill in the art of construction will understand the variations of materials available for use in constructing the floor 5014, roof 5012, roof frame 5052, at least one wall frame 5054, and exterior walls 5016.

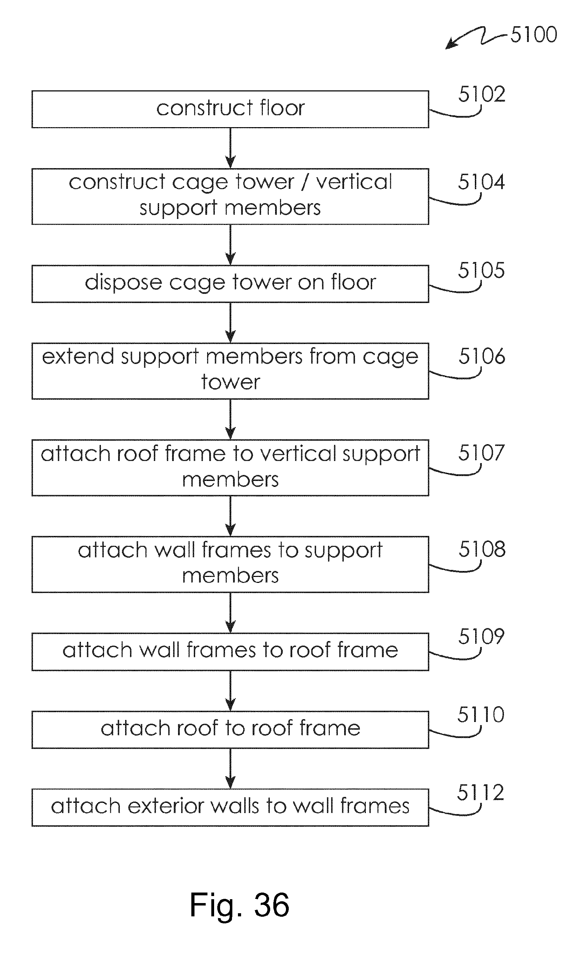

Fig. 36 illustrates a method 5100 ofbuilding an aviary 5010. At step 5102, the floor 5014 is constructed to support the aviary 5010. It should be noted that the floor 5014 may be constructed of concrete, timbers, simple attachment points set in the ground for vertical support members 5050, and other options familiar to skilled artisans. The choice of materials may depend on the soil, cost considerations, or the like. In one embodiment, a cage tower 5018 is constructed with at least one aviary cage 5021, at step 5104, with a plurality of vertical support members 5050 that are disposed on and extend upward from the floor 5014. At step 5105, the cage tower 5018 having at least one aviary cage 5021 is disposed on the floor 5014. At step 5106, a plurality of support members 5051 are extended from the aviary cage 5021. In an embodiment, the plurality of support members 5051 include horizontal supports inside the cage tower 5018. In an embodiment, the vertical support members 5050 and support members 5051 support the at least one aviary cage 5021. In an embodiment, the vertical support members 5050 and support members 5051 support a plurality of aviary cages 5021.

At step 5107, a roof frame 5052 is attached to the vertical support members 5050. In an embodiment when the aviary 5010 includes a plurality of cage towers 5018, the roof frame 5052 is affixed to the vertical support members 5050 of each cage tower 5018. The roof frame 5052 is connected to the cage tower 5018 by the vertical support members 5050 and supported by the vertical support members 5050. The roof frame 5052 at least partially covers the cage tower 5018.

At step 5108, wall frames 5054 are affixed to and supported by the support members 5051. At step 5109, wall frames 5054 are attached to the roof frame 5052. By supporting the wall frames 5054 with the support members 5051 and the roof frame 5052, time and materials may be saved in constructing the aviary 5010. The wall frames 5054 extend between the roof frame 5052 and the floor 5014. In one embodiment, the wall frames 5054 may be disposed on the floor 5014. In one embodiment, the wall frames 5054 may be secured to the floor 5014.

At step 5110, the roof 5012 is attached to the roof frame 5052 to at least partially cover the cage tower 5018. At step 5112, the exterior walls 5016 are attached to the wall frames 5054. Attaching the wall frames 5054 to the support members 5051 and the roof frame 5052 stabilizes the wall against winds and other elements that may create a force against the exterior walls 5016. In one embodiment, the exterior walls 5016 partially enclose the cage tower 5018. Alternatively, the exterior walls 5016 may entirely enclose the cage tower 5018.

Accordingly, the vertical support members 5050 and support members 5051 of the cage tower 5018 support the external structure, i.e. exterior walls 5016 and roof 5012, of the aviary 5010. By constructing the aviary 5010 with the vertical support members 5050 and support members 5051 ofthe cage towers 5018, time and costs associated with constructing the aviary 5010 as a standalone structure may be reduced. Additionally, the use of the vertical support members 5050 and support members 5051 to support the aviary 5010 may increase the stability of the aviary 5010 in storms or the like.

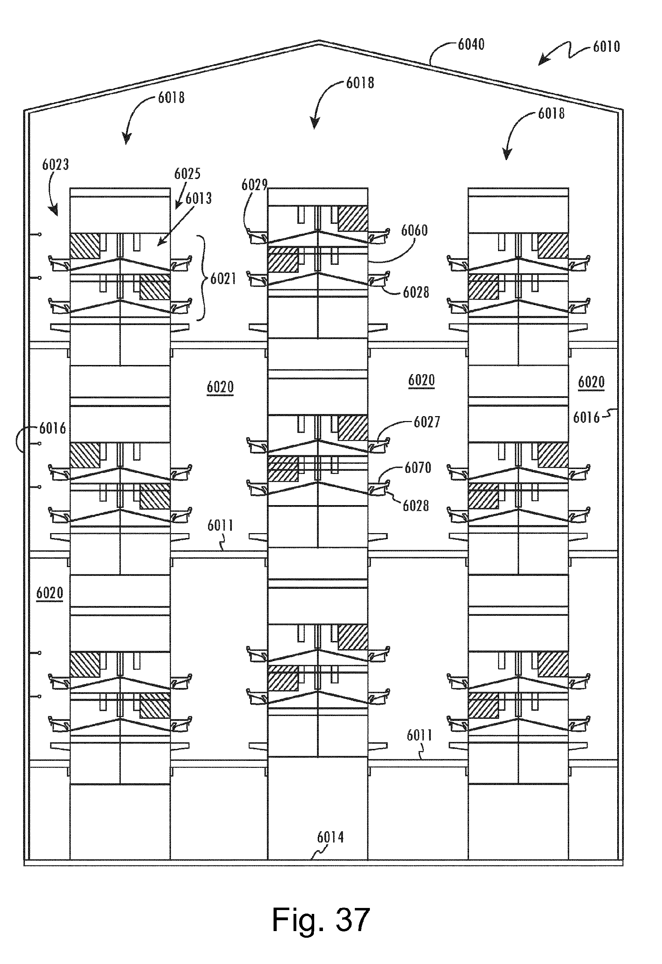

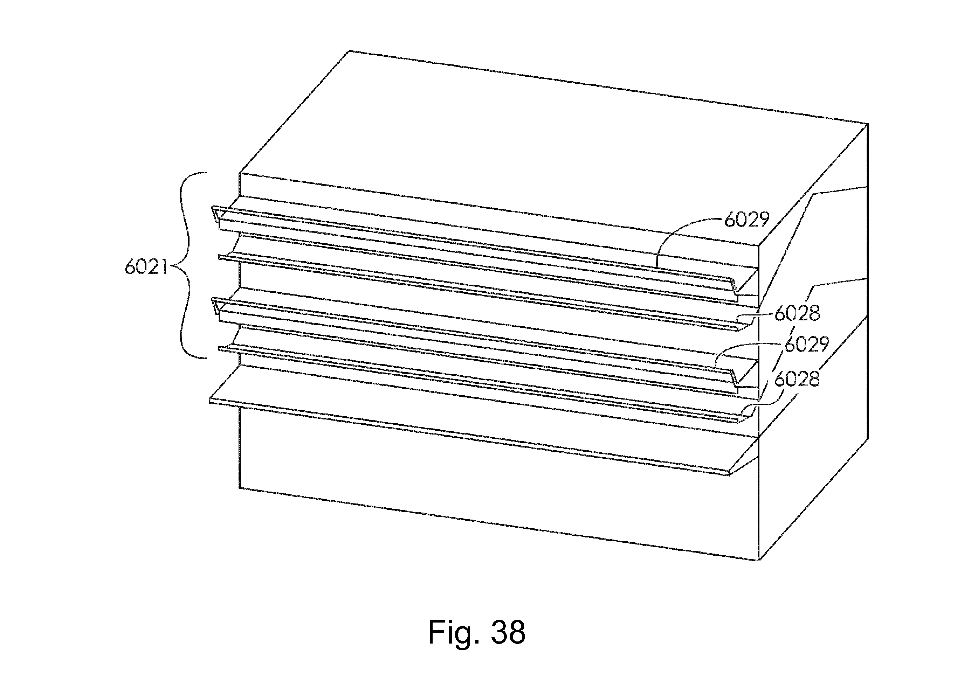

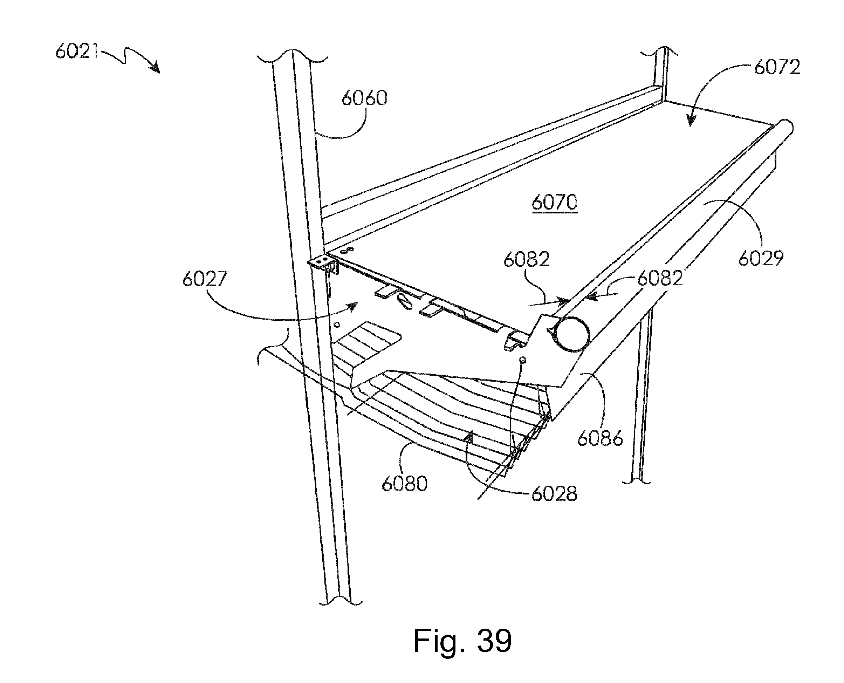

FIG. 37 illustrates an aviary 6010 having a floor 6014 enclosed by exterior walls 6016 and a roof 6040. It should be noted that the egg saving system and method described in FIGs. 37-40 may be utilized with any of the embodiments described in FIGs. 1-36 and the foregoing description. The exterior walls 6016 enclose at least one cage tower 6018 where hens may be caged. Each at least one cage tower 6018 includes an outside surface 6060. Although the present embodiment illustrates three cage towers 6018, it should be noted that the aviary 6010 may be constructed with any number of cage towers 6018, including a single cage tower 6018. In an embodiment having more than one cage tower 6018, an aisle 6020 extends between adjacent cage towers 6018 to provide an inspection area and space in which the birds housed in the aviary 6010 may move. In an embodiment having a single cage tower 6018, an aisle 6020 is present on at least one side ofthe cage tower 6018. In an embodiment, an aisle 6020 is positioned between cage tower 6018 and one or more respective exterior walls 6016. In an embodiment, at least one scratching floor 6011 extends from at least one cage tower 6018.

Each cage tower 6018 includes at least one aviary cage 6021. Each aviary cage 6021 includes a first side 6025 and a second side 6023 enclosing an inside area 6013.

The inside area 6013 provides space where a hen may sit to lay eggs. As the hens lay their eggs, the eggs roll or are scratched by the hens over to at least two egg collectors 6028 that extend along the sides 6025 and 6023 of the aviary cage 6021. The egg collectors 6028 are coupled to the cage tower 6018 and supported by respective brackets 6027. The egg collectors 6028 may include conveyors 6080 that carry the eggs from the inside area 6013 to a collection area (not shown). Alternatively, the eggs may be manually collected from the egg collectors 6028.

Referring to an embodiment, at least one perch 6029 extends outward from a respective bracket 6027. The at least one perch 6029 is positioned adjacent to and at a greater height from the floor 6014 than a respective egg collector 6028. In some embodiments, the at least one perch 6029 is solid. In one embodiment, the perch 6029 may be square. In one embodiment, the perch 6029 may be round. In one embodiment, a square perch 6029 may have a width of % inches to 2 inches. In one embodiment, a round perch 6029 may have a diameter of % inches to 2 inches. The width or diameter of the perch 6029 is configured to allow a hen to stand on the perch 6029. In an embodiment, the perch 6029 may extend a portion of the length of the respective cage tower 6018. In an embodiment, the perch 6029 may extend substantially the length ofthe respective cage tower 6018.

In one embodiment, a cover 6070 extends from the outside surface 6060 and is positioned over the egg collector 6028. The cover 6070 includes a barrier member 6086 that prevents hens and deposits from entering the egg collector 6028. The cover 6070 is positioned adjacent the inside area 6013. In one embodiment, the cover 6070 is sloped downward from the outside surface 6060 of the cage tower 6018. Hens within the inside area 6013 may move from the inside area 6013 onto the cover 6070. In an embodiment, the cover 6070 is configured to permit hens to walk, land, and roost on the cover 6070. In one embodiment, the cover 6070 includes a scratching surface 6072 that enables the hens to scratch and peck on the cover 6070. The cover 6070 is positioned over the egg collector 6028 to prevent hens from stepping on and damaging any eggs within the egg collector 6028. In one embodiment, the cover 6070 is movable relative to its position over the egg collector 6028 so that eggs within the egg collector 6028 may be manually removed. In an embodiment in which the egg collector 6028 does not include an egg conveyor 6080, the cover 6070 may be removed to permit manual collection of each of the eggs in the egg collector 6028 by a worker. In an embodiment including an egg conveyor 6080, the cover 6070 may be removed to permit a worker to access deposits that are stuck on the egg conveyor 6080 or to perform maintenance on the egg conveyor 6080. In the illustrated embodiment, the cover 6070 is attached to the outside surface 6060 by a hinge 6084 so that the cover 6070 may be rotated upward to permit a worker to access the egg collector 6028 and/or the egg conveyor 6080.

In the illustrated embodiment, the perch 6029, egg collector 6028, and cover 6070 extend from the outside surface 6060 of the cage tower 6018 and into the aisle 6020. Those of skill in the art will recognize that the combination of the perch 6029, egg collector 6028, and cover 6070 may be repeated as many times as desired about the outside surface 6060 of the cage tower 6018 to achieve the desired amount of egg collection capability and perching space for the hens. In an embodiment, the cover 6070 extends from the egg collector 6028. In an embodiment, the perch 6029 extends from the egg collector 6028. The perch 6029 is positioned adjacent to the cover 6070. In one embodiment, the perch 6029 is positioned at a greater height relative to the floor 6014 than the respective cover 6070. In an embodiment, the perch 6029 may extend outward relative to the respective egg collector 6028 and into the aisle 6020.

A gap 6082 is formed between the perch 6029 and the respective cover 6070. The gap 6082 is sized to capture eggs laid on the cover 6070 or while a hen roosts on the perch 6029. In particular, eggs laid on the cover 6070 or while the hen roosts on the perch 6029 are prevented from rolling through the gap 6082 between the perch 6029 and the cover 6070 into the aisle 6020. In an embodiment, the gap 6082 is sized to prevent eggs of any size from rolling off the cover 6070 into the aisle 6020. In an embodiment, the gap 6082 is sized to prevent medium eggs and larger from rolling off the cover 6070. The person of skill in the art will recognize that the gap 6082 may be sized to selectively preserve eggs of a desired size and larger from damage due to rolling into the aisle 6020 and falling onto a scratching floor 6011 or the floor 6014.

In one embodiment, the perch 6029 may include padding (not shown) to prevent breakage of eggs captured by the gap 6082 between the perch 6029 and the cover 6070. In particular, the padding absorbs the impact when an egg on the cover 6070 rolls down the cover 6070 to the perch 6029. The padding may be formed from rubber, foam, or the like. Eggs captured by the gap 6082 are manually accessible from the aisle 6020. In an embodiment, the perch 6029 and the cover 6070 may be angled so that eggs captured by the gap 6082 roll toward an end of the cage tower 6018.

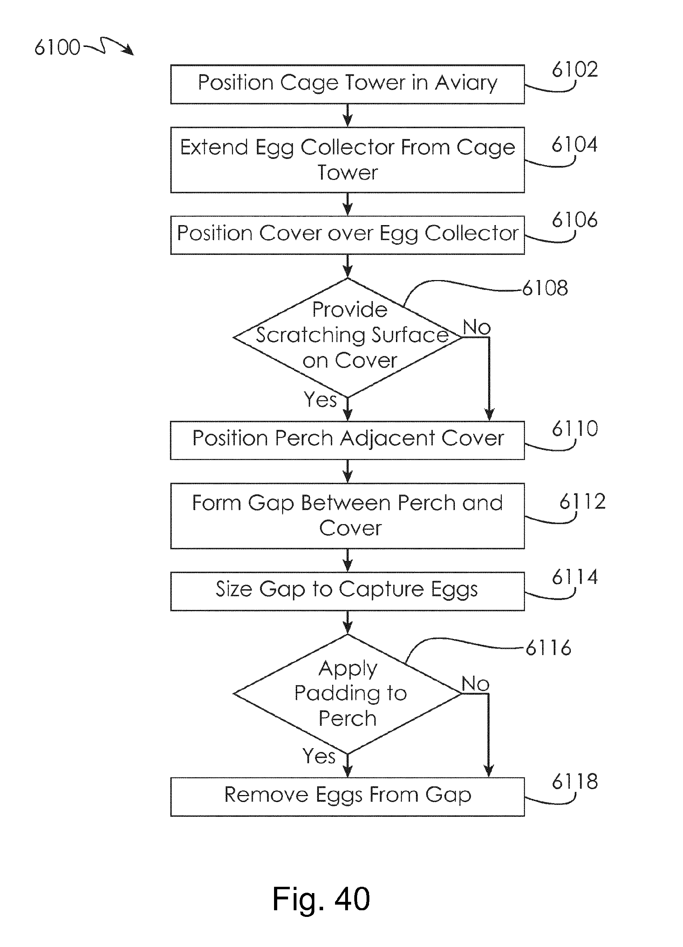

FIG. 40 illustrates a method 6100 of constructing an egg-saving perch in an aviary, which aviary includes one or more exterior walls, a cage tower including an outside surface, an egg collector, a perch, and a cover. The method includes positioning, at step 6102, the cage tower including an outside surface within the aviary. In one embodiment, more than one cage tower is positioned within the aviary. In an embodiment with more than one cage tower, an aisle is formed between each adjacent cage tower. In an embodiment, an aisle is formed between the cage tower and one or more respective exterior walls of the aviary. At step 6104, the egg collector is extended from the outside surface of the cage tower. In an embodiment, the egg collector extends into the aisle. In an embodiment, the egg collector may have an egg conveyor positioned therein to carry eggs from the cage tower to a collection area. The egg collector is positioned adjacent to the cage tower to collect eggs laid in the cage tower.

At step 6106, the cover is positioned over the egg collector. In an embodiment, the cover extends into the aisle. In an embodiment, the cover extends from the outside surface of the cage tower. In an embodiment, the cover extends from the egg collector. In one embodiment, the cover is sloped downward from the outside surface. The cover is positioned so that hens within the aviary may walk, land, and roost on the cover. In one embodiment, the method 6100 includes providing a scratching surface on the cover, at step 6108. In one embodiment, the cover is removable to provide access to the egg collector. Alternatively, the cover may move to provide access to the egg collector.

At step 6110, the perch is positioned adjacent to the cover. In one embodiment, the perch is positioned above the cover. In an embodiment, the perch may extend outward relative to the egg collector and into the aisle. In an embodiment, the perch may extend outward into the aisle relative to the cover. At step 6112, a gap is formed between the perch and the cover. At step 6114, the gap is sized to capture eggs laid on the cover or while a hen roosts on the perch. In particular, eggs of a desired size or all eggs that are laid on the cover or while the hen roosts on the perch are captured by preventing them from rolling through the gap between the perch and the cover. At step 6116, padding may optionally be applied to the perch to prevent breakage of eggs captured by the gap between the perch and the cover. At step 6118, eggs captured by the gap 6082 may be manually removed by an individual. In one embodiment, the perch and the cover may be angled so that eggs captured by the gap roll toward a collection area at an end of the cage tower.

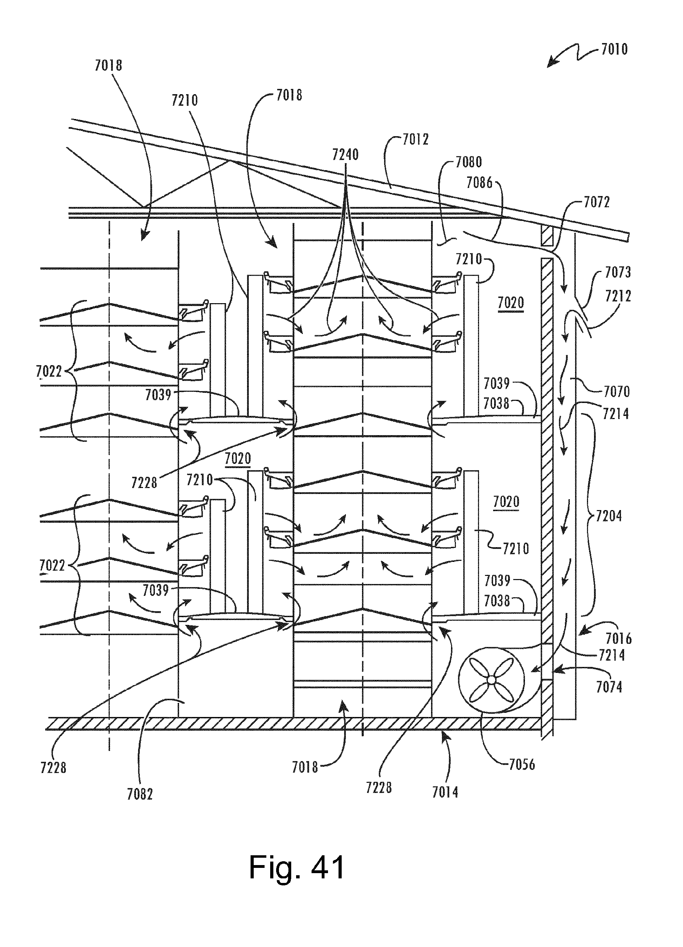

FIGs. 41-42 illustrate an aviary 7010 configured to house hens. It should be noted that the aviary walkway and ventilation system and method described in FIGs. 41-45 may be utilized with any of the embodiments described in FIGs. 1-40 and the foregoing description. The aviary 7010 may include a floor 7014, walls 7016, and a roof 7012. At least one cage tower 7018 where hens may be caged is disposed within the aviary 7010. A bottom space 7082 of the aviary 7010 includes space above the floor 7014 and below a lowermost level 7204, as shown in FIG. 41. A top space 7080 of the aviary 7010 includes space adjacent to the roof 7012. The aviary 7010 may be constructed with any number of cage towers 7018, including a single cage tower 7018.

In accordance with further aspects of the illustrated embodiment shown in FIG. 41, at least one plenum 7070 is disposed on one of the walls 7016. In one embodiment, at least one plenum 7070 may be formed in each of the walls 7016. In one embodiment, at least one plenum 7070 may be disposed on each of the walls 7016. In one embodiment, a plurality of plenums 7070 is spaced along at least one of the walls 7016. In one embodiment, a plurality of plenums 7070 is equally spaced along the walls 7016. In an embodiment, the plurality of plenums 7070 is spaced to maximize air circulation through the aviary 7010. In one embodiment, each plenum in the plurality of plenums 7070 has the same width and depth. In one embodiment, the width and depth of each plenum in the plurality of plenums 7070 is selected to maximize air circulation through the aviary 7010.

Referring again to the embodiment shown in FIG. 41, the at least one plenum 7070 includes a top interior opening 7072 that opens at an upper interior location of the aviary 7010, an exterior opening 7073, and a bottom opening 7074. In one embodiment, the top interior opening 7072 is positioned adjacent the top space 7080 of the aviary 7010. In one embodiment, the bottom opening 7074 is positioned adjacent the bottom space 7082 of the aviary 7010. In the illustrated embodiment, the bottom opening 7074 is positioned below the lowermost level 7204 adjacent the bottom space 7082. In the embodiment shown in FIG. 41, a fan 7056 is positioned at the bottom opening 7074 to draw air through the plenum 7070. The at least one plenum 7070 cooperates with the fan 7056 to circulate air from the top space 7080 of the aviary 7010 to the bottom space 7082 of the aviary 7010.

The fan 7056 in the embodiment shown in FIG. 41 is a variable speed fan. The speed of the fan 7056 may depend on the air circulation requirements within the aviary 7010 at any given time. For example, during especially humid conditions, the speed of the fan 7056 maybe increased to improve the manure drying function of the circulating air. In an embodiment, the speed of the fan 7056 may be remotely or automatically controlled. In an embodiment, the fan 7056 may have a fixed speed. Although only one fan 7056 is shown at the base of the plenum 7070, multiple fans may be used. Additionally, the fan or fans 7056 may be positioned at any location in the aviary 7010 in air communication with the plenum 7070.

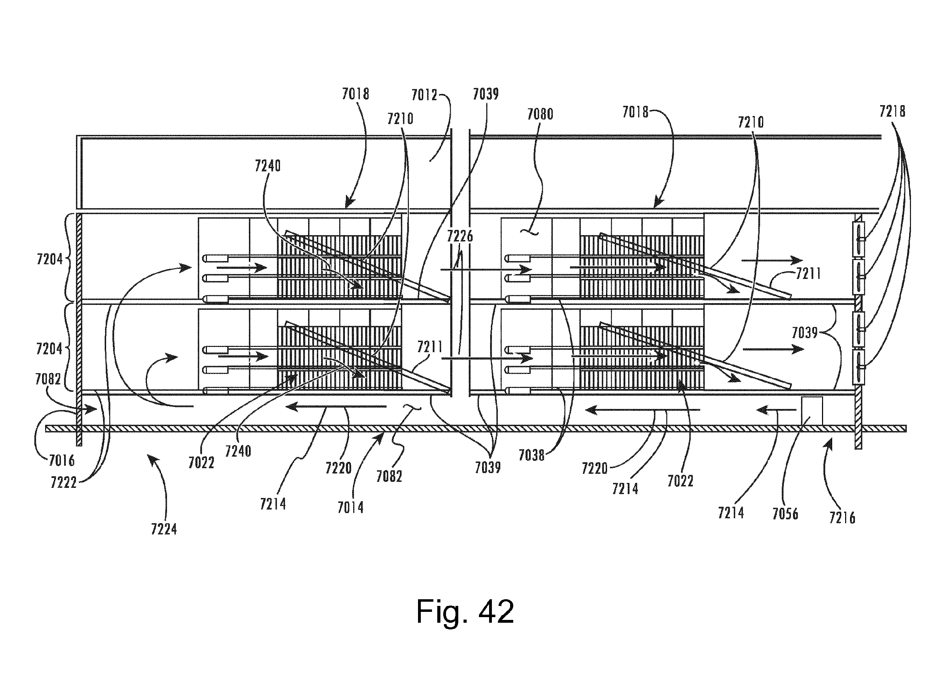

The cage towers 7018 of the embodiment shown in FIGs. 41 and 42 are disposed on the floor 7014 of the aviary 7010. Scratching floors 7038 of the illustrated embodiment extend between the cage towers 7018 and from a cage tower to one or more walls 7016 to form a plurality of levels 7204. Each level 7204 includes one or more nesting areas 7022. Although FIGs. 41 and 42 show two levels 7204 in the aviary 7010, any number of levels 7204 may be used, including a single level.

In an embodiment, the one or more scratching floors 7038 may provide stability to each of the cage towers 7018 by joining the cage towers 7018 together. In an embodiment, the one or more scratching floors 7038 may join the cage tower 7018 that is adjacent one or more of the walls 7016 to the one or more respective walls 7016 to provide stability to the cage tower 7018.

The illustrated embodiment includes three cage towers 7018 in the aviary 7010. An open space 7020 extends between adjacent cage towers 7018 to provide an inspection area and facilitate airflow. In an embodiment having more than two cage towers 7018, an open space 7020 may extend between each adjacent cage tower 7018. In an embodiment having a single cage tower 7018, an open space 7020 is present on at least one side of the cage tower 7018. An open space 7020 may be positioned between the cage tower 7018 and one or more respective walls 7016. The open space 7020 may include a floor 7038 serving as a pecking area where hens can move freely, peck the floor with their beaks, and scratch the floor with their feet.

In the illustrated embodiment shown in FIGs. 41 and 42, the two levels 7204 include the spaces 7020 above the scratching floors 7038 adjacent each cage tower 7018. Walkways 7210 are disposed in the spaces 7020 to facilitate travel by a hen between the nesting area 7022 and the scratching floor 7038. In an embodiment, at least one walkway 7210 is provided on each side of each cage tower 7018. However, any number of walkways 7210 may be provided in one or more spaces 7020 of the aviary 7010 and still come within the scope of the present invention.

As shown in FIG. 42, walkways 7210 extend from the scratching floors 7038 to the nesting areas 7022. It will be understood by one of ordinary skill in the art that the walkways 7210 have a width and are set at an angle to allow birds to comfortably traverse the walkways 7210 to access the nesting areas 7022.

In one embodiment, when the outside air temperature is such that the traditional tunnel ventilation could cause stress to the poultry (cool temperatures), warm air 7086 is drawn through the plenum 7070 from the top 7080 of the aviary 7010 to the bottom 7082 of the aviary 7010, as shown in FIG. 41. In an embodiment, fresh (cold) air 7212 may be drawn into the aviary 7010 through the exterior opening 7073 into the plenum 7070. As the fresh air 7212 is drawn into the plenum 7070, it mixes with the warm air 7086 to create a flow of mixed air 7214 for circulation through the aviary 7010. Allowing cold and warm air to mix in the plenum 7070 prior to introduction into the aviary 7010 prevents cold air 7212 from directly contacting birds near the location where cold air enters the aviary 7010, thereby reducing stress on the birds. As well, introducing fresh air into the aviary 7010 improves the air quality inside the aviary 7010.

In one embodiment, the flow of warm air 7086 or cold air 7212 may be individually controlled to limit the flow volume of each into the aviary 7010. In an embodiment, one or more dampers, valves, or other flow-limiting devices are disposed at one or both of the exterior opening 7073 and the interior opening 7072. Such flow-limiting devices may be manually, remotely, or automatically controlled to adjust one or more of: an amount of cold air 7212 flowing through the exterior opening 7073, an amount of warm air 7086 flowing through the interior opening 7072, and the temperature of the mixed air 7214. Those of skill in the art will recognize that there may be climatic conditions that require the mixed air 7214 to consist of all fresh air 7212 in an embodiment or all warm air 7086 in an embodiment to maintain an interior temperature that is healthy for the poultry contained in the aviary 7010.

In the embodiment shown in FIG. 42, the fan 7056 draws mixed air 7214 from the plenum 7070 at a first end 7216 of the aviary 7010. At least one exhaust fan 7218 is disposed in a wall 7016 at the first end 7216 of the aviary 7010. In an embodiment, a plurality of exhaust fans are disposed in the wall 7016 at the first end 7216 of the aviary 7010 where they operate to pull air through the aviary 7010 when tunnel ventilation is employed. The speed of the exhaust fans 7218 of the illustrated embodiment may be variably controlled to modify the amount of air exhausted from the aviary 7010 from zero air exhausted to a desired amount. Those of skill in the art will understand the proper fan speed to maximize bird health and comfort.

The fan 7056 propels the mixed air 7214 in a first direction 7220 away from the first end 7216 and along the bottom space 7082. The mixed air 7214 then circulates upward through at least one grated floor 7222 located at a second end 7224 of the aviary 7010. In the embodiment shown in FIG. 42, the aviary 7010 includes two levels 7204 above the bottom space 7082. For multiple level aviaries, such as the aviary 7010 shown in FIGs. 41 and 42, the aviary includes a grated floor 7222 at the second end 7224 of each level 7204. In an embodiment having a single level aviary, a single grated floor 7222 may be positioned at the second end 7224 of the single level 7204. After the mixed air 7214 passes through the grated floor 7222, the mixed air 7214 circulates in a second direction 7226 toward the first end 7216 of the aviary 7010.

In an embodiment, one or more solid floors 7039 are disposed between the lowermost level 7204 and the bottom space 7082. The one or more solid floors 7039 separate the air flowing in the first direction 7220 below the one or more solid floors 7039 from the air flowing in the second direction 7226 above the one or more solid floors 7039. Such separation prevents the one or more exhaust fans 7218 from competing with the fan 7056 for control of the airflow in the aviary 7010. In an embodiment, the one or more solid floors 7039 are disposed at the first end 7216 of the aviary. However, notwithstanding the position of the grated floor 7222, the one or more solid floors 7039 may be disposed anywhere between the lowermost level 7204 and the bottom space 7082 to separate the air flowing in the first direction 7220 below the one or more solid floors 7039 from the air flowing in the second direction 7226 above the one or more solid floors 7039.

In an embodiment shown in FIG. 42, the mixed air 7214 circulates around the walkways 7210 as it travels toward the first end 7216. The walkways 7210 are positioned in the path of the mixed air 7214 and cause turbulence to the airflow 7226. Such turbulence, especially with relatively low airflow rates, enhances the manure drying capabilities of the mixed air 7214. Further, the walkways 7210 are angled such that the upper surface 7211 of each walkway 7210 may be used by the birds for walking, roosting, nesting, and scratching. Some of the air moving in the second direction 7226 hits the walkways 7210. The upper surface 7211 of each walkway 7210 faces at least partially in the second direction 7226. This configuration directs at least a portion of the mixed air 7214 moving in the second direction 7226 in a downward and/or outward direction 7240 into the nesting areas 7022 and bottom of each level 7204, thereby further enhancing manure drying in those areas.

Referring again to FIG. 41, a portion of the mixed air 7214 may also circulate through gaps 7228 between the scratching floor 7038 and the cage tower 7018. Such movement of the mixed air 7214 around and through the nesting areas 7022 and cage towers 7018 further enhances manure drying in these structures. Additionally, the airflow contemplated by the present invention facilitates air mixing throughout the aviary 7010 to permit slower minimum airflow rates than would be required for bird health and comfort using a traditional aviary ventilation system.

In an embodiment having offset cage structures, such as that discussed previously and shown in FIG. 24, air movement is further facilitated through the spaces created by the aviary cage 3021 offsets on every other cage tower 3018 in a multiple cage tower 3018 embodiment. In an embodiment, these offset areas are off-limits to birds and thereby provide open space through which mixed air 7214 may flow. This enhanced flow created by the open space in the offset areas enhances manure drying in the aviary 7010. In an embodiment, such as any of the embodiments shown in FIGs. 1, 3, 4, 6, 8, 10, 13, 15, 21, 22, 24-26, 29-30, 33-35, 37-38, and 41-42, cage and perch structures have surface area exposed to the airflow in the second direction 7226 which surface area increases turbulence and impingement. Such turbulence and impingement enhances manure drying in the aviary 7010.

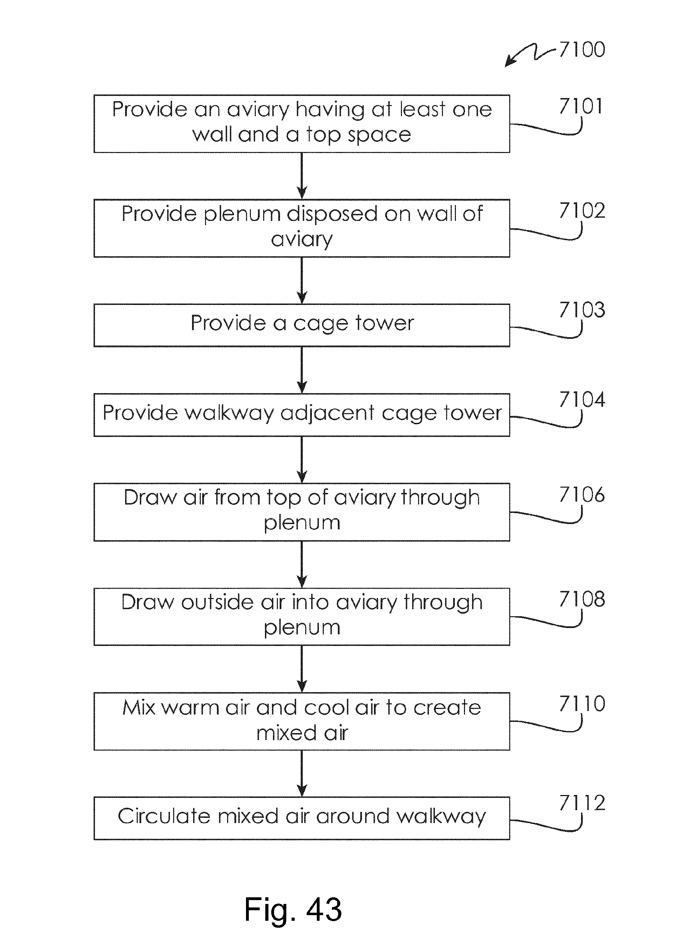

Referring now to FIG. 43, an embodiment of the present disclosure illustrates a method 7100 of circulating air in an aviary. The method 7100 includes providing, at step 7101, an aviary having at least one wall and a top space. The method further includes providing, at step 7102, a plenum disposed on at least one wall of the aviary, providing, at step 7103, a cage tower, and providing, at step 7104, at least one walkway 7210 adjacent the cage tower 7018. In an embodiment, the plenum 7070 may be disposed in at least one wall 7016 of the aviary 7010. The method 7100 further includes drawing, at step 7106, air 7086 having a temperature higher than air 7212 located outside of the aviary 7010 from the top space 7080 of the aviary 7010 through the plenum 7070 and drawing, at step 7108, the outside air 7212 into the aviary 7010 through the plenum 7070. The warm air 7086 and the outside air 7212 are then mixed, at step 7110, to create mixed air 7214. The mixed air 7214 is then circulated, at step 7112, around the at least one walkway 7210.

In an embodiment, the method 7100 includes circulating the mixed air 7214 in a first direction 7220 along a bottom space 7082 in the aviary 7010 before circulating the mixed air 7214 around the walkway 7210 in a second direction 7226 opposite the first direction 7220. In a further embodiment, as the mixed air 7214 circulates around the walkway 7210, the mixed air 7214 is directed downward. The method 7100 of one embodiment further includes providing a nesting area 7022 in the cage tower 7018 and circulating the mixed air 7214 through and below the nesting area 7022. The method 7100 of an embodiment includes providing a plurality of spaces 7020 adjacent the cage tower 7018, wherein circulating the mixed air 7214 comprises circulating the mixed air 7214 through the plurality of spaces 7020.

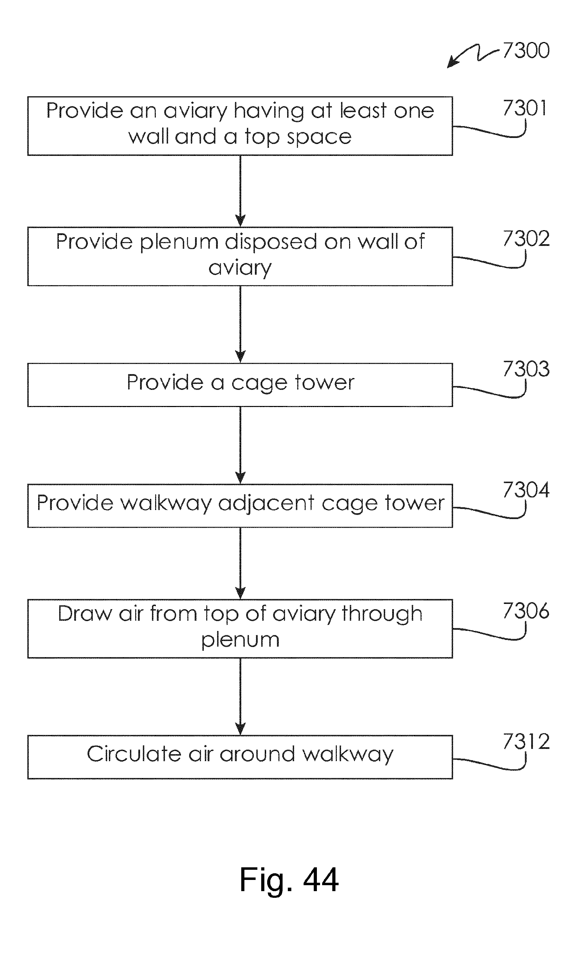

Referring now to FIG. 44, an embodiment of the present disclosure illustrates a method 7300 of circulating air in an aviary. The method 7300 includes providing, at step 7301, an aviary having at least one wall and a top space. The method 7300 further includes providing, at step 7302, a plenum disposed on at least one wall of the aviary, providing, at step 7303, a cage tower, and providing, at step 7304, at least one walkway 7210 adjacent the cage tower 7018. The method 7300 further includes drawing, at step 7306, air 7086 having a temperature higher than air 7212 located outside of the aviary 7010 from the top space 7080 of the aviary 7010 through the plenum 7070. The air 7212 is then circulated, at step 7312, around the at least one walkway 7210.

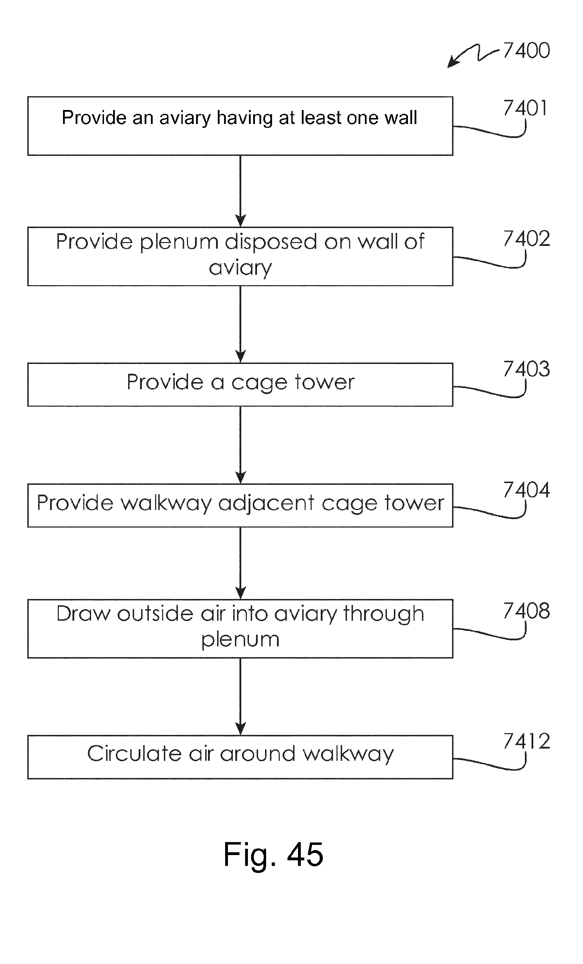

Referring now to FIG. 45, an embodiment of the present disclosure illustrates a method 7400 of circulating air in an aviary. The method 7400 includes providing, at step 7401, an aviary having at least one wall. The method 7400 further includes providing, at step 7402, a plenum disposed on at least one wall of the aviary, providing, at step 7403, a cage tower, and providing, at step 7404, at least one walkway 7210 adjacent the cage tower 7018. The method 7400 further includes drawing, at step 7408, air 7212 located outside of the aviary 7010 into the aviary 7010 through the plenum 7070. The air 7212 is then circulated, at step 7412, around the at least one walkway 7210.

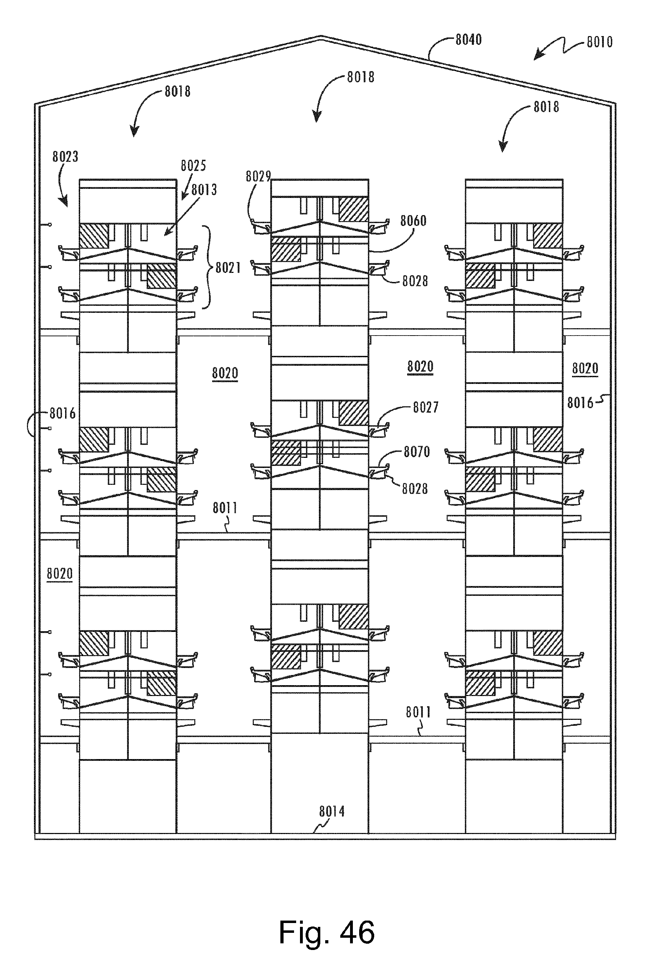

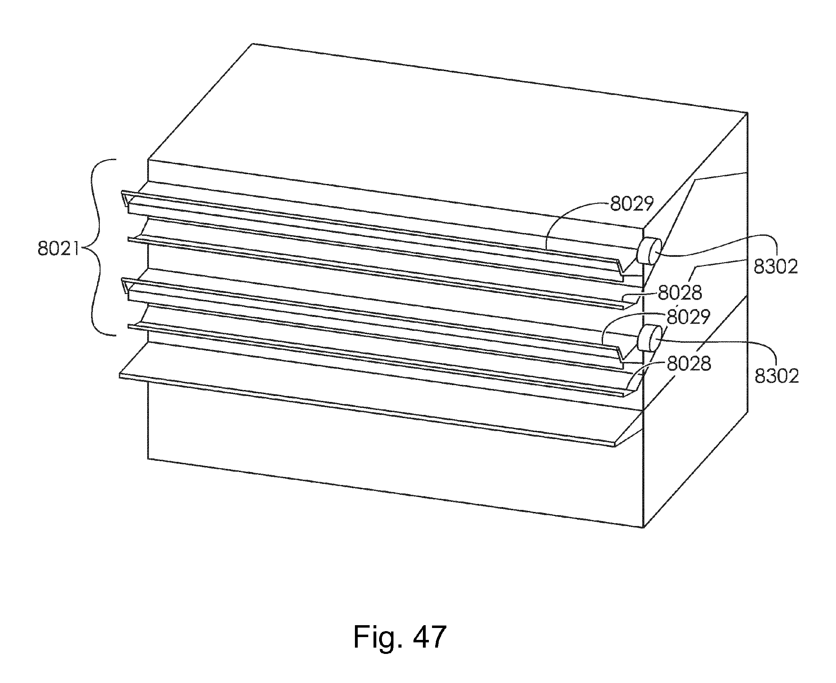

FIG. 46 illustrates an aviary 8010 having a floor 8014 enclosed by exterior walls 8016 and a roof 8040. It should be noted that the system and method described in FIGs. 46-50 may be utilized with any of the embodiments described in FIGs. 1-45 and the foregoing disclosure. The exterior walls 8016 enclose at least one cage tower 8018 where hens may be caged. Each at least one cage tower 8018 includes an outside surface 8060 and an inside area 8013. Although the present embodiment illustrates three cage towers 8018, it should be noted that the aviary 8010 may be constructed with any number of cage towers 8018, including a single cage tower 8018. In an embodiment having more than one cage tower 8018, an aisle 8020 extends between adjacent cage towers 8018 to provide an inspection area and space in which the birds housed in the aviary 8010 may move. In an embodiment having a single cage tower 8018, an aisle 8020 is present on at least one side of the cage tower 8018. In an embodiment, an aisle 8020 is positioned between tower 8018 and one or more respective exterior walls 8016. In an embodiment, at least one scratching floor 8011 extends from at least one cage tower 8018.

Each cage tower 8018 includes at least one aviary cage 8021. Each aviary cage 8021 includes a first side 8025 and a second side 8023 enclosing an inside area 8013.

The inside area 8013 provides space where a hen may sit to lay eggs. As the hens lay their eggs, the eggs roll or are scratched by the hens over to at least two egg collectors 8028 that extend along the sides 8025 and 8023 of the aviary cage 8021. The egg collectors 8028 are coupled to the cage tower 8018 and supported by respective brackets 8027. The egg collectors 8028 may include conveyors 8080 that carry the eggs from the inside area 8013 to a collection area (not shown). Alternatively, the eggs may be manually collected from the egg collectors 8028.

Referring to an embodiment, at least one perch 8029 extends outward from a respective bracket 8027. The at least one perch 8029 is positioned adjacent to and at a greater height from the floor 8014 than an egg collector 8028. In some embodiments, the at least one perch 8029 is solid. In one embodiment, the perch 8029 may be square. In one embodiment, the perch 8029 may be round. In one embodiment, a square perch 8029 may have a width of % inches to 2 inches. In one embodiment, a round perch 8029 may have a diameter of % inches to 2 inches. The width or diameter of the perch 8029 is configured to allow a hen to stand on the perch 8029. In an embodiment, the perch 8029 may extend a portion of the length of the respective cage tower 8018. In an embodiment, the perch 8029 may extend substantially the length of the respective cage tower 8018.

In one embodiment, a cover 8070 extends from the outside surface 8060 and is positioned over the egg collector 8028. In the present disclosure, the cover 8070 is also referred to as a balcony, and the terms are used interchangeably throughout the present disclosure. The cover 8070 includes a barrier member 8086 that prevents hens and deposits from entering the egg collector 8028. The cover 8070 is positioned adjacent the inside area 8013. In one embodiment, the cover 8070 is sloped downward from the outside surface 8060 of the cage tower 8018. Hens within the inside area 8013 may move from the inside area 8013 onto the cover 8070. In an embodiment, the cover 8070 is configured to permit hens to walk, land, and roost on the cover 8070. In one embodiment, the cover 8070 includes a scratching surface 8072 that enables the hens to scratch and peck on the cover 8070. The cover 8070 is positioned over the egg collector 8028 to prevent hens from stepping on and damaging any eggs within the egg collector 8028. In one embodiment, the cover 8070 is movable relative to its position over the egg collector 8028 so that eggs within the egg collector 8028 may be manually removed. In an embodiment in which the egg collector 8028 does not include an egg conveyor 8080, the cover 8070 may be removed to permit manual collection of each of the eggs in the egg collector 8028 by a worker. In an embodiment including an egg conveyor 8080, the cover 8070 may be removed to permit a worker to access deposits that are stuck on the egg conveyor 8080 or to perform maintenance on the egg conveyor 8080. In the illustrated embodiment, the cover 8070 is attached to the outside surface 8060 by a hinge 8084 so that the cover 8070 may be rotated upward to permit a worker to access the egg collector 8028 and/or the egg conveyor 8080.

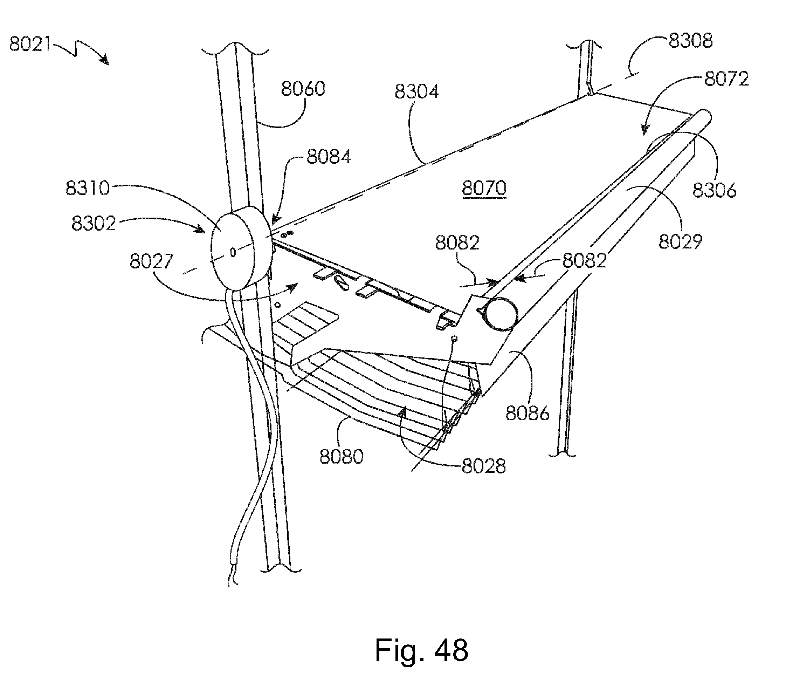

In an embodiment, the position and/or angle of the cover 8070 is adjustable. As illustrated in the embodiment shown in FIG. 48, the cover 8070 includes an inner end 8304 adjacent to the outside surface 8060 of the cage tower 8018 and an outer end 8306 disposed further from the outside surface 8060 ofthe cage tower 8018 than the inner end 8304. In the illustrated embodiment, a cover adjustment member 8302 is coupled to the cover 8070 to reversibly raise either the inner end 8304 or the outer end 8306 to a higher position than the opposite end to direct deposits toward either the inner end 8304 or the outer end 8306. In one embodiment, the hinge 8084 defines an axis 8308 adjacent the inner end 8304 to allow the inner end 8304 to be able to pivot or rotate such that the outer end 8306 is capable of being raised or lowered relative to the inner end 8304. In an embodiment, the outer end 8306 is able to pivot or rotate such that the inner end 8304 is capable of being raised or lowered relative to the outer end 8306. In such an embodiment, the cover adjustment member 8302 is disposed adjacent the outer end 8306.

The cover adjustment member 8302 may include a motor, such as an electric, pneumatic, or hydraulic motor, or any other type of servo, transducer, or actuator. In an embodiment shown in FIG. 48, the cover adjustment member 8302 is an electric stepper motor 8310. Those of skill in the art will recognize that any type of power assist device may be used as or with the cover adjustment member 8302 to adjust the angle and/or position of the cover 8070. Further, in an embodiment, the cover adjustment member 8302 may be manually adjusted such that one or both of the inner end 8304 and the outer end 8306 may be removably fixed at distinct vertical locations, such as by fitting into a series of vertically aligned slots. Those of skill in the art will recognize that any vertical position adjustment device may be used to adjust the angle and/or position of the cover 8070 by vertically adjusting one or both of the inner end 8304 and the outer end 8306.

In the illustrated embodiment, the perch 8029, egg collector 8028, and cover 8070 extend from the outside surface 8060 of the cage tower 8018 and into the aisle 8020. Those of skill in the art will recognize that the combination of the perch 8029, the egg collector 8028, and the cover 8070 may be repeated as many times as desired about the outside surface 8060 of the cage tower 8018 to achieve the desired amount of egg collection capability and perching space for the hens. In an embodiment, the cover 8070 extends from the egg collector 8028. In an embodiment, the perch 8029 extends from the egg collector 8028. The perch 8029 is positioned adjacent to the cover 8070. In one embodiment, the perch 8029 is positioned at a greater height relative to the floor 8014 than the respective cover 8070. The perch 8029 may extend outward relative to the respective egg collector 8028 and into the aisle 8020.

A gap 8082 is formed between the perch 8029 and the respective cover 8070. The gap 8082 is sized to capture eggs laid on the cover 8070 or while a hen roosts on the perch 8029. In particular, eggs laid on the cover 8070 or while the hen roosts on the perch 8029 are prevented from rolling through the gap 8082 between the perch 8029 and the cover 8070 into the aisle 8020. In an embodiment, the gap 8082 is sized to prevent eggs of any size from rolling off the cover 8070 into the aisle 8020. In an embodiment, the gap 8082 is sized to prevent medium eggs and larger from rolling off the cover 8070. The person of skill in the art will recognize that the gap 8082 may be sized to selectively preserve eggs of a desired size and larger from damage due to rolling into the aisle 8020 and falling onto a scratching floor 8011 or the floor 8014.

In one embodiment, the perch 8029 may include padding (not shown) to prevent breakage of eggs captured by the gap 8082 between the perch 8029 and the cover 8070. In particular, the padding absorbs the impact when an egg on the cover 8070 rolls down the cover 8070 to the perch 8029. The padding may be formed from rubber, foam, or the like. Eggs captured by the gap 8082 are manually accessible from the aisle 8020. In an embodiment, the perch 8029 and the cover 8070 may be angled so that eggs captured by the gap 8082 roll toward an end of the cage tower 8018.

The cover 8070 is adjustable to allow management of deposits by directing them in a direction away from the cage tower 8018 or toward the cage tower 8018. In an embodiment, the cover 8070 is adjusted such that the outer end 8306 is lower than the inner end 8304 to permit certain deposits to be captured by the perch 8029 and smaller deposits to fall to the scratching floor 8011 or floor 8014 below. In one embodiment, the cover 8070 is adjusted such that the outer end 8306 is higher than the inner end 8304 to permit deposits to descend inward toward the inside area 8013. In an embodiment, a belt below the inside area 8013 captures the deposits and transports them away from the inside area 8013 for removal from the aviary 8010. In an embodiment, eggs directed to the inside area 8013 are subsequently directed to the egg collector 8028. In an embodiment, the angle of the cover 8070 may be adjusted by the adjustment member 8302 such that the height difference between the inner end 8304 and the outer end 8306 is 1.5 inches.

In one embodiment, the cover 8070 is adjusted such that the outer end 8306 is positioned lower than the inner end 8304 to allow deposits produced by the hens smaller than the gap 8082 to fall to the scratching floor 8011 and deposits larger than the gap 8082 to be captured by the perch 8029. In this embodiment, the deposits may further be scratched by the hens to a respective belt (not shown). In an embodiment, the cover 8070 may be adjusted such that the outer end 8306 is positioned higher than the inner end 8304 to direct deposits inward toward the inside area 8013. In this embodiment, the deposits may further be scratched by the hens to a belt below the inside area 8013, which belt captures the deposits and transports them away from the inside area 8013 for removal from the aviary 8010. In an embodiment, eggs directed to the inside area 8013 may subsequently be directed to the egg collector 8028. In an embodiment, when it is desired to dry manure more quickly, the cover 8070 may be adjusted such that the outer end 8306 is positioned higher than the inner end 8304 to direct deposits inward toward the inside area 8013 and subsequently to a respective belt.

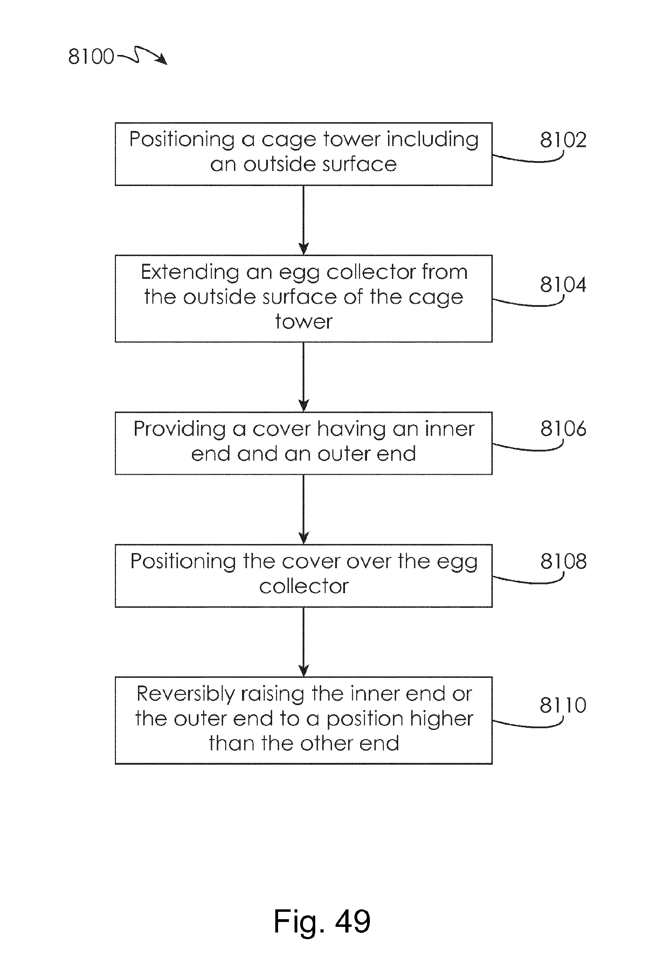

FIG. 49 illustrates a method 8100 of constructing an adjustable balcony in an aviary, which aviary includes one or more exterior walls, a cage tower including an outside surface, an egg collector, a perch, and a cover. The method includes positioning, at step 8102, the cage tower including an outside surface within the aviary. In one embodiment, more than one cage tower is positioned within the aviary. In an embodiment with more than one cage tower, an aisle is formed between each adjacent cage tower. In an embodiment, an aisle is formed between a cage tower and one or more respective exterior walls of the aviary. At step 8104, the egg collector is extended from the outside surface of the cage tower. In particular, the egg collector extends into the aisle. In an embodiment, the egg collector may have an egg conveyor positioned therein to carry eggs from the cage tower to a collection area. The egg collector is positioned adjacent to the cage tower to collect eggs laid in the cage tower.

At step 8106, a cover is provided having an inner end and an outer end. At step 8108, the cover is positioned over the egg collector. The method further includes, at step 8110, reversibly raising one of the inner end and the outer end to a position higher than the other of the inner end and the outer end such that a deposit disposed on the cover is directed to one of the inner end and the outer end.

In an embodiment, the cover extends into the aisle. In an embodiment, the cover extends from the outside surface of the cage tower. In an embodiment, the cover extends from the egg collector. In one embodiment, the cover is sloped downward from the outside surface. The cover is positioned so that hens within the aviary may walk, land, and roost on the cover. In one embodiment, the method 8100 includes providing a scratching surface on the cover. In one embodiment, the cover is removable to provide access to the egg collector. Alternatively, the cover may move to provide access to the egg collector.

A perch may be positioned adjacent to the cover. In one embodiment, the perch is positioned above the cover. In an embodiment, the perch may extend outward relative to the egg collector and into the aisle. In an embodiment, the perch may extend outward into the aisle relative to the cover. In an embodiment, a gap is formed between the perch and the cover. In an embodiment, the gap is sized to capture eggs laid on the cover or while a hen roosts on the perch. In particular, eggs of a desired size or all eggs laid on the cover or while the hen roosts on the perch are captured by preventing them from rolling through the gap between the perch and the cover. Padding may be applied to the perch to prevent breakage of eggs captured by the gap between the perch and the cover. In an embodiment, eggs captured by the gap may be manually removed by an individual. In one embodiment, the perch and the cover may be angled so that eggs captured by the gap roll toward a collection area at an end of the cage tower.

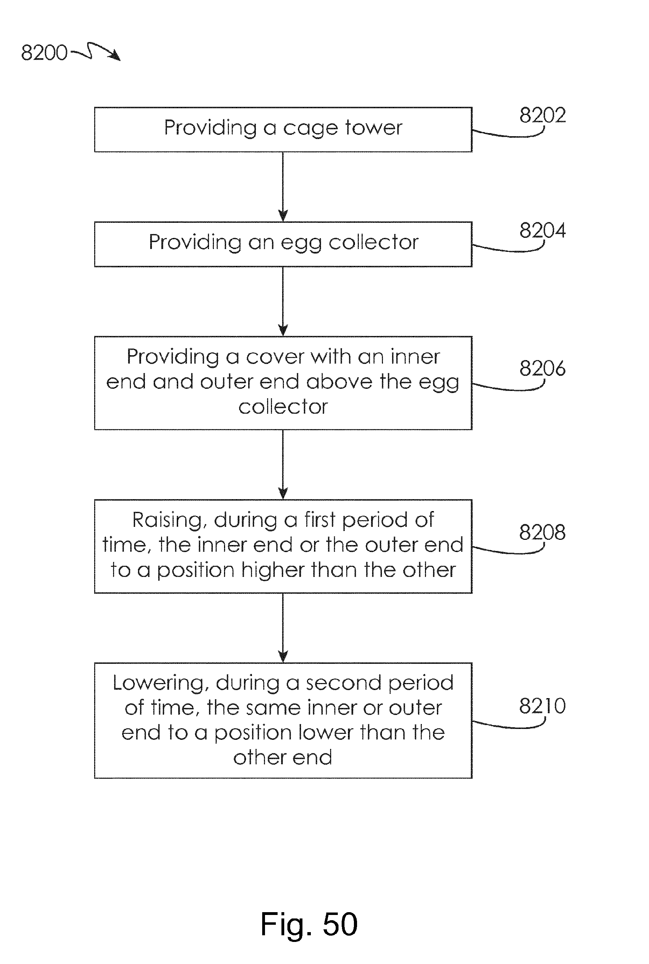

FIG. 50 illustrates a method 8200 of operating an adjustable balcony in an aviary, which aviary includes one or more exterior walls. The method includes providing, at step 8202, a cage tower having an outside surface within an aviary. In one embodiment, more than one cage tower is positioned within the aviary. In an embodiment with more than one cage tower, an aisle is formed between each adjacent cage tower. In an embodiment, an aisle is formed between a cage tower and one or more respective exterior walls of the aviary. The method further includes providing, at step 8204, an egg collector in the cage tower. In an embodiment, the egg collector extends from the outside surface of the cage tower. In an embodiment, the egg collector extends into the aisle. In an embodiment, the egg collector may have an egg conveyor positioned therein to carry eggs from the cage tower to a collection area. The egg collector is positioned adjacent to the cage tower to collect eggs laid in the cage tower.

The method 8200 further includes providing, at step 8206, a cover positioned over the egg collector. The cover includes an inner end and an outer end. In an embodiment, the cover extends into the aisle. In an embodiment, the cover extends from the outside surface of the cage tower. In an embodiment, the cover extends from the egg collector. In one embodiment, the cover is sloped downward from the outside surface. The cover is positioned so that hens within the aviary may walk, land, and roost on the cover. In one embodiment, the method 8200 includes providing a scratching surface on the cover. In one embodiment, the cover is removable to provide access to the egg collector. Alternatively, the cover may move to provide access to the egg collector.

The method 8200 further includes raising, at step 8208 during a first period of time, one of the inner end and the outer end to a position higher than the other of the inner end and the outer end such that a deposit disposed on the cover is directed toward the lower positioned end. At step 8210, the method includes lowering, during a second period of time, the one of the inner end and the outer end to a position higher than the other of the inner end and the outer end such that a deposit disposed on the cover is directed away from the higher positioned end.

In an embodiment, a perch is positioned adjacent to the cover. In one embodiment, the perch is positioned above the cover. In an embodiment, the perch may extend outward relative to the egg collector and into the aisle. In an embodiment, the perch may extend outward into the aisle relative to the cover. A gap may be formed between the perch and the cover. The gap may be sized to capture eggs laid on the cover or while a hen roosts on the perch. In particular, eggs of a desired size or all eggs laid on the cover or while the hen roosts on the perch are captured by preventing them from rolling through the gap between the perch and the cover. Padding may be applied to the perch to prevent breakage of eggs captured by the gap between the perch and the cover. Eggs captured by the gap may be manually removed by an individual. In one embodiment, the perch and the cover may be angled so that eggs captured by the gap roll toward a collection area at an end of the cage tower.

While the embodiments have been illustrated and described in detail in the drawings and foregoing description, the same is to be considered as illustrative and not restrictive in character, it being understood that only certain embodiments have been shown and described and that all changes and modifications that come within the spirit and scope of the embodiments are desired to be protected.

## Claims

1. An aviary comprising:
a cage tower comprising a nesting area positioned in the cage tower;
a belt positioned below the nesting area; and
a scratching floor extending from the cage tower adjacent to the belt.

2. The aviary of claim 1, wherein the scratching floor:
(a) is sloped to facilitate movement of a deposit on the scratching floor to the belt; and/or
(b) comprises a solid floor.

3. The aviary of claim 1 or 2, wherein the belt is operative to remove a deposit from at least part of the cage tower.

4. The aviary of claim 1, or 2, or 3 further comprising an egg remover to direct eggs on the belt toward at least one side of the belt.

5. The aviary of claim 1, or 2, or 3, or 4 further comprising:
a grate having a first end and a second end, said grate being positioned over the belt, the first end of the grate extending to the first side of the cage tower and the second end of the grate extending to the second side of the cage tower;
a first egg conveyor positioned adjacent the first end of the grate; and
a second egg conveyor positioned adjacent the second end of the grate.

6. The aviary of claim 5, wherein a first portion of the grate is angled downward toward the first egg conveyor, and a second portion of the grate is angled downward toward the second egg conveyor.

7. An aviary including an aviary cage, having a first side and a second side, comprising at least one scratching floor extending from at least one side of the aviary cage.

8. The aviary of claim 7 further comprising:
a nesting area between the first side and the second side; and
a belt below the nesting area operative to remove a deposit from at least part of the aviary cage.

9. The aviary of claim 7, wherein:
the aviary cage includes a nesting area and a belt extending below the nesting area;
the at least one scratching floor is oriented with respect to the belt such that a deposit on the at least one scratching floor is directed back to the belt; and
the belt is configured to capture manure, and is configured to capture eggs laid outside the nesting area, and is configured to remove dead animals from the aviary cage.

10. The aviary of claim 8 or 9 wherein the at least one scratching floor:
(a) extends from the first side of the aviary cage adjacent to the belt; and/or
(b) extends from the second side of the aviary cage adjacent to the belt.

11. The aviary of claim 8 or 9 or 10 wherein the at least one scratching floor:
(a) slopes toward the belt to facilitate movement of a deposit on the at least one scratching floor to the belt; and/or
(b) is solid.

12. The aviary of claim 8 or 9 or 10 or 11 further comprising:
a grate having a first end and a second end; wherein the grate is positioned above the belt and further wherein the first end of the grate extends to the first side of the aviary cage and the second end of the grate extends to the second side of the aviary cage.

13. The aviary of claim 12 wherein:
(a) the at least one scratching floor extends from the aviary cage adjacent to the grate; and/or
(b) the at least one scratching floor slopes toward the grate to facilitate movement of a deposit on the scratching floor to the grate.

14. The aviary of claim 7, which comprises a belt positioned to form a floor in the aviary cage; wherein the aviary cage comprises a nesting area,
and wherein the at least one scratching floor is disposed adjacent the belt,
and further wherein the at least one scratching floor extends from the aviary cage in a planar orientation with the belt.

15. The aviary of claim 7, which comprises:
a nesting area, wherein the nesting area is positioned between the first side and the second side;
a belt extending beneath the nesting area;
a grate having a first end and a second end, which is positioned over the belt, wherein the first end of the grate extends to the first side of the aviary cage, and the second end of the grate extends to the second side of the aviary cage;
a first egg conveyor, positioned adjacent the first end of the grate; and
a second egg conveyor, positioned adjacent the second end of the grate;
wherein the at least one scratching floor extends from the aviary cage adjacent to the grate, the at least one scratching floor being sloped toward the grate to facilitate movement of an egg on the at least one scratching floor to the grate;
and further wherein a first portion of the grate is angled downward toward the first egg conveyor, and a second portion of the grate is angled downward toward the second egg conveyor.
